(19) Europäisches Patentamt / European Patent Office / Office européen des brevets

(11) **EP 2 383 225 A1**

(12) **EUROPEAN PATENT APPLICATION**
published in accordance with Art. 153(4) EPC

(43) Date of publication:
**02.11.2011 Bulletin 2011/44**

(21) Application number: **09836222.1**

(22) Date of filing: **28.12.2009**

(51) Int Cl.:
$C01B\ 31/02^{(2006.01)}$  $B01J\ 23/745^{(2006.01)}$
$B01J\ 37/02^{(2006.01)}$  $B01J\ 37/34^{(2006.01)}$

(86) International application number:
**PCT/JP2009/071818**

(87) International publication number:
**WO 2010/076885 (08.07.2010 Gazette 2010/27)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: 30.12.2008  US 318443
07.01.2009  JP 2009001586
17.06.2009  JP 2009144716

(71) Applicant: **National Institute of Advanced Industrial Science and Technology Tokyo 100-8921 (JP)**

(72) Inventors:
• **HATA, Kenji**
**Tsukuba-shi**
**Ibaraki 305-8565 (JP)**
• **FUTABA, Don N.**
**Tsukuba-shi**
**Ibaraki 305-8565 (JP)**
• **YUMURA, Motoo**
**Tsukuba-shi**
**Ibaraki 305-8565 (JP)**

(74) Representative: **Hall, Matthew Benjamin**
**Dehns**
**St. Bride's House**
**10 Salisbury Square**
**London EC4Y 8JD (GB)**

(54) **ALIGNED SINGLE-WALLED CARBON NANOTUBE ASSEMBLY, BULK ALIGNED SINGLE-WALLED CARBON NANOTUBE ASSEMBLY, POWDER-LIKE ALIGNED SINGLE-WALLED CARBON NANOTUBE ASSEMBLY, AND METHOD FOR PRODUCING SAME**

(57) An aligned single-walled CNT aggregate which can readily be produced, whose specific surface are is high, whose individual carbon nanotubes (CNT) are aligned orderly, and whose bulk density is low whereby exhibiting a processability is provided. An aligned single-walled CNT aggregate should comprise a base material, fine particles of catalyst with a number density of $1 \times 10^{10}$ to $5 \times 10^{13}$ N/cm² disposed on this base material, and a plurality of single-walled CNTs which are grown from the fine particles of the catalyst, wherein the plurality of single-walled CNTs have a specific surface area of 600 m²/g to 2600 m²/g, and a weight density from 0.002 g/cm³ to 0.2 g/cm³, and the alignment degree is defined by specific conditions.

F I G . 1

**EP 2 383 225 A1**

**Description**

TECHNICAL FIELD

The present invention relates to an aligned single-walled carbon nanotube aggregate including a bulk aligned single-walled carbon nanotube aggregate and a powdered aligned single-walled carbon nanotube aggregate, and more specifically, it relates to an aligned single-walled carbon nanotube aggregate, a bulk aligned single-walled carbon nanotube aggregate, a powdered aligned single-walled carbon nanotube aggregate having excellent shape processability and realizing high purity, high specific surface area and large scaling, an aspect of which has not been hitherto been achieved, and a production method thereof.

BACKGROUND ART

In recent years, development of carbon nanotubes (CNTs) has been expected for new functional materials such as new electronic device materials, optical device materials, conductive materials, and bio-related materials, and studies have been progressed earnestly for application use, quality, mass productivity, etc.

Among CNTs, single-walled CNTs have attracted attention as a material for electronic devices, electrodes for storage battery devices, MEMS parts, and fillers for functional composite materials, since they are extremely excellent in electrical property (extremely high current density), thermal property (heat conductivity comparable with diamond), optical property (light emission in an optical communication band wavelength region), hydrogen storing performance, and metal catalyst supporting performance as well as have both properties of semiconductors and metals.

When using single-walled CNT in such an application, a single-walled CNT structure in which a plurality of single-walled CNTs are aggregated is usually employed. In addition, for the purpose of utilizing the single-walled CNTs effectively, the shape and the configuration of the structure, and the structure of the arrangement or density of the single-walled CNTs constituting the structure should be controlled.

However, since a CNT aggregate comprising a plurality of CNTs immediately after synthesis has no desired form or shape, the synthesized CNT aggregate should be processed to produce a single-walled CNT structure having a desired shape or configuration or property.

A single-walled CNT aggregate which can be processed readily into various forms or shapes, i.e., which has a processability, exhibits a significant effect in achieving a single-walled CNT aggregate to be incorporated into abovementioned various devices and parts.

On the other hand, CNTs tend to stick together very easily due to a strong Van der Waals force, and a large number of CNTs stick together whereby forming a large disordered and non-aligned bundle. Such a bundle, once formed with disorder or non-alignment property, is then very difficult to be released to reconstruct into a desired shape.

Accordingly, for the purpose that the single-walled CNT aggregate has a processability, it is desired that the individual single-walled CNTs constituting an aggregate are bound very loosely rather than bound too strongly due to the bundle formation.

Such a single-walled CNT aggregate has an excellent processability since it can readily be formed into a desired shape by density growth treatment while maintaining the integrity and also be dispersed uniformly in a solution and the like.

Further, in order to utilize single-walled CNT effectively, the directionality of functions of individual CNTs can become isotropic when any single CNT constituting a CNT aggregate is aligned orderly, resulting in a highly functional CNT aggregate. For example, a non-Patent document; Nano Letters, vol. 3 (2003), page 647, describes a method for obtaining a fiber formed from aligned single-walled CNTs by spinning the single-walled CNTs into yarns. Although the fibrous single-walled CNT aggregate produced by such a method exhibits a good alignment property, it fails to obtain a high specific surface area due to the bundle formation, and it is very difficult to release the single-walled CNTs in the bundle to reconstruct into a desired shape.

Also since single-walled CNT is formed in a structure of a curled graphite monolayer it has a characteristically high specific surface area. Accordingly, it is expected to be applied to a catalyst support, an energy or substance storage material, a supercapacitor electrode material or actuator, a composite material filler and the like.

Since a conventional single-walled CNT aggregate contains metal impurities having low specific surface areas or carbon impurities, and/or undergoes the bundle formation of the single-walled CNT whereby preventing nitrogen atoms from being diffused in the gaps between CNTs in the bundle, it has a small specific surface area. For example, the specific surface area of a representative single-walled CNT "HiPco" manufactured by Carbon Nanotechnologies, according to the description in pages 385 to 388 in Nano Letter, vol. 2 (2002), is 524 $m^2/g$ in the state after growth due to the presence of metal impurities, and a purification or opening process which promotes the bundle formation limits it to a level as low as 861 $m^2/g$, which is considerably lower than the limit of the specific surface area which is about 2600 $m^2/g$, In addition, the CNT in this case is disordered or non-aligned, and it is very difficult to reconstruct it into a shape having an alignment property.

As mentioned above, in the prior art, the single-walled CNT immediately after the synthesis contains metal impurities and/or is not aligned, and when subjected to a processing for imparting the alignment or to a purification process for removing impurities, it fails to obtain a high specific surface area because of the promotion of the bundle formation, and it also fails to have a processability.

Although the field to which CNTs can be applied is enlarged greatly if a single-walled CNT aggregate having a shape processability for various forms or shapes, having a high specific surface area and having an alignment property can be created, it is very difficult to produce, by a prior art, an aligned CNT aggregate having a high specific surface area, an alignment property and a processability for various forms and shapes, because of the problems mentioned above.

One of methods for producing CNT, a chemical vapor deposition method (hereinafter also referred to as a CVD method) has been known (refer, for example, to JP-A-2003-171108, WO/2006/011655). The method has a feature of bringing a carbon compound into contact with fine metal particles as a catalyst in an ambient at a high temperature of about 500°C to 1,000°C and CNTs can be produced while variously changing the kind and the arrangement of the catalyst, kind of carbon compounds, and reaction conditions. Nevertheless, such a conventional chemical deposition method allows the catalyst to lose its activity very easily, and fails to allow CNT to be grown effectively.

We discovered that the catalyst efficiency can greatly be increased by allowing a catalyst activating material such as water in an extremely small amount in the reaction atmosphere, and reported in Non-patent document 1 that single-walled CNT can be produced at a further higher efficiency.

In this method, the catalyst activating material added to the atmosphere of CNT synthesis served to increase the activity of the catalyst and elongated the life, thus allowing the growth of the single-walled CNT, which is completed conventionally within a period as short as about 2 minutes, to be continued for several ten minutes, and also allowing the catalyst activity to be increased from a conventional level as low as several percents up to a level as high as 85%. As a result, it was possible to obtain a single-walled CNT aggregate whose height was improved by several hundred times from a conventional height as low as 4 micrometers (a height of 2.5 millimeters which was improved by 625 times from 4 micrometers in Non-patent document 1).

PRIOR ART DOCUMENT

PATENT DOCUMENT

PATENT DOCUMENT 1: JP-A-2003-171108
PATENT DOCUMENT 2: WO/2006/011655

NON-PATENT DOCUMENT

Non-Patent Document 1: Kenji Hata et al., Water-Assisted Highly Efficient Synthesis of Impurity-Free Single-Walled Carbon Nanotubes, SCIENCE, 2004.11.19, vol. 306, pp. 1362-1364.

SUMMARY OF THE INVENTION

PROBLEMS THAT THE INVENTION IS TO SOLVE

In view of the problems in the prior art described above, the present invention mainly intends to provide an aligned single-walled CNT aggregate, a bulk aligned single-walled CNT aggregate, and an powdered aligned single-walled CNT aggregate which has a low weight density (low weight per unit volume) together with an excellent processability, which has a high specific surface area, and in which individual CNTs are aligned orderly. "Aligned single-walled CNT aggregate" referred to in the present specification means an aggregate of a plurality of single-walled CNTs grown to a predetermined direction, "bulk aligned single-walled CNT aggregate" means an object obtained by peeling the aligned single-walled CNT aggregates together from a base material, and "powdered aligned single-walled CNT aggregate" means an object obtained by peeling the aligned single-walled CNT aggregates from the base material into a powder form.

MEANS FOR SOLVING THE PROBLEMS

For solving the problems described above, the present invention provides the following means and ways.

[1] An aligned single-walled carbon nanotube aggregate comprising a base material, fine particles of catalyst with a number density of $1 \times 10^{10}$ to $5 \times 10^{13}$ N/cm$^2$ disposed on the base material, and a plurality of single-walled carbon nanotubes which are elongated from the fine particles of the catalyst to form an aggregate, in which the plurality of single-walled CNTs have a specific surface area of 600 m$^2$/g to 2600 m$^2$/g, and a weight density from 0.002 g/cm$^3$ to 0.2 g/cm$^3$, and the alignment degree is defined by at least one of the following conditions:

(1) in a case where X-rays are incident from a first direction parallel to the longitudinal direction of the carbon nanotube and a second direction perpendicular to the first direction to measure the X-ray diffraction intensity (θ-2θ method), a θ angle and a reflection direction where the reflection intensity from the second direction is larger than the reflection intensity from the first direction are present, and a θ angle and a reflection direction where the reflection intensity from the first direction is larger than the reflection intensity from the second direction are present,
(2) in a case where the X-ray refraction intensity is measured (Laue method) by 2-dimensional diffraction pattern images obtained by incidence of X-rays in the direction perpendicular to the longitudinal direction of the carbon nanotube, a diffraction peak pattern showing the presence of the anisotropy appears, and
(3) Herman's orientation factor is greater than 0.1 and smaller than 1.

[2] The aligned single-walled carbon nanotube aggregate according to the above invention [1], wherein the single-walled carbon nanotubes constituting the aligned single-walled carbon nanotube aggregate are provided adjacently to each other, and wherein the single-walled carbon nanotubes provided adjacently to each other have discrete outer diameters.

[3] The aligned single-walled carbon nanotube aggregate according to the above invention [1] or [2], wherein the single-walled carbon nanotubes constituting the aligned single-walled carbon nanotube aggregate are provided adjacently to each other, and wherein the single-walled carbon nanotubes provided adjacently to each other have discrete outer diameters.

[4] The aligned single-walled carbon nanotube aggregate according to any of the above inventions [1] to [3], wherein the average outer diameter of the single-walled carbon nanotubes constituting the aligned single-walled carbon nanotube aggregate is 1.5 nm or more and 4 nm or less, and wherein the full-width at half maximum representing the outer diameter distribution range is lager than 1 nm.

[5] The aligned single-walled carbon nanotube aggregate according to any of the above inventions [1] to [4], wherein the carbon purity is 95% or higher.

[6] The aligned single-walled carbon nanotube aggregate according to the above invention [1], wherein in the X-ray diffraction method employed above the diffraction intensities of the (CP) diffraction peak, (002) diffraction peaks attributable to the packing between single-walled carbon nanotubes and the diffraction intensities of (100), (110) peaks attributable to the hexagonal carbon ring structure that constitutes the single-walled carbon nanotube are different from each other in the diffraction peak intensity for the parallel and orthogonal incident directions.

[7] The aligned single-walled carbon nanotube aggregate according to any of the above inventions [1] to [6], wherein the base material is a granular base material or a linear base material.

[8] The aligned single-walled carbon nanotube aggregate according to the above invention [7], wherein in the average diameter of the granular base material or linear base material is 10 micrometer or more and 1 cm or less.

[9] A bulk aligned single-walled carbon nanotube aggregate having a specific surface area from 600 m$^2$/g to 2600 m$^2$/g and a weight density from 0.002 g/cm$^3$ to 0.2 g/cm$^3$, in which the alignment degree is defined by at least one of the following conditions.

(1) in a case where X-rays are incident from a first direction parallel to the longitudinal direction of the carbon nanotube and a second direction perpendicular to the first direction to measure the X-ray diffraction intensity (θ-2θ method), a θ angle and a reflection direction where the reflection intensity from the second direction is larger than the reflection intensity from the first direction are present, and a θ angle and a reflection direction where the reflection intensity from the first direction is larger than the reflection intensity from the second direction are present,
(2) in a case where the X-ray refraction intensity is measured (Laue method) by 2-dimensional diffraction pattern images obtained by incidence of X-rays in the direction perpendicular to the longitudinal direction of the carbon nanotube, a diffraction peak pattern showing the presence of the anisotropy appears,
(3) in a case where the Herman's orientation factor is greater than 0.1 and smaller than 1.

[10] The bulk aligned single-walled carbon nanotube aggregate according to the above invention [9], wherein the distribution maximum of the fine pore diameters of the single-walled carbon nanotube aggregate is 5 nm or more and 100 nm or less.

[11] The bulk aligned single-walled carbon nanotube aggregate according to the above invention [9] or [10], wherein the single-walled carbon nanotubes constituting the aligned single-walled carbon nanotube aggregate are provided adjacently to each other, and wherein the single-walled carbon nanotubes provided adjacently to each other have discrete outer diameters.

[12] The bulk aligned single-walled carbon nanotube aggregate according to any of the above inventions [9] to [11], wherein the average outer diameter of the single-walled carbon nanotubes constituting the aligned single-walled carbon nanotube aggregate is 1.5 nm or more and 4 nm or less, and wherein the full-width at half maximum representing the outer diameter distribution range is lager than 1 nm.

[13] The bulk aligned single-walled carbon nanotube aggregate according to any of the above inventions [9] to [12], wherein the carbon purity is 95% or higher.

[14] The bulk aligned single-walled carbon nanotube aggregate according to the above invention [9], wherein in the X-ray diffraction method employed above the diffraction intensities of the (CP) diffraction peak, (002) diffraction peaks attributable to the packing between single-walled carbon nanotubes and the diffraction intensities of (100), (110) peaks attributable to the hexagonal carbon ring structure that constitutes the single-walled carbon nanotube are different from each other in the diffraction peak intensity for the parallel and orthogonal incident directions.

[15] A powdered aligned single-walled carbon nanotube aggregate having a specific surface area from 600 $m^2/g$ to 2600 $m^2/g$, and a weight density from 0.0005 $g/cm^3$ to 0.16 $g/cm^3$, in which the alignment degree is defined by a value of Herman's orientation factor that is greater than 0.1 and smaller than 1 when calculated based on the intensity profile obtained from images obtained by fast Fourier transformation of scanning electron microscopic images or atomic force microscopic images.

[16] The powdered aligned single-walled carbon nanotube aggregate according to the above invention [15], wherein the distribution maximum of the fine pore diameters of the single-walled carbon nanotube aggregate is 5 nm or more and 100 nm or less.

[17] The powdered aligned single-walled carbon nanotube aggregate according to the above invention [15] or [16], wherein the single-walled carbon nanotubes constituting the aligned single-walled carbon nanotube aggregate are provided adjacently to each other, and wherein the single-walled carbon nanotubes provided adjacently to each other have discrete outer diameters.

[18] The powdered aligned single-walled carbon nanotube aggregate according to any of the above inventions [15] to [17], wherein the average outer diameter of the single-walled carbon nanotubes constituting the aligned single-walled carbon nanotube aggregate is 1.5 nm or more and 4 nm or less, and wherein the full-width at half maximum representing the outer diameter distribution range is lager than 1 nm.

[19] The powdered aligned single-walled carbon nanotube aggregate according to any of the above inventions [15] to [18], wherein the carbon purity is 95% or higher.

[20] A method for producing an aligned single-walled carbon nanotube aggregate by growing an aligned single-walled carbon nanotube aggregate on a base material having fine particles of a catalyst on the surface, the method comprising;

a formation step of bringing a reducing gas into contact with the catalyst particles and heating at least one of the catalyst particles and the reducing gas, and,

a growth step of bringing a source gas containing carbon and not containing oxygen and a catalyst activating material containing oxygen into contact with the catalyst particles, and heating at least one of the catalyst particles, the source gas, and catalyst activating material, thereby growing the aligned single-walled carbon nanotube aggregate.

[21] The method for producing an aligned single-walled carbon nanotube aggregate according to the above invention [20] ,wherein one or more of water, carbon dioxide, acetone, tetrahydrofuran and ethanol is employed as a catalyst activating material.

EFFECT OF THE INVENTION

According to the invention as claimed in this application, an aligned single-walled CNT aggregate having a high specific surface area, having an alignment property and having a processability for various forms or shapes, which cannot be achieved by a prior art, can be obtained. Such an aligned single-walled CNT aggregate can be produced using the catalyst fine particles whose number density is adjusted in a formation step by a CVD method whose growth efficiency is increased markedly using a catalyst activating material.

Since the aligned single-walled CNT aggregate of the invention is characterized by its weight density as extremely low as 0.002 $g/cm^3$ to 0.2$g/cm^3$, it has an excellent shape processability. Since such an aligned single-walled CNT aggregate grown at a low density on a base material supporting a catalyst involves a loose binding between individual single-walled CNTs constituting the aggregate, the aligned single-walled CNT aggregate removed from the base material can readily be dispersed uniformly in a solvent and the like. Accordingly, the aligned single-walled CNT aggregate of the invention can be used as a source material to produce a single-walled CNT dispersion, which is combined with different foreign materials whereby creating various functional materials.

In addition to the characteristics described above, since the aligned single-walled CNT aggregate of the invention which is aligned and whose weight density is lowered allows individual single-walled CNTs to be bound loosely, the aggregate has an integrity, and can be peeled off after production from the base material while maintaining the integrity and subjected to a density growth treatment such as appropriate pressurization or appropriate solvent immersion followed by drying whereby allowing the adjacent single-walled CNTs to be filled at a high density without any gaps and enabling the processing into various shapes. In this process, by controlling the position or direction of pressurization whereby controlling the density growth treatment, the processing into various shapes is possible.

The CNT is a material having a one-dimensional structure with an extremely high aspect ratio and the function thereof also shows an isotropy. Accordingly, when individual single-walled CNTs constituting a CNT aggregate are aligned orderly, the function of each single-walled CNT can be isotropic, resulting in a highly functional single-walled CNT aggregate.

Further, since the aligned single-walled CNT aggregate of the invention has a remarkable feature that the specific surface area is as extremely high as 600 $m^2$/g to 2600 $m^2$/g, it can suitably be applied to a catalyst support or an energy or material storage material as well as a super capacitor or an actuator and the like.

Further, by using a base material comprising a granular shaped base material or a linear shaped base material having an average diameter of 10 $\mu$m or more and 1 cm or less, the peeling from the base material is improved and a bulk or powdered aligned single-walled CNT aggregate can be produced preferably, while a number of aligned single-walled CNT aggregates can be produced per unit area of the inside of a synthesis furnace occupied by the base material (area of a plane defined by longitudinal and lateral directions of a space occupied by the base material).

Further, by using a combination of a source material containing carbon and not-containing oxygen and a catalyst activating material containing oxygen, since the structure and the property such as an average outer diameter, a full-width at half maximum, a specific surface area, a crystallinity and purity of CNT to be produced and a weight density, a height, and an alignment property of the aligned CNT aggregate are changed, various aligned single-walled CNT aggregates can be produced.

BRIEF DESCRIPTION OF THE DRAWINGS

[Fig. 1]

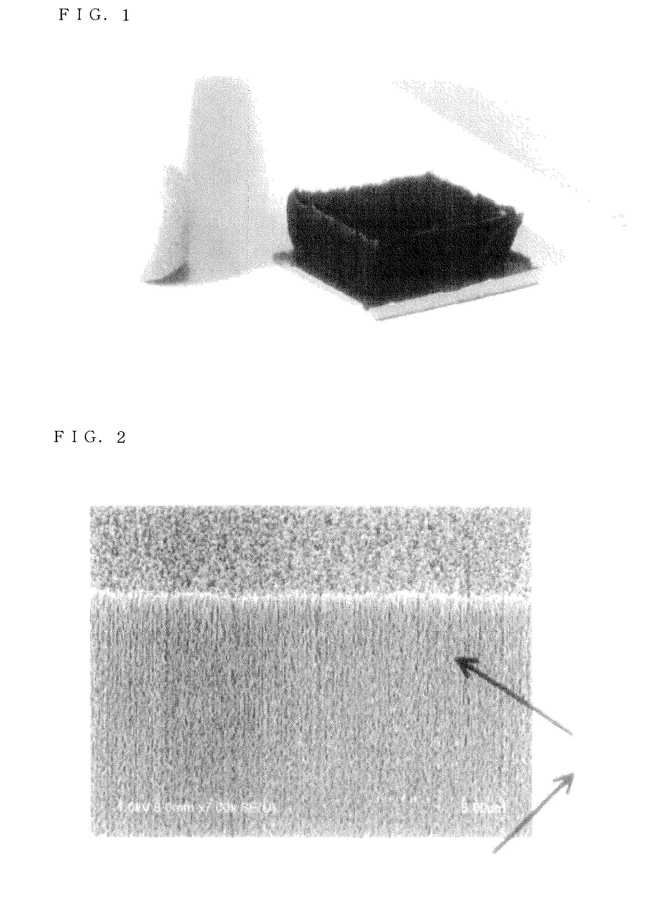

Fig. 1 shows digital camera images of an aligned single-walled CNT aggregate according to the invention;
[Fig. 2]
Fig. 2 shows enlarged electron microscopic (SEM) images for a portion of an aligned single-walled CNT aggregate shown in Fig. 1;
[Fig. 3]

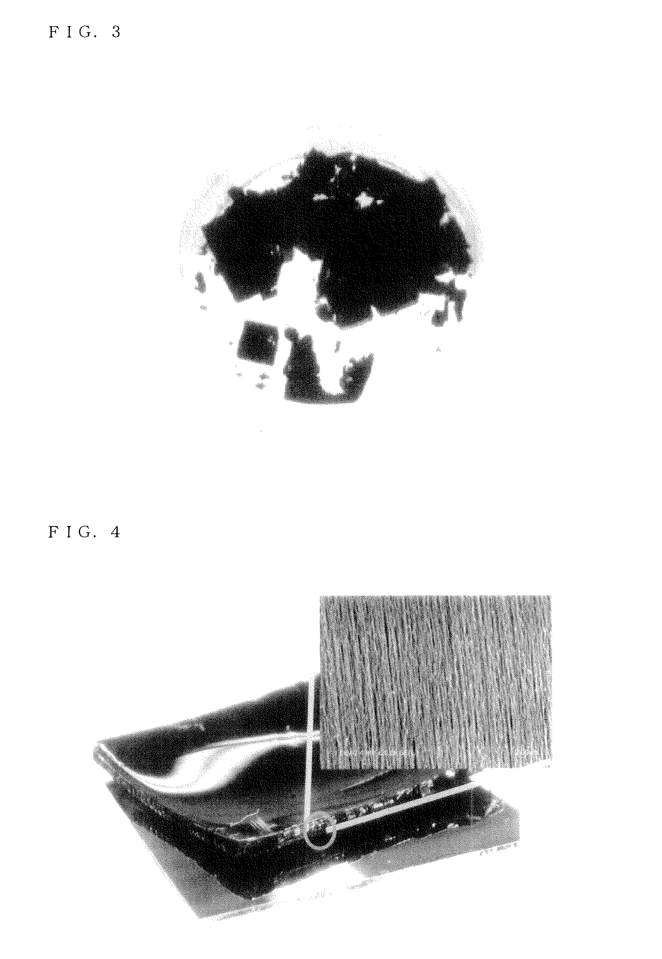

Fig. 3 shows digital camera images of bulk aligned single-walled CNT aggregate peeled from a substrate and placed in a container;
[Fig. 4]
Fig. 4 shows digital cameral images of a bulk aligned single-walled CNT aggregate peeled from a substrate and enlarged scanning electron microscopic (SEM) images for a portion of the side thereof;
[Fig. 5]

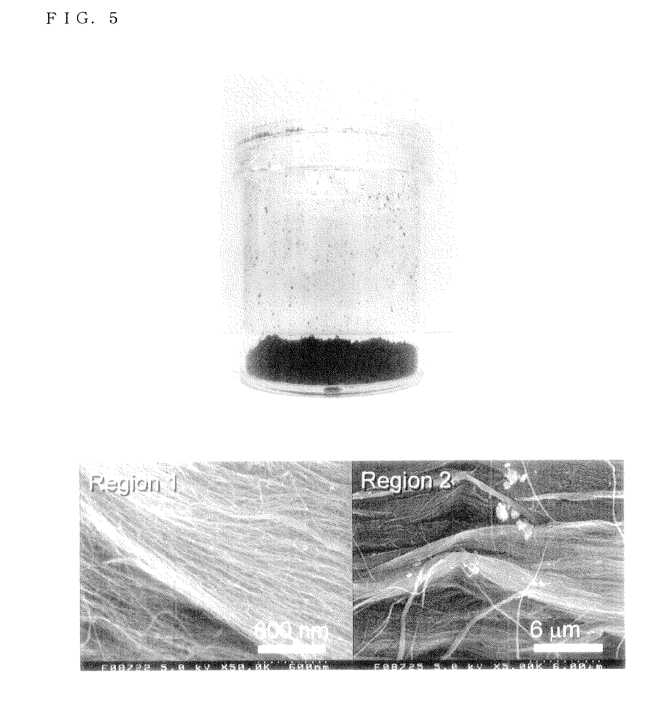

Fig. 5 shows scanning electron microscopic (SEM) images for portions of a powdered aligned single-walled CNT aggregate peeled from a substrate enlarged at magnifying factors different from each other;
[Fig. 6]

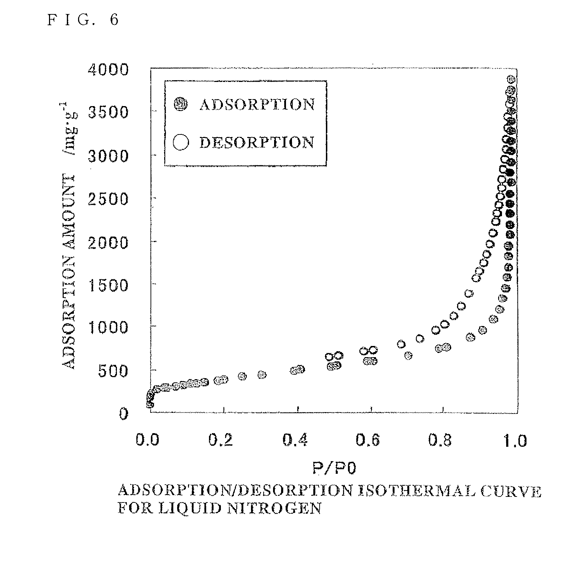

Fig. 6 shows a nitrogen adsorption/desorption isotherm curve at 77K for an aligned single-walled CNT aggregate with no opening treatment applied;
[Fig. 7]

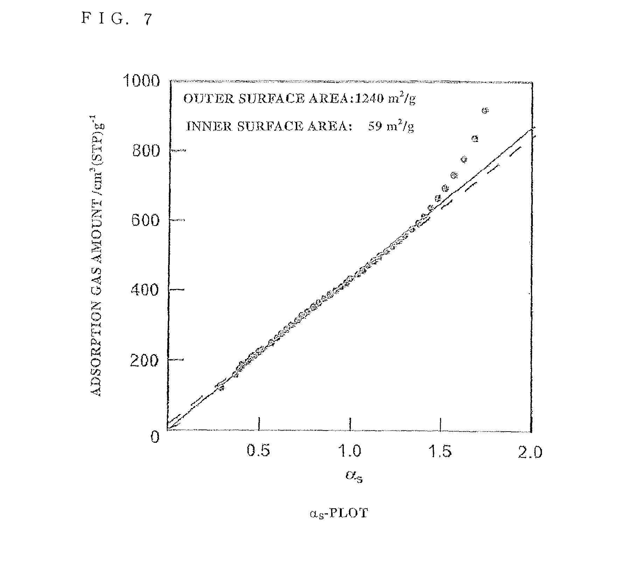

Fig. 7 shows an $\alpha_S$ plot diagram for an aligned single-walled CNT aggregate with no opening treatment applied;
[Fig. 8]

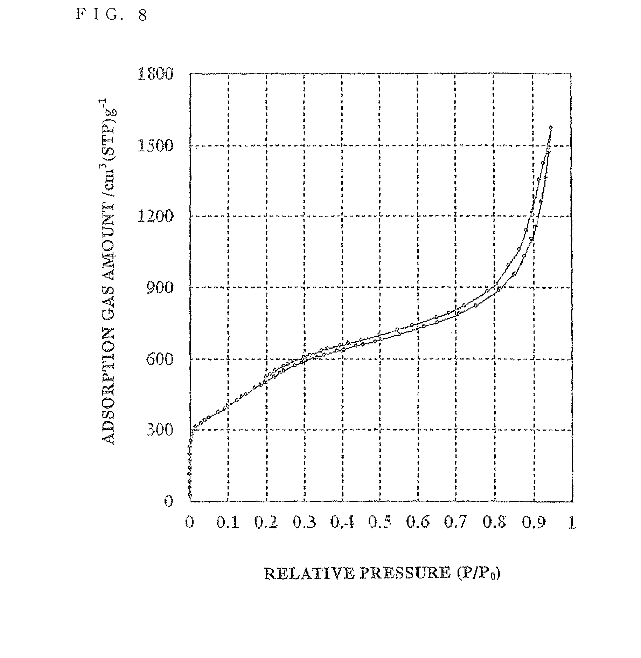

Fig. 8 shows a nitrogen adsorption/desorption isotherm curve at 77K for an aligned single-walled CNT aggregate with opening treatment applied;
[Fig. 9]

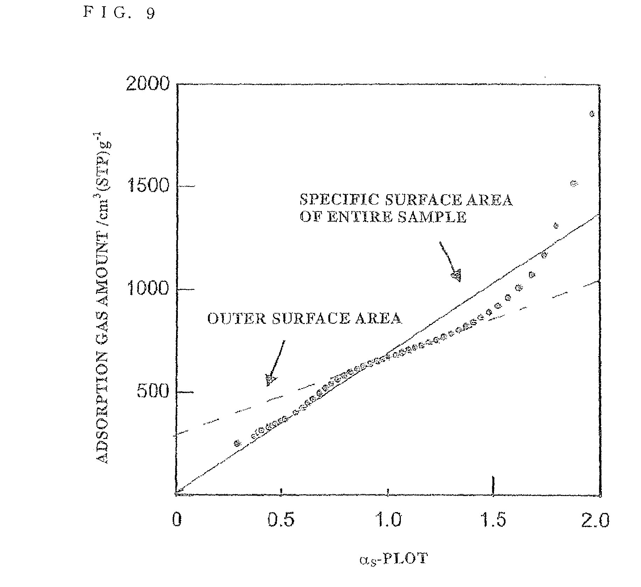

Fig. 9 shows an $\alpha_S$ plot diagram for an aligned single-walled CNT aggregate applied with the opening treatment;
[Fig. 10]

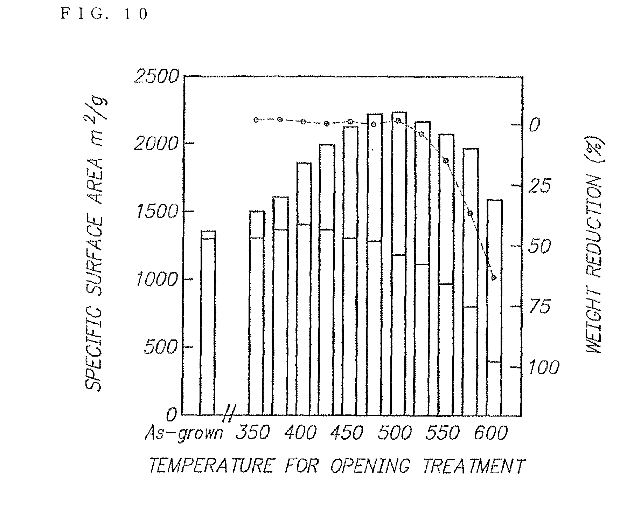

Fig. 10 is a graph showing a relation between the temperature of the opening treatment and the specific surface area of the aligned single-walled CNT aggregate;
[Fig. 11]

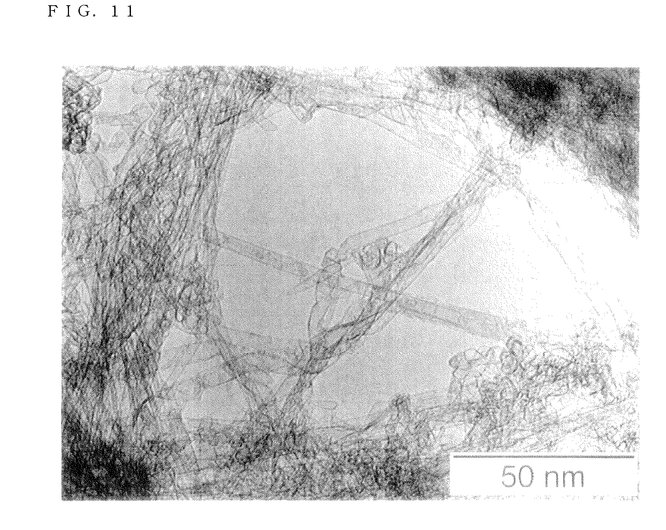

Fig. 11 is a schematic view of a bundle structure of CNTs in which Fig. 11 (a) shows a structure with a large diameter, a broad size distribution and low linearity and Fig. 11 (b) shows a structure with a small diameter, a narrow size distribution and high linearity;

[Fig. 12]

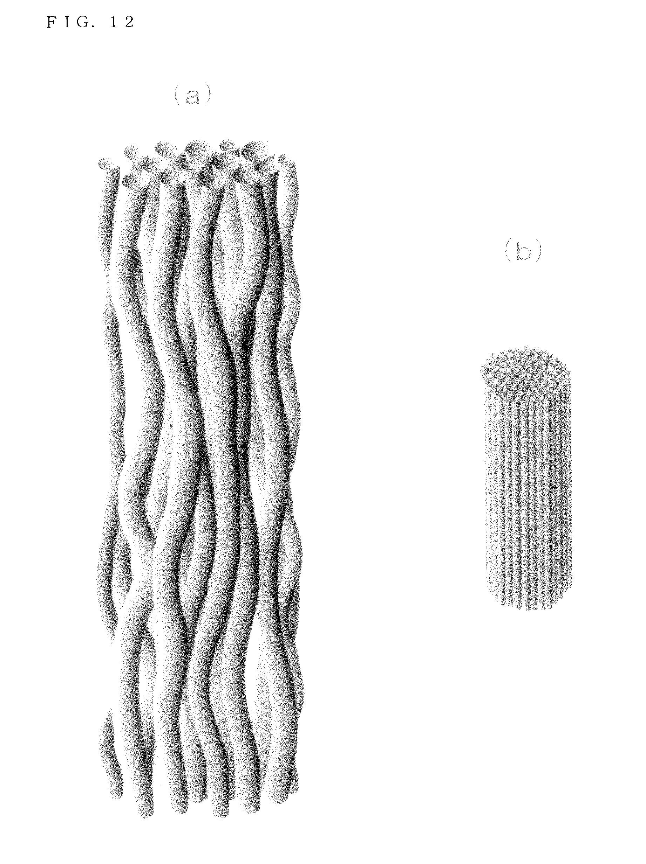

Fig. 12 is a schematic view of a bundle structure of CNTs in the aligned single-walled CNT aggregate of the invention;
[Fig. 13]

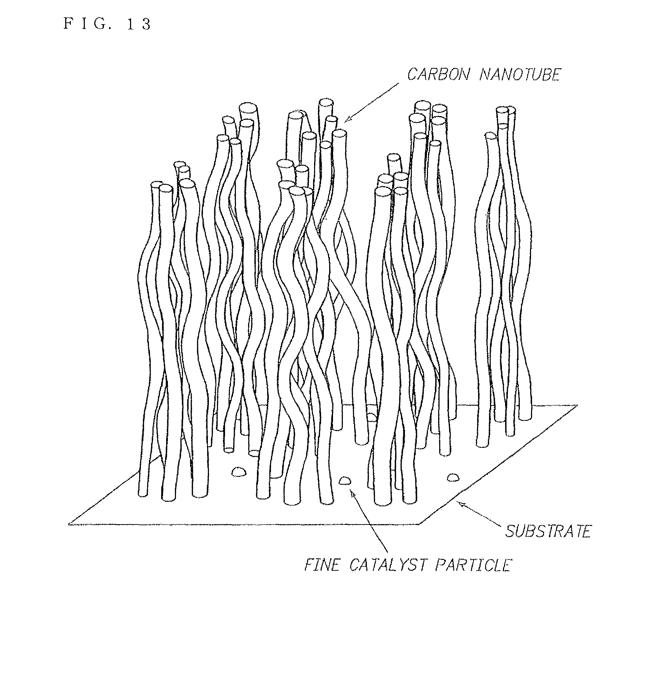

Fig. 13 shows electron microscopic (TEM) images of single-walled CNTs in the aligned single-walled CNT aggregate;
[Fig. 14]

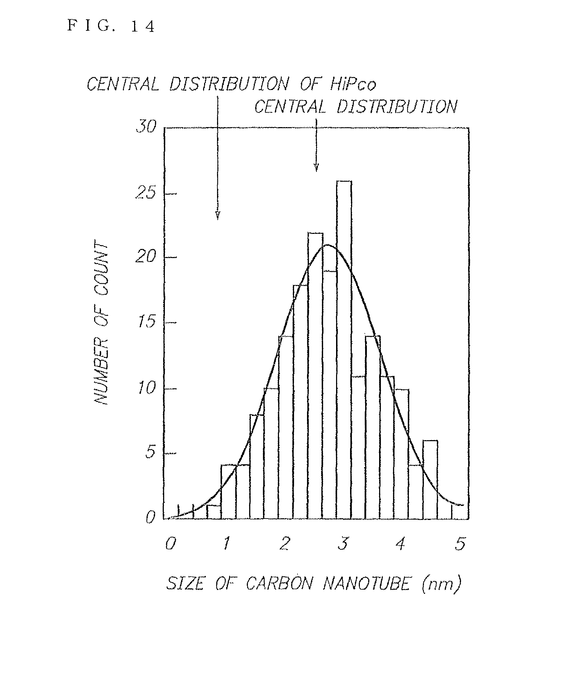

Fig. 14 is a graph showing the result of measurement for the size distribution (outer diameter) of CNT in the aligned single-walled CNT aggregate;
[Fig. 15]

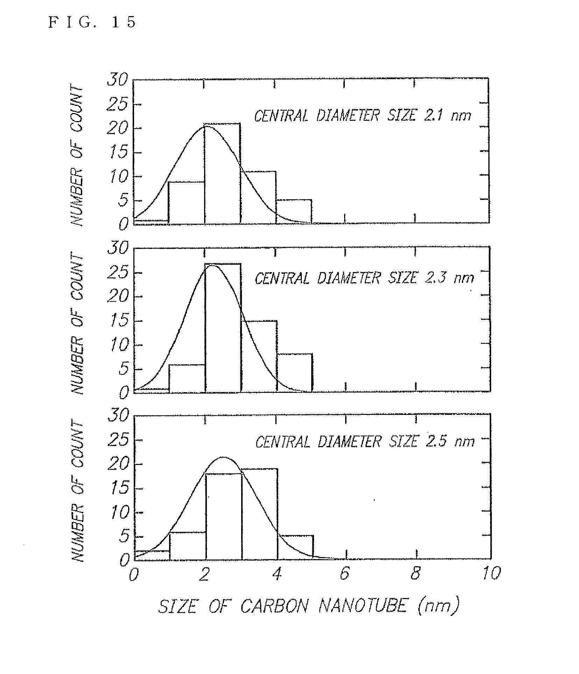

Fig. 15 is a graph showing the result of measurement for the size distribution (outer diameter) of CNT in a second aligned single-walled CNT aggregate;
[Fig. 16]

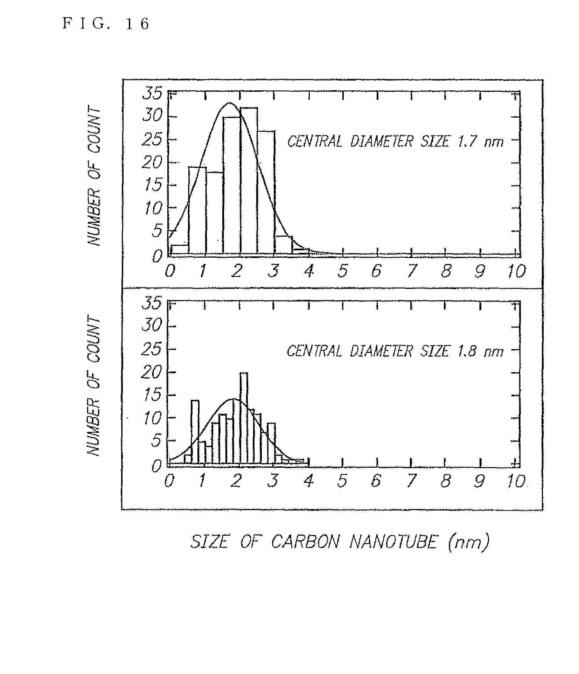

Fig. 16 is a graph showing the result of measurement for the size distribution (outer diameter) of CNT in a third aligned single-walled CNT aggregate;
[Fig. 17]

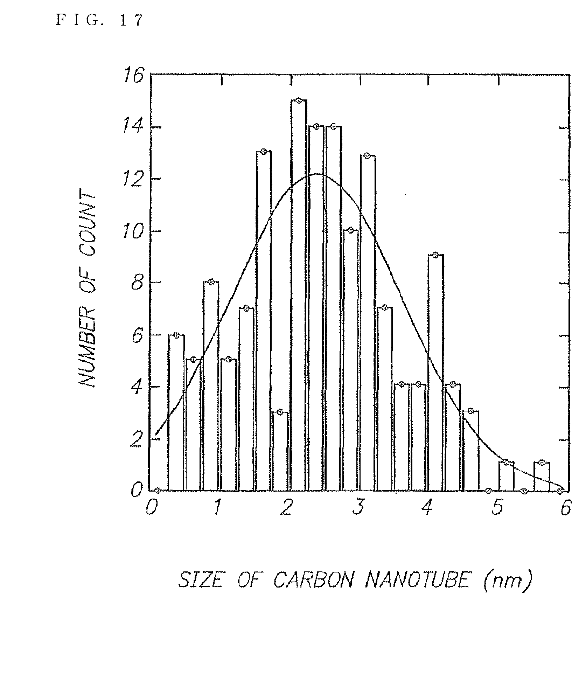

Fig. 17 is a graph showing the result of measurement for the size distribution (outer diameter) of CNT in a fourth aligned single-walled CNT aggregate;
[Fig. 18]

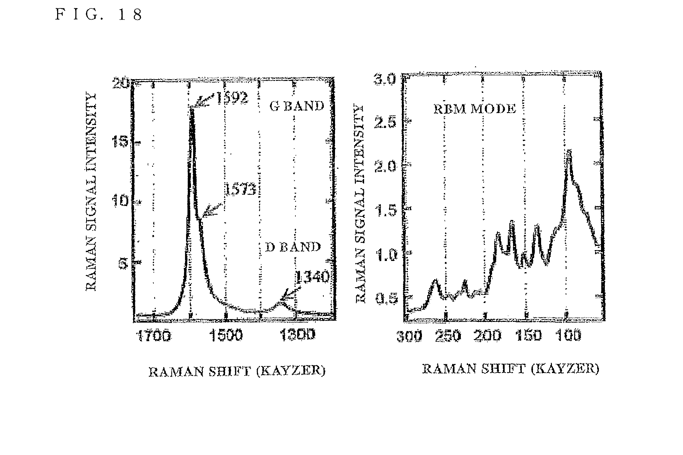

Fig. 18 is a graph showing the result of measurement for Raman spectroscopy of CNT in an aligned single-walled CNT aggregate;
[Fig. 19]

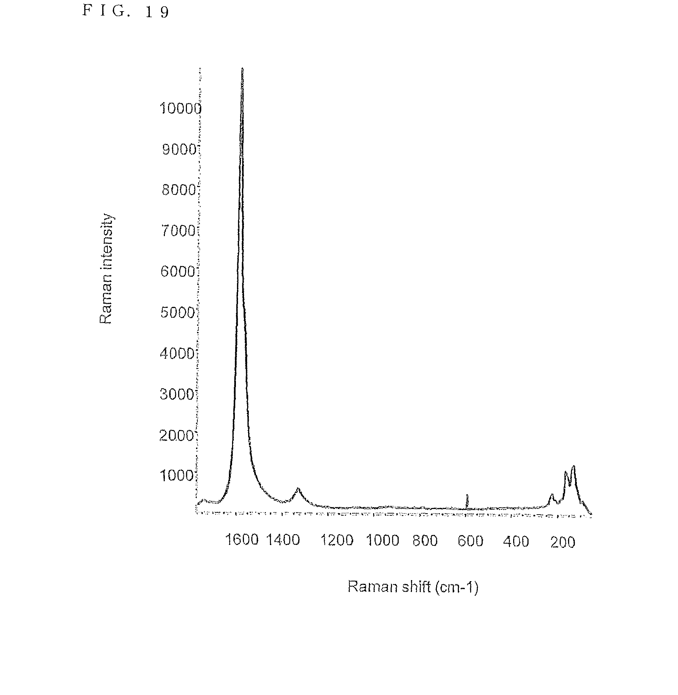

Fig. 19 is a graph showing the result of measurement for Raman spectroscopy of CNT in a second aligned single-walled CNT aggregate;
[Fig. 20]

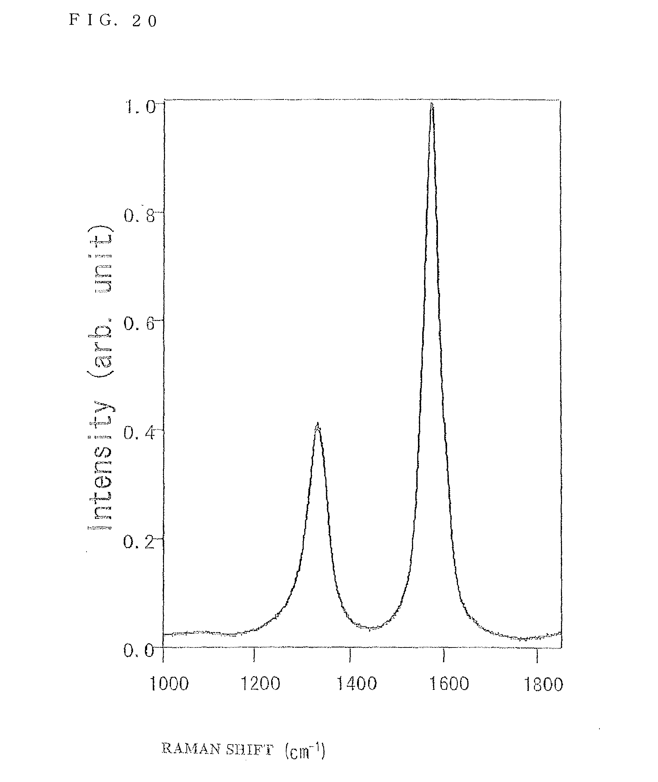

Fig. 20 is a graph showing the result of measurement for Raman spectroscopy of CNT in a third aligned single-walled CNT aggregate;
[Fig. 21]

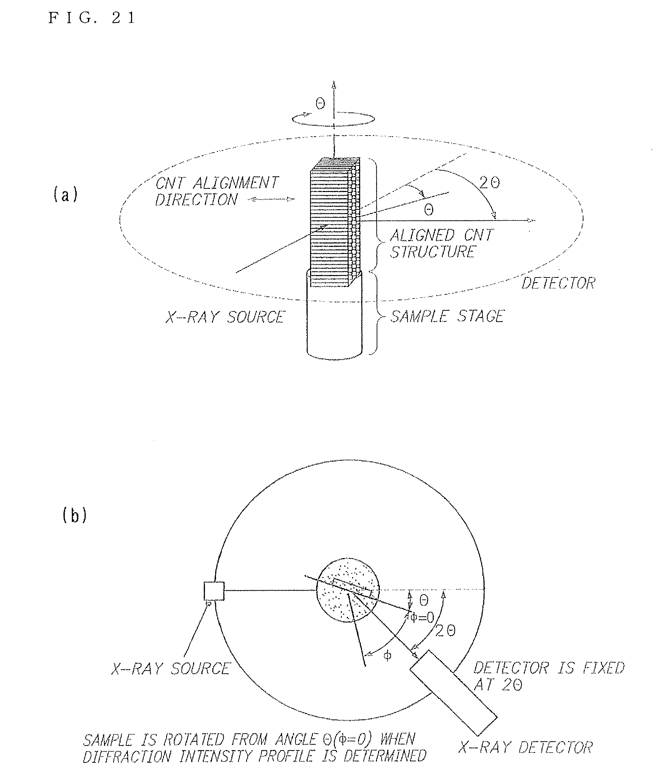

Fig. 21 is a schematic constitutional view showing a measuring apparatus by a $\theta$-$2\theta$ method in which Fig. 21 (a) is a perspective view thereof and Fig. 21 (b) is a plan view thereof;
[Fig. 22]

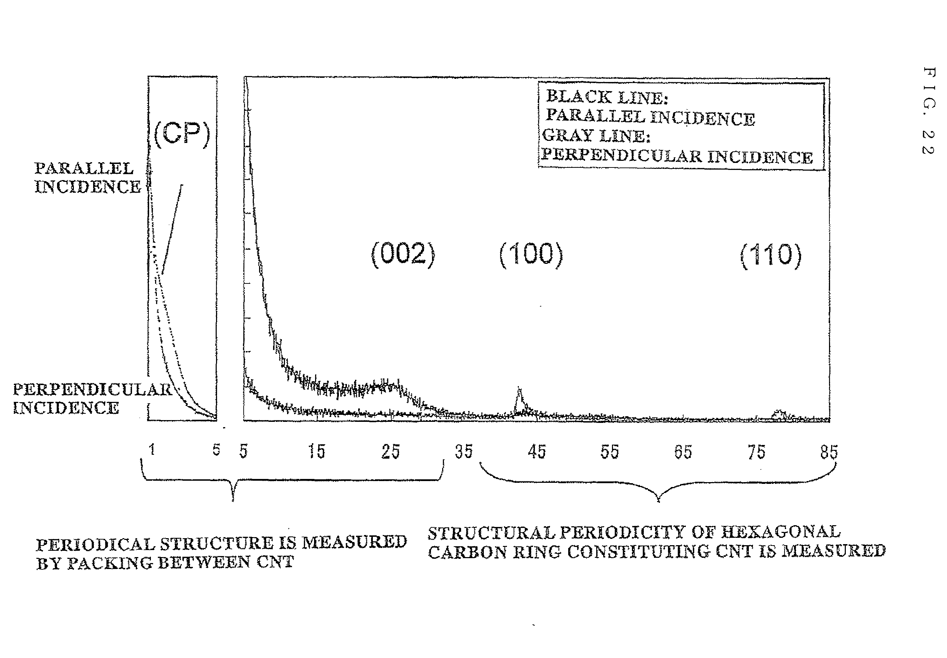

Fig. 22 is an X-ray diffraction spectral diagram when measuring the aligned single-walled CNT aggregate by a $\theta$-$2\theta$ method;
[Fig. 23]

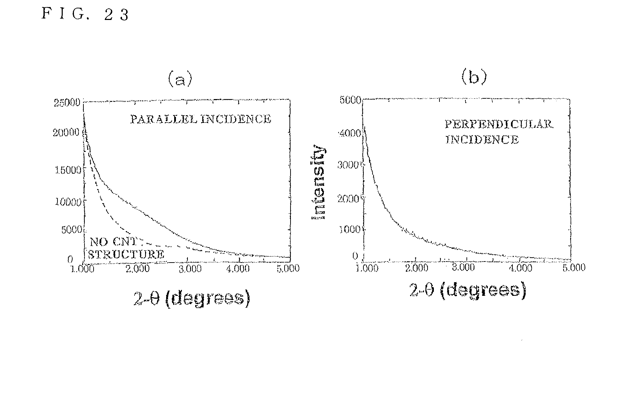

Fig. 23 is an X-ray diffraction spectral diagram of a (CP) diffraction peak when measuring the aligned single-walled CNT aggregate by the $\theta$-$2\theta$ method in which Fig. 23(a) shows a case where the X-ray incident direction and the CNT alignment direction are parallel and Fig. 23(b) shows a case where the X-ray incident direction and the CNT alignment direction are perpendicular to each other;
[Fig. 24]

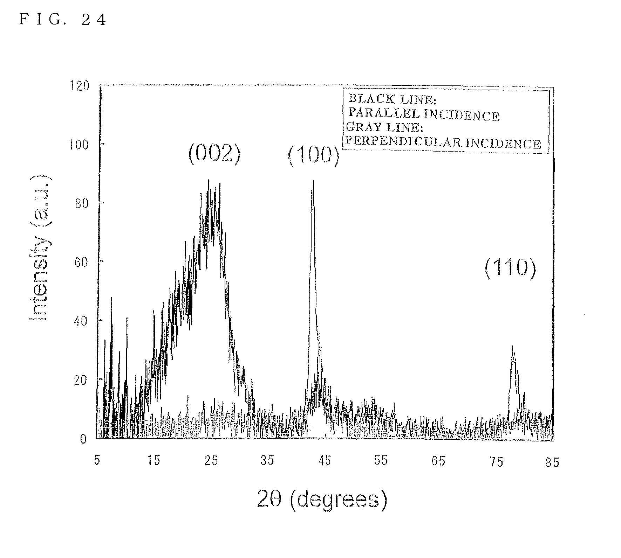

Fig. 24 is an X-ray diffraction spectral diagram for (002), (100), (110) diffraction peaks, when measuring the aligned single-walled CNT aggregate by the $\theta$-$2\theta$ method in a case where the X-ray incident direction and the CNT alignment direction are in parallel to each other and in a case where the X-ray incident direction and the CNT alignment direction are perpendicular;
[Fig. 25]

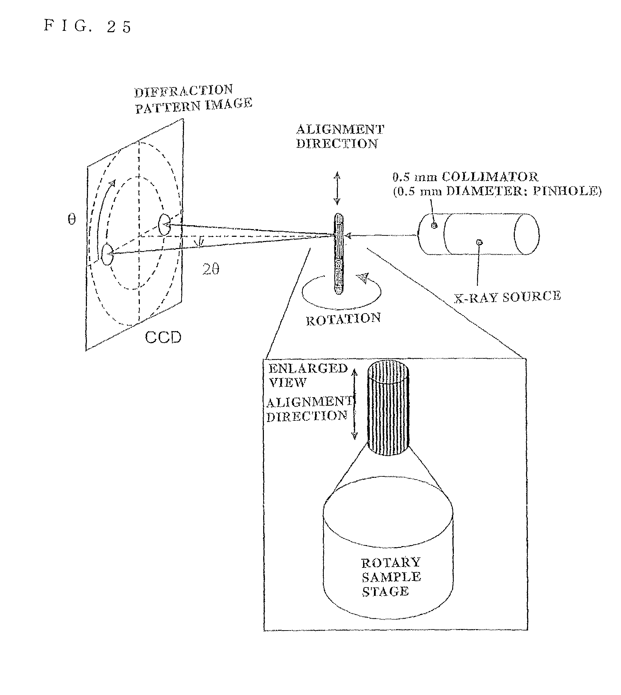

Fig. 25 is a schematic constitutional view showing a measuring apparatus by Laue method;
[Fig. 26]

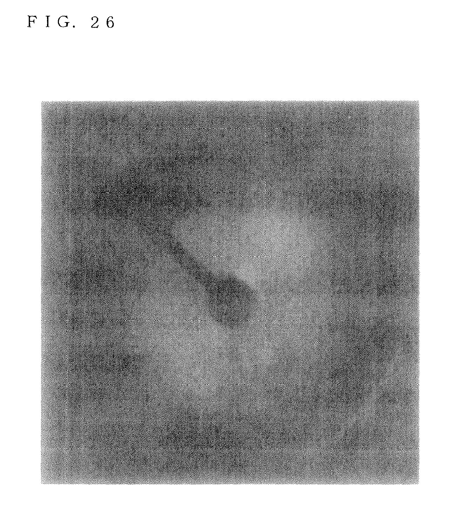

Fig. 26 shows refraction pattern images of an aligned single-walled CNT aggregate by the Laue method;
[Fig. 27]

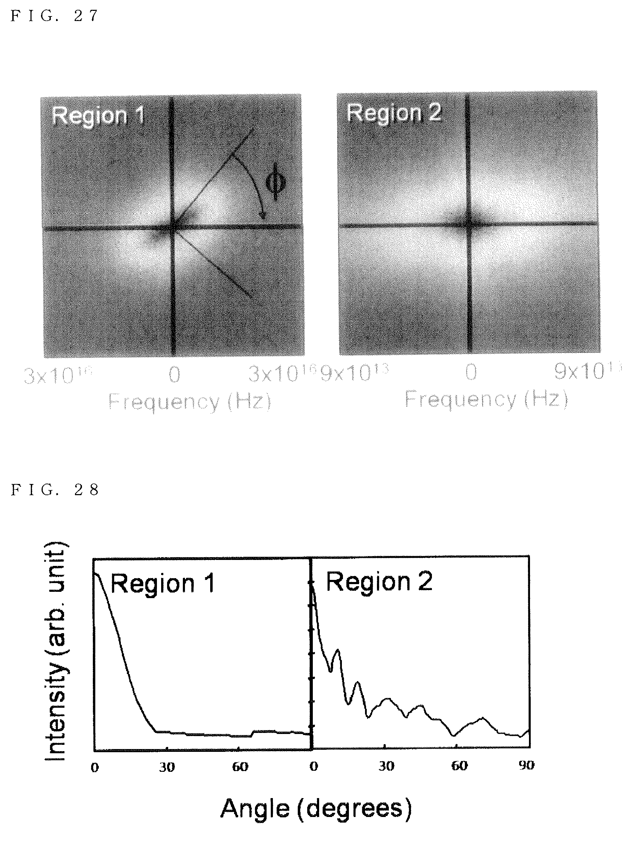

Fig. 27 shows fast Fourier transformation images for scanning electron microscopic images in Fig. 5;
[Fig. 28]
Fig. 28 shows an intensity profile determined from the fast Fourier transformation images in Fig. 27;
[Fig. 29]

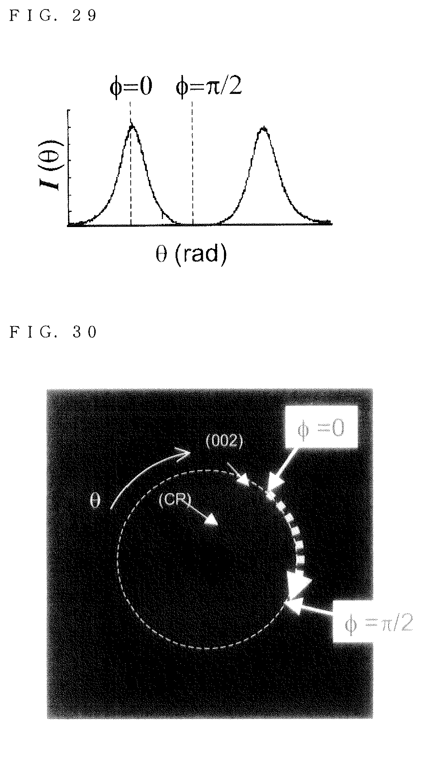

Fig. 29 shows an example of an X-ray intensity function from diffraction pattern images by the Laue method;
[Fig. 30]
Fig. 30 is an explanatory view showing the method of deriving an X-ray intensity function from diffraction pattern images by the Laue method;
[Fig. 31]

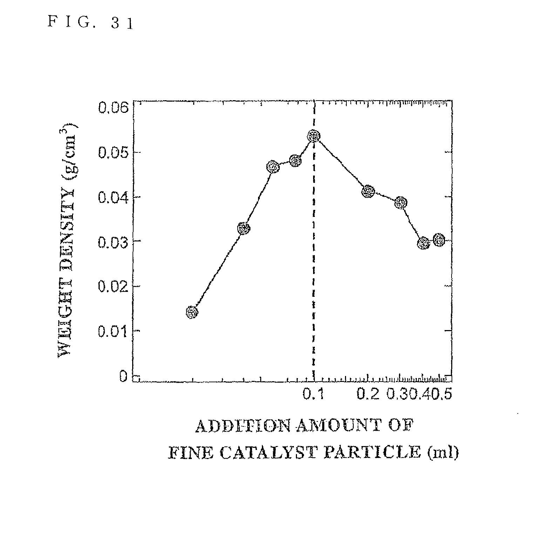

Fig. 31 is a graph showing a relation between the addition amount of fine particles of catalyst and the weight density of an aligned single-walled CNT aggregate;
[Fig. 32]

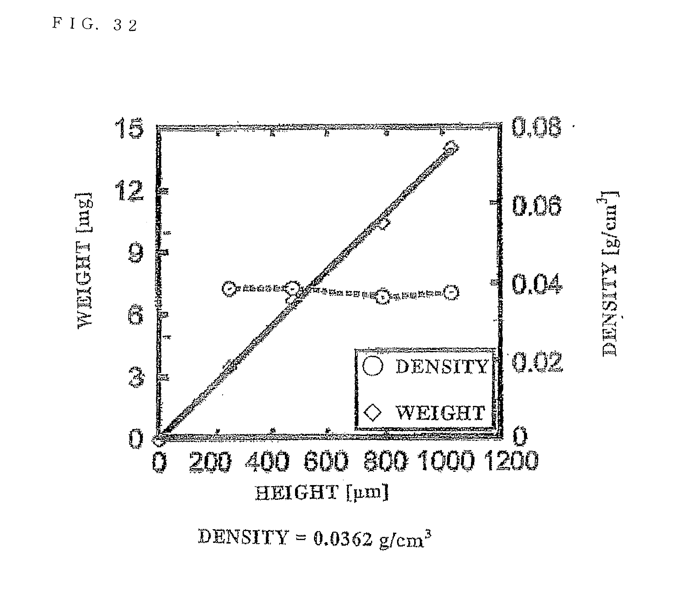

Fig. 32 is a graph showing a relation for height-weight and height-weight density of an aligned single-walled CNT aggregate;

[Fig. 33]

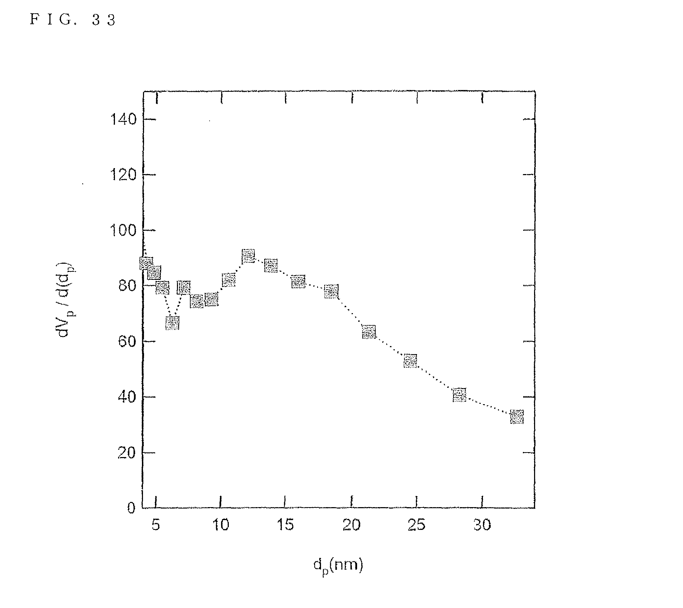

Fig. 33 is a graph showing a pore diameter distribution of powdered aligned single-walled CNT aggregates determined by a BJH method;

[Fig. 34]

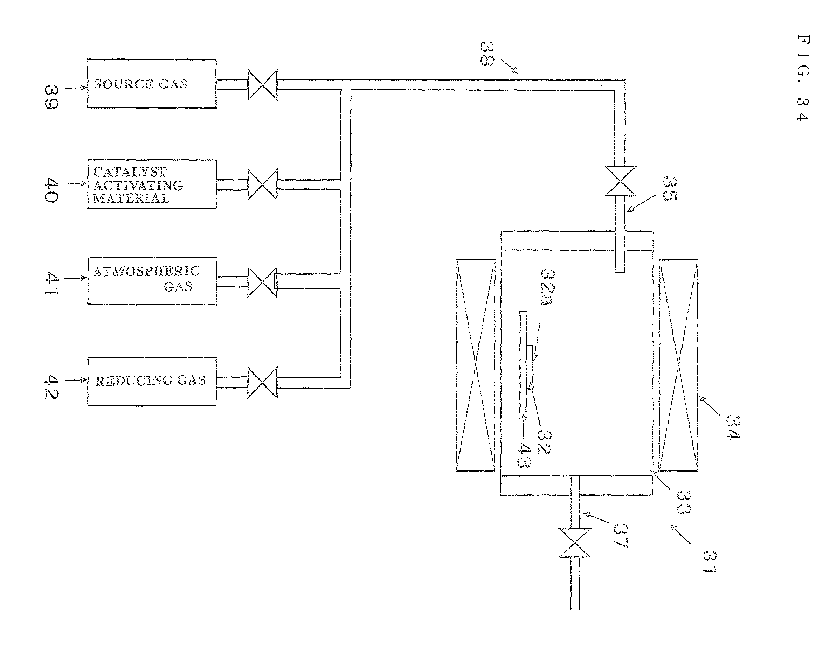

Fig. 34 is a side elevational view schematically showing a CNT production apparatus of the invention;

[Fig. 35]

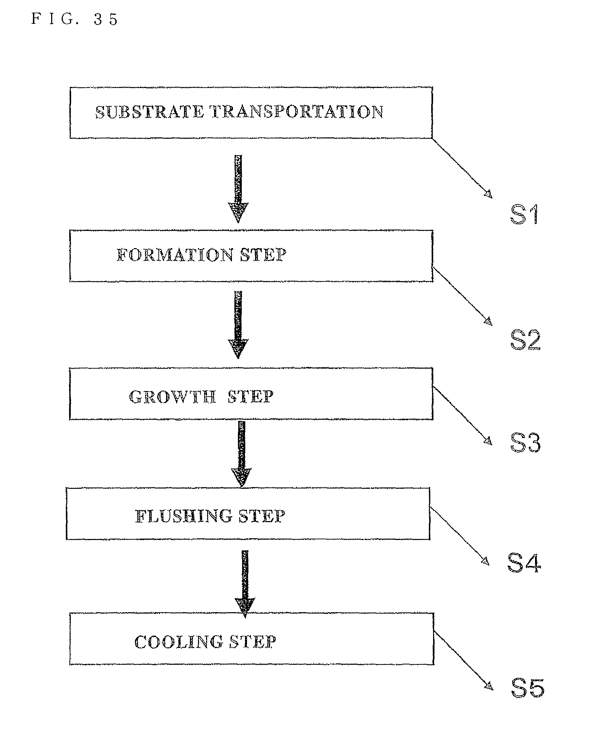

Fig. 35 is a flow chart schematically showing a CNT production process of the invention;

[Fig. 36]

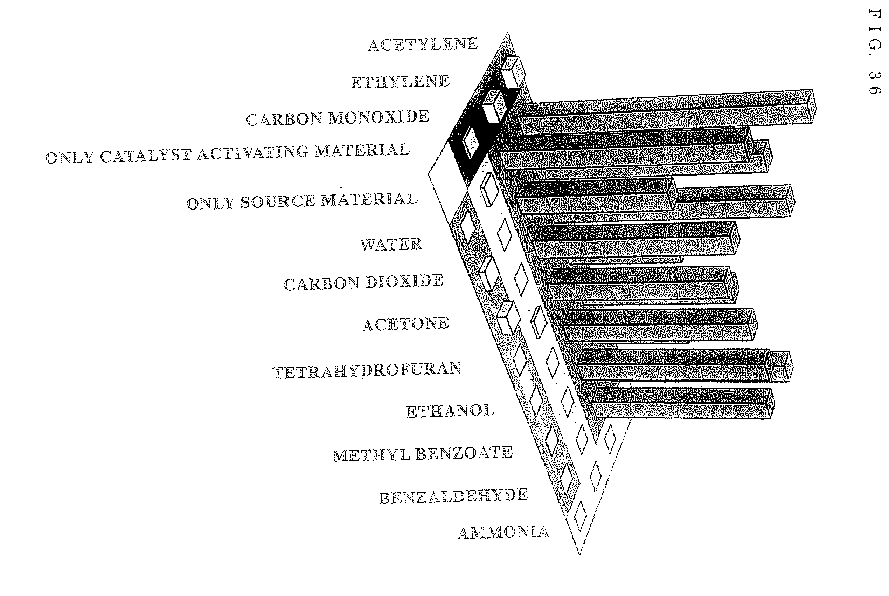

Fig. 36 is a view showing the height of an aligned CNT aggregate (growth efficiency) formed by a verification experiment;

[Fig. 37]

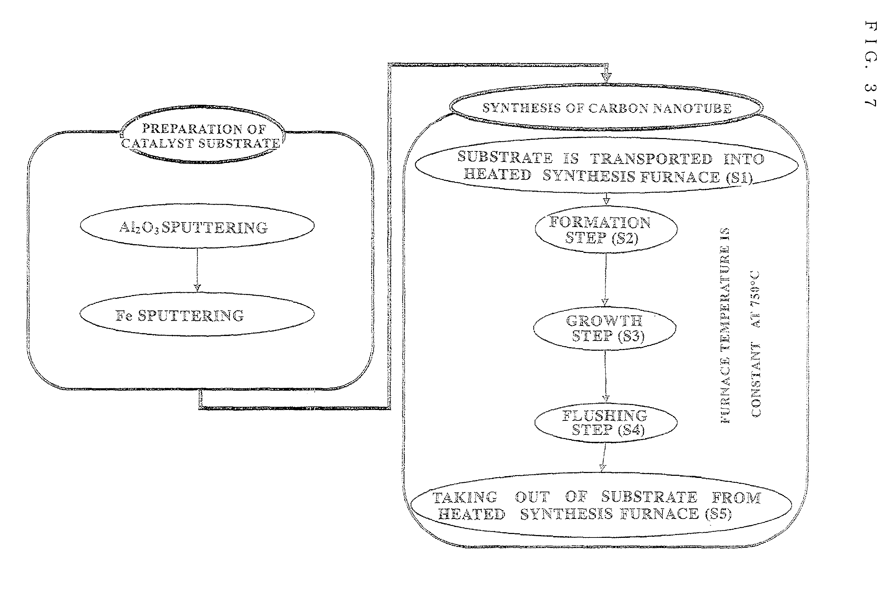

Fig. 37 is a flow chart for a production step according to Example 1;

[Fig. 38]

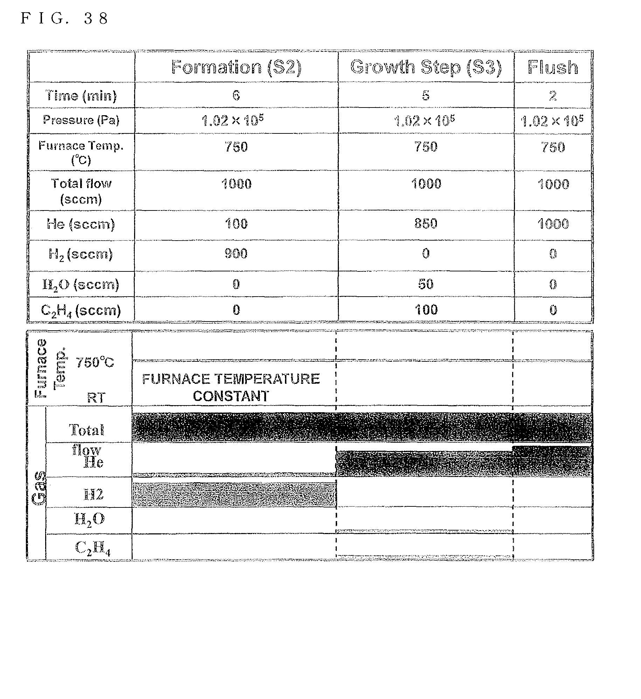

Fig. 38 is a view showing process conditions for the synthesis procedures shown in Fig. 37;

[Fig. 39]

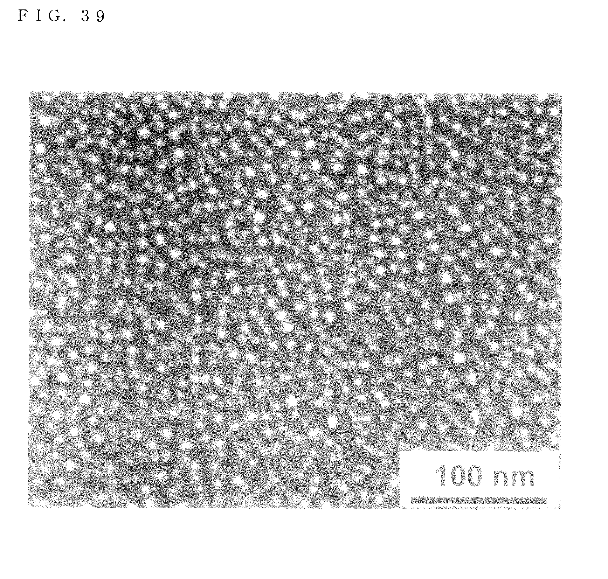

Fig. 39 is an image of fine iron particles observed by a scanning electron microscope;

[Fig. 40]

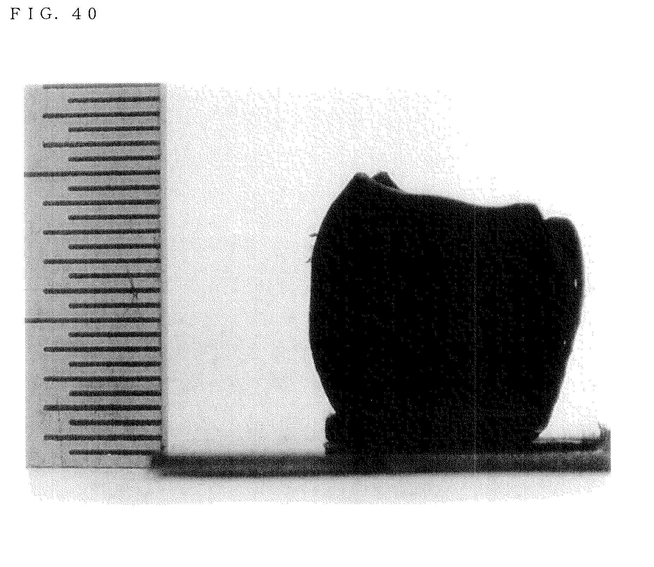

Fig. 40 shows digital camera image of an aligned single-walled CNT aggregate grown to a height of about 1 cm;

[Fig. 41]

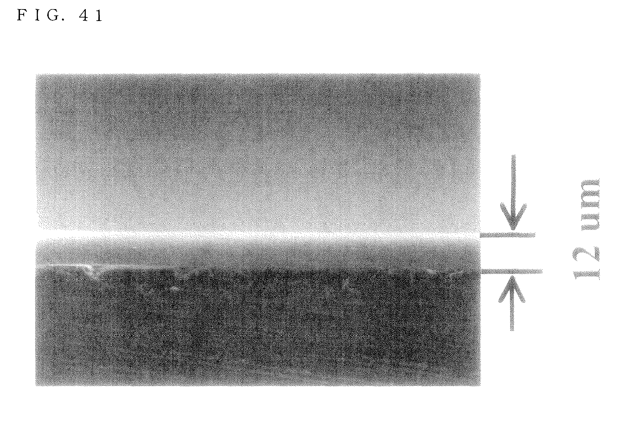

Fig. 41 shows electron microscopic (SEM) image of an aligned single-walled CNT aggregate grown to a height of 12 $\mu$m just from the side;

[Fig. 42]

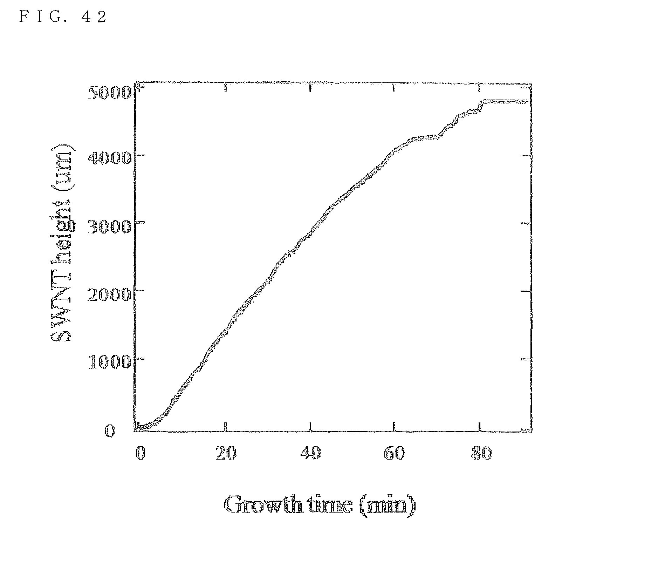

Fig. 42 is a growth curve of an aligned single-walled CNT aggregate measured during growth by using a telecentric optical measuring system;

[Fig. 43]

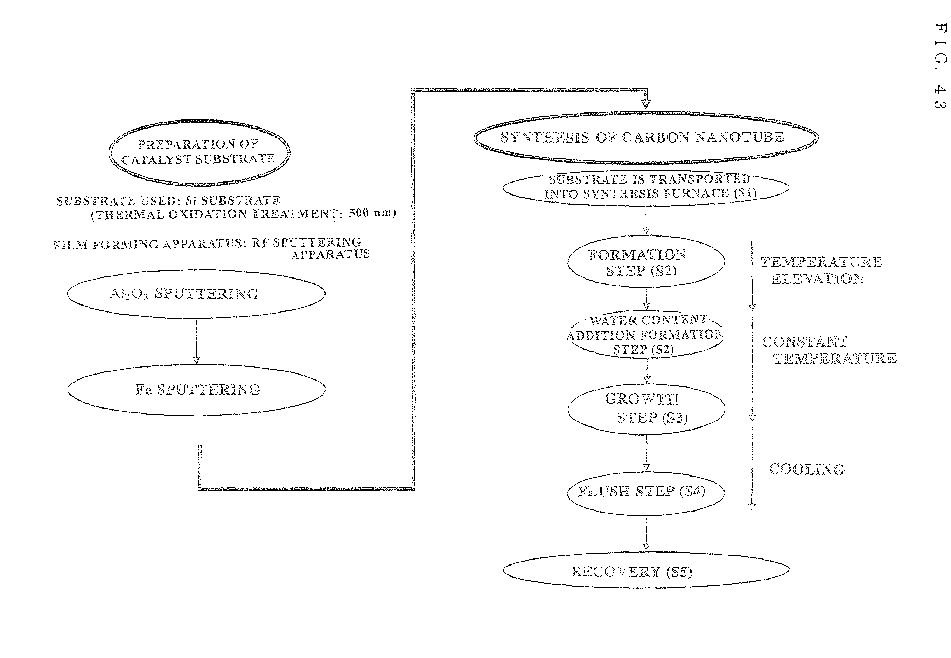

Fig. 43 is a flow chart of a production step according to Example 2;

[Fig. 44]

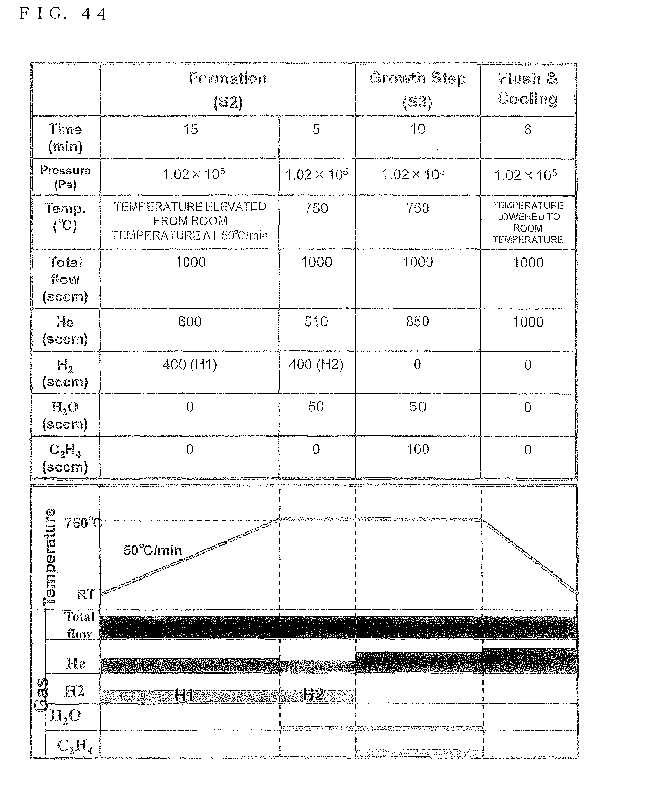

Fig. 44 shows process conditions for synthesis procedures shown in Fig. 43;

[Fig. 45]

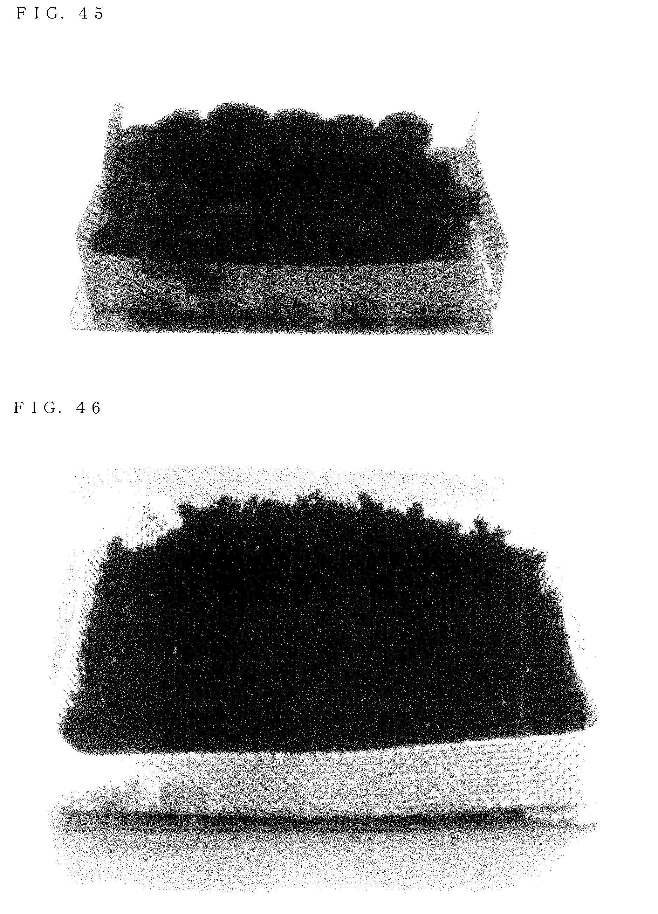

Fig. 45 is a digital photograph of aligned single-walled CNT aggregates grown on alumina particles of an average diameter of 3 mm;

[Fig. 46]

Fig. 46 is a digital photograph of an aligned single-walled CNT aggregate grown on silica particle with an average diameter of 300 $\mu$m;

[Fig. 47]

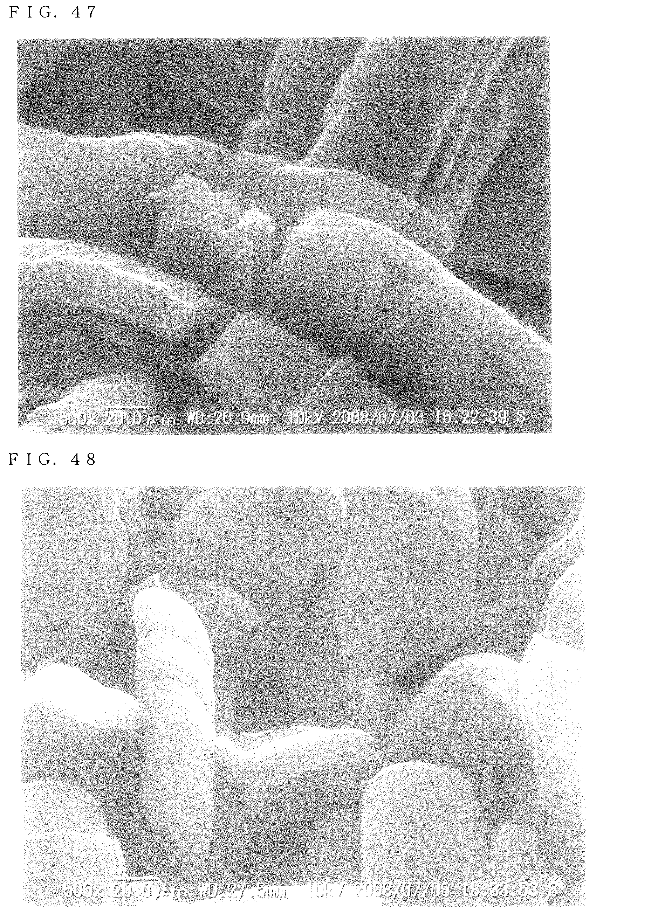

Fig. 47 is an SEM image of aligned single-walled CNT aggregates produced by using an SUS 304 wire of an average diameter of 100 $\mu$m as a base material;

[Fig. 48]

Fig. 48 is an SEM image of an aligned single-walled CNT aggregates produced by using an SUS 304 wire of an average diameter of 30 $\mu$m as a base material;

[Fig. 49]

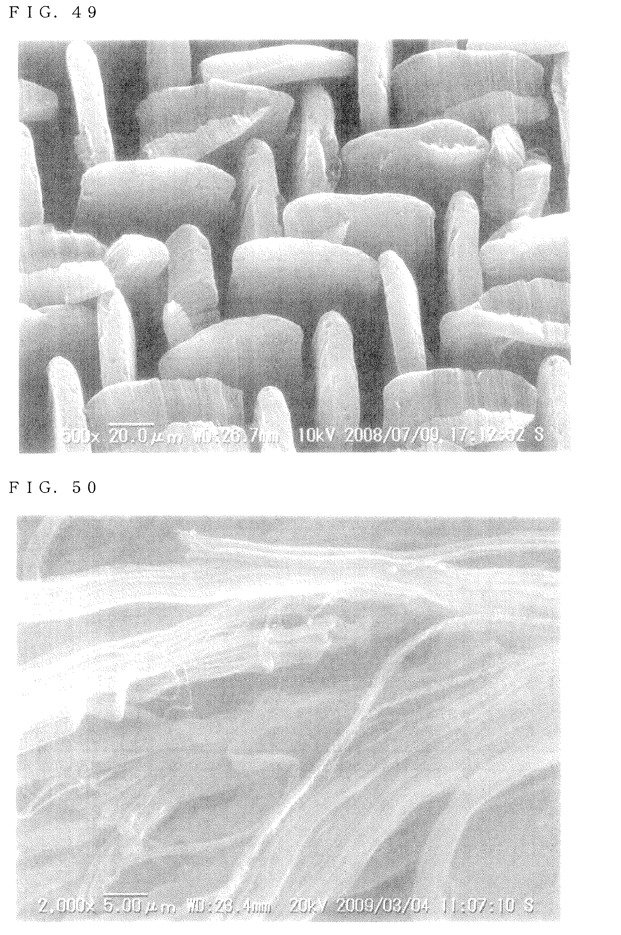

Fig. 49 is an SEM image of aligned single-walled CNT aggregates produced by using an SUS 304 wire of an average diameter of 16 $\mu$m as a base material;

[Fig. 50]

Fig. 50 is an SEM image showing the structure of an aligned single-walled CNT aggregate of Example 3;

[Fig. 51]

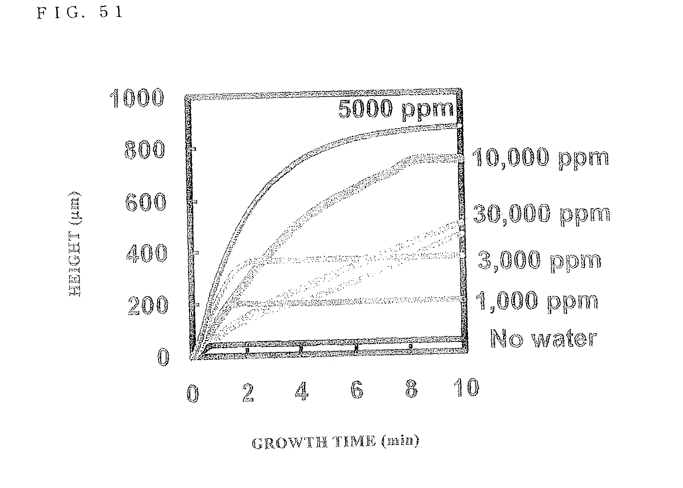

Fig. 51 is a graph showing an example of growing curves obtained by measuring the growing speed of CNT on real time by a telecentric measuring system in a case of using carbon dioxide as a catalyst activating substance;

[Fig. 52]

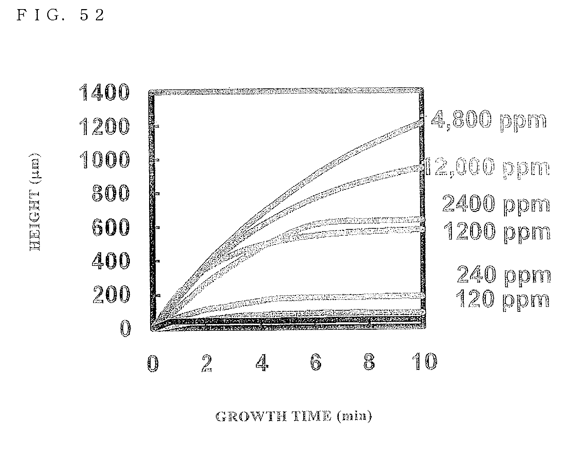

Fig. 52 is a graph showing an example of growing curves obtained by measuring the growing speed of CNT on real time by a telecentric measuring system in a case of using acetone as a catalyst activating substance;

[Fig. 53]

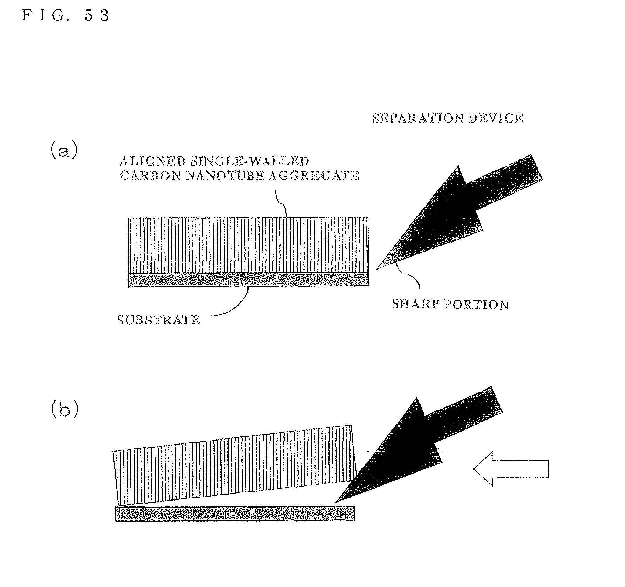

Fig. 53 is a schematic view of a separation device used for separating the bulk aligned single-walled CNT aggregate from a substrate or a catalyst;

[Fig. 54]

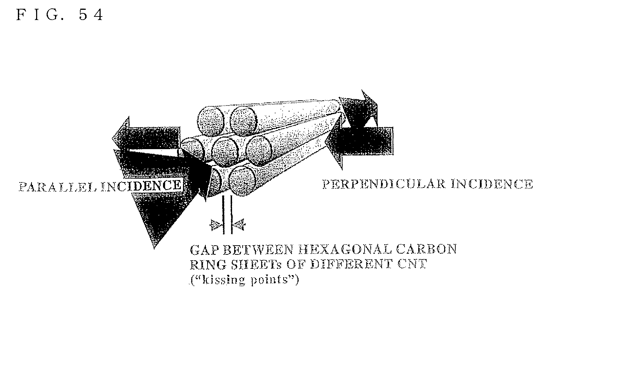

Fig. 54 is a schematic explanatory view showing a relation between the incident direction of X-rays and an alignment direction of CNT;

[Fig. 55]

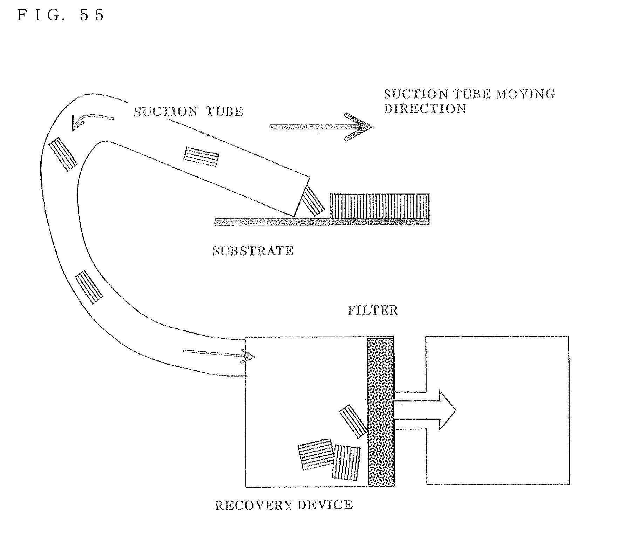

Fig. 55 is a schematic view for a separation device used for separating a powdered aligned single-walled CNT aggregate from a substrate or a catalyst;

[Fig. 56]

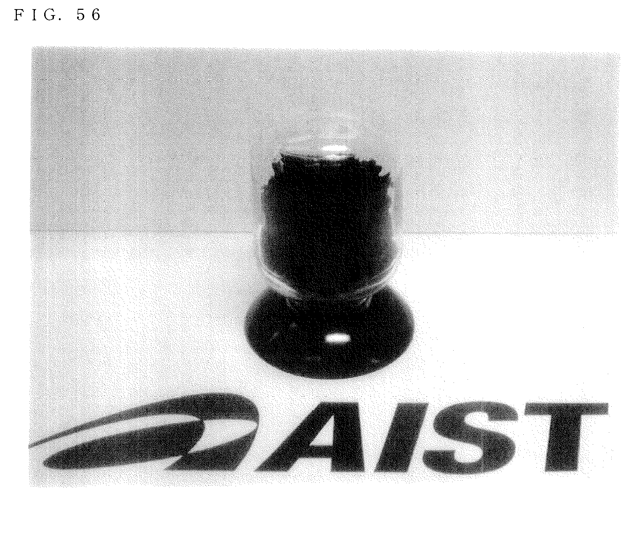

Fig. 56 shows digital camera images for a powdered aligned single-walled CNT aggregate peeled from a substrate and placed in a container;

[Fig. 57]

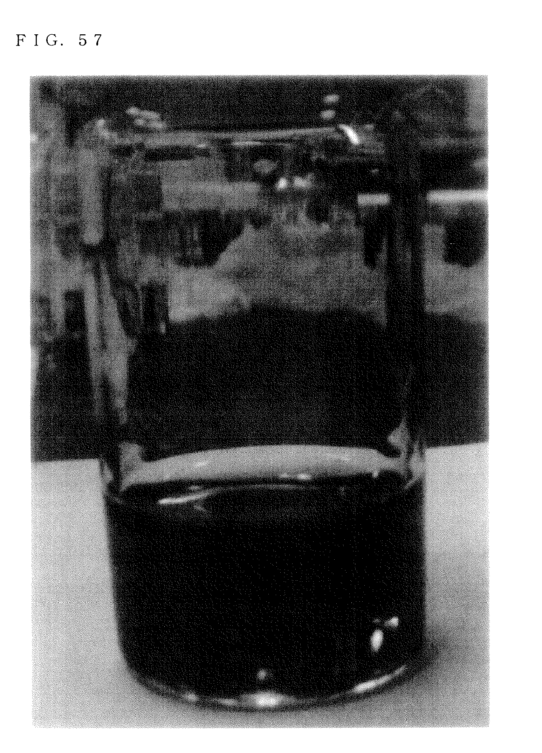

Fig. 57 is a view showing a liquid dispersion in which powdered aligned single-walled CNT aggregates are dispersed in DMF;

[Fig. 58]

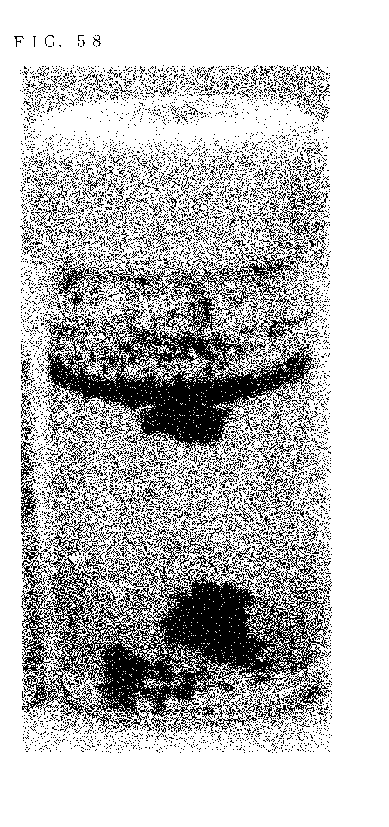

Fig. 58 is a view showing a liquid dispersion in which density growth powdered aligned single-walled CNT aggregates are dispersed in DMF.

MODE FOR CARRYING OUT THE INVENTION

The present invention will be described in detail by way of preferred embodiments with reference to the appended drawings.

Fig. 1 shows images taken by a digital camera for an entire aligned single-walled CNT aggregate of the invention produced by a method of Example, and Fig. 2 shows scanning electron microscopic (hereinafter also referred to as SEM) images in an enlarged scale for a portion of this aligned single-walled CNT aggregate. The characteristic values of the aligned single-walled CNT aggregate of Fig. 1 are 98% for the single-walled CNT content, 0.03 $g/cm^3$ for the weight density, 7 for G/D ratio, 1100 $m^2/g$ for the BET-specific surface area, 2.8 nm for the average outer diameter, 2 nm for the full-width at half maximum, 99.9% for the carbon purity, and 0.7 for the Herman's orientation factor.

Fig. 3 shows images taken by a digital camera for an example of the bulk aligned single-walled CNT aggregates after peeling the aligned single-walled CNT aggregate altogether off from a base material produced by a method of Example, and Fig. 4 shows digital cameral images for bulk aligned single-walled CNT aggregates produced by a method of Example, which was peeled off from the base material, together with enlarged SEM image of the portion of the side. The characteristic values of the aligned single-walled CNT aggregate of Fig. 4 are 98% for the single-walled CNT content, 0.03 $g/cm^3$ for the weight density, 7 for G/D ratio, 1100 $m^2/g$ for the BET-specific surface area, 2.8 nm for the average outer diameter, 2 nm for the full-width at half maximum, 99.9% for the carbon purity, and 0.7 for the Herman's orientation factor.

Fig. 5 shows images taken by a digital camera and SEM image for powdered aligned single-walled CNT aggregate after peeling off from the base material. Region 1 and Region 2 in Fig. 5 are the images of the different regions of the same sample. The characteristic values of the powdered aligned single-walled CNT aggregate of Fig. 5 are 0.009 $g/cm^3$ for the weight density, 1100 $m^2/g$ for the BET-specific surface area, 2.8 nm for the average outer diameter, 2 nm for the full-width at half maximum, 99.9% for the carbon purity, and 0.7 for the Herman's orientation factor.

[Specific surface area of CNT]

A preferred specific surface area of the aligned single-walled CNT aggregate including the bulk aligned single-walled CNT aggregate and the powdered aligned single-walled CNT aggregate is 600 $m^2/g$ or more in a case where the single-walled CNT is not-opened mostly and 1300 $m^2/g$ or more in a case where single-walled CNT is opened mostly. An aligned single-walled CNT aggregate having such a high specific surface area can preferably be applied to a catalyst support, an energy or substance storage material, a supercapacitor electrode material, actuator, a composite material filler and the like. Also as detailed below, in an aligned single-walled CNT aggregate having such a high specific surface area, there are gaps between individual single-walled CNTs constituting the aggregate, i.e., the single-walled CNTs are not bundled excessively. Accordingly, in a single-walled CNT aggregate having a high specific surface area, individual single-walled CNTs constituting the aggregate are bound very loosely to each other rather than bound too strongly, whereby allowing for an excellent shape processability.

It is possible that a non-opened CNT aggregate having the specific surface area of less than 600 $m^2/g$ or an opened CNT aggregate having the specific surface area of less than 1300 $m^2/g$ contain metal impurities or carbon impurities at several ten percent (about 40%) by weight, and cannot exhibit the inherent properties of CNT and is not suitable to be used in the above mentioned applications.

Generally, while larger specific surface area of the aligned single-walled CNT aggregate is more preferred, it is explained, based on a theoretical calculation, to be about 1300 $m^2/g$ for a non-opened aggregate and about 2600 $m^2/g$ for an opened aggregate.

The specific surface area of the aligned single-walled CNT aggregate can be determined by measuring a nitrogen adsorption/desorption isothermal curve at 77K. As an example, Fig. 6 shows an adsorption/desorption isothermal curve measured for 30 mg of the bulk aligned single-walled CNT aggregate produced in Example 1 to be described below in detail, by using BELSORP-MINI (produced by BEL Japan Inc.) (adsorption equilibrium time: 600 sec). When the specific surface area was measured from the adsorption/desorption isothermal curve by a method of Brunauer-Emmett-Teller, it was 1100 $m^2$/g. In the graph, P is an adsorption equilibrium pressure and $P_0$ is a saturation vapor pressure.

An adsorption/desorption isothermal curve for a not-opened aligned single-walled CNT aggregate shows a high linearity in a region of a relative pressure of 0.5 or lower. Further, as shown in Fig. 7, also an $\alpha_S$ plot showed a linearity in a region of 1.5 or less. The measuring result shows that this example is not-opened single-walled CNT.

The specific surface area of the aligned single-walled CNT aggregate can be further increased by applying the opening treatment to the single-walled CNT. As the opening treatment, a dry process treatment by oxygen can be used. Further, in a case where a wet process treatment can be used, acid treatment, specifically, a treatment of refluxing hydrogen peroxide, a cutting treatment with hydrochloric acid at high temperature, etc. can be used.

The adsorption/desorption isothermal curve of an aligned single-walled CNT aggregate applied with an opening treatment by the method described in the Journal of Carbon, vol. 45, p 722-726 (2007) (up to 500°C in dry air at a temperature elevation rate of 1°C/min) is characterized by a large rising in initial adsorption and by showing a convex form in a region of a relative pressure of 0.5 or lower as shown in Fig. 8. Unlike to the $\alpha_S$ plot of a non-opened aligned single-walled CNT aggregate exhibiting a linearity in Fig. 7, the $\alpha_S$ plot of an opened aligned single-walled CNT aggregate exhibited, as shown in Fig. 9, an increment of the adsorption amount which is relatively large in a region of 0.7 or lower and relatively small in a region exceeding 0.7 and it shows a convex form in a region of 1.0 or lower.

The specific surface area of the aligned single-walled CNT aggregate can be derived in the $\alpha_S$ plot from a region of 0.7 or lower where the increment of the adsorption amount is large. In a case of a sample from which the data in Fig. 9 is obtained, it was 2236 $m^2$/g and it was found that the specific surface area increased by the opening treatment.

The adsorption/desorption isothermal curve and the $\alpha_S$ plot show a convex form because adsorption is generated on the inner surface and the outer surface in the CNT opened. That is, it can be distinguished whether the CNT is not-opened or opened by measuring the adsorption/desorption isothermal curve.

There is a correlation between the opening treatment temperature and the specific surface area and, as shown in Fig. 10, the specific surface area of the aligned single-walled CNT aggregate could be changed within a range from 1,000 $m^2$/g to 2,300 $m^2$/g continuously by changing the opening treatment temperature from 350°C to 600°C.

Even when the opening treatment is applied, it could be that not all of CNT are opened and not all of CNT are not-opened. In the aligned single-walled CNT aggregate, not-opened CNT and opened CNT may be present in admixture to a degree where the deteriorating of the properties are not serious.

The aligned single-walled CNT aggregate having such an extremely high specific surface area has not been obtained so far and has been obtained for the first time by the invention. The reason why the specific surface area of the aligned single-walled CNT aggregate according to the invention is extremely large is attributable to the provision of the following conditions.

1. The aligned CNT aggregate comprises single-walled CNTs.

In the aligned CNT aggregate comprising multi-walled CNTs, since nitrogen atoms cannot diffuse between carbon layers of CNTs, the specific surface area is decreased greatly. For example, the specific surface area of an aligned double-walled CNT aggregate is about one-half of that of the aligned single-walled CNT aggregate, and the theoretical upper limit of the non-opened aligned double-walled CNT aggregate is about 650 $m^2$/g. The content of the single-walled CNT in the aligned CNT aggregate of the invention (the ratio of the number of single-walled CNTs based on observed CNTs) was 99.5% or more when determined from transmission electron microscopic (hereinafter also referred to as TEM) images (refer to Fig. 13).
The aligned single-walled CNT aggregate may include double-walled CNTs and multiple-walled CNTs to such an extent that the functions are not affected adversely.

2. Single-walled CNT constituting aligned CNT aggregate is of high purity.

For obtaining a high specific surface area, it is desired that the purity of the single-walled CNT is as high as possible. The purity referred to herein is a carbon purity, which shows the weight percentage of the carbon constituting the weight of the aligned single-walled CNT aggregate. There is no upper limit of the purity for obtaining a high specific surface area, but it is difficult to obtain an aligned single-walled CNT aggregate at a purity of 99.9999% or higher because of contamination during the production. When the purity is lower than 95%, it is difficult to obtain a specific surface area exceeding 1,000 $m^2$/g in a case of a not-opened single-walled CNT. Further, in a case where metal impurities are contained and the carbon purity is lower than 95%, since metal impurities react with oxygen and prevents controlled opening of the single-walled CNT in the opening treatment process for single-walled CNT and, as a result, increase of the specific surface area becomes difficult. In view of the above, it is preferred that the purity of the single-walled CNT is 95% or higher.

The purity of the aligned single-walled CNT aggregate of the invention is obtained by elemental analysis using fluorescent X-rays. When an aligned single-walled CNT aggregate formed by the method of Example 1 to be described below was put to elemental analysis by fluorescent X-rays, the percent by weight of carbon was 99.98%, the percent by weight of iron was 0.013%, and other elements were not measured. Further, when the aligned single-walled CNT aggregate formed on a base material supporting the catalyst, made of nickel-iron alloy was characterized by elemental analysis by fluorescent X-rays, the percent by weight of carbon was 99.90%, and the percent by weight of nickel was 0.0198% and the percent by weight of iron was 0.0100 %, as impurities.

3. The average outer diameter of the single-walled CNTs constituting the aligned CNT aggregate is 1.5 nm or more and 4 nm or less, and the full-width at half maximum representing the range for the outer diameter distribution is larger than 1 nm. The average outer diameter and the full-width at half maximum mentioned above are values larger than those of a conventional single-walled CNT, and it is meant that the single-walled CNT constituting an aligned single-walled CNT aggregate according to the invention has a wider outer diameter distribution range when compared with a conventional single-walled. For example, the average outer diameter is 2.8 nm and the full-width at half maximum is 2 nm, and the single-walled CNT constituting an aligned single-walled CNT aggregate of the invention exhibits a distribution ranging from 0.8 to 4.5 nm.

The single-walled CNTs constituting an aligned single-walled CNT aggregate are not independent and isolated from each other but form a bundle in which a number of single-walled CNTs are touching each other as shown in Fig. 12.

The bundle of the single-walled CNTs constituting the aligned single-walled CNT aggregate of the invention comprises single-walled CNTs having a large average outer diameter (1.5 nm or more), a broad outer diameter distribution range (full-width at half maximum of 1 nm or more), and a low linearity (G/D ratio of 50 or less) as shown in Fig. 12(a). Then, in the aligned single-walled CNT aggregate of the invention, single-walled CNTs elongated from fine particles of catalyst on the base material are grown in the direction normal to the surface of a base material while forming a plurality of bundles where several to several tens of CNTs are touching to each other each as shown in Fig. 13. As a result of such a wide outer diameter distribution of the single-walled CNT constituting the aligned single-walled CNT aggregate, the single-walled CNTs are adjacent to the single-walled CNTs having different outer diameter distributions. Accordingly, a gap through which nitrogen atoms can diffuse is formed between CNTs resulting in a high specific surface area. That is, large average outer diameter and a broad outer diameter distribution range of the single-walled CNT are suitable for obtaining a high specific surface area.

For the range of the average outer diameter and the full-width at half maximum of the single-walled CNTs desired for obtaining an aligned single-walled CNT aggregate of high specific surface area, the average outer diameter is 1.5 nm or more and 4 nm or less, and the full-width at half maximum is 1 nm or more.

In a case where the average outer diameter of the CNT exceeds 4 nm, since the amount of the multi-walled CNT increases, the specific surface area decreases. Further, in a case where the average outer diameter of the CNT exceeds 4 nm, since the single-walled CNT tends to be deformed into a flattened shape, the specific surface area when opened is decreased. In a case where the average outer diameter of the CNT is less than 1.5 nm, since many CNTs are touching each other with no gaps tending to form a large bundle, the specific surface area decreases. Further, in a case where the full-width at half maximum is less than 1 nm, that is, the outer diameter of CNT constituting the aligned single-walled CNT aggregate becomes uniform, since a number of CNTs are also adhered to each other with no gaps tending to form a large bundle, this causes decrease of the specific surface area. The upper limit of the full-width at half maximum is the value twice the average outer diameter.

On the contrary, as shown in Fig. 12(b), in an existent aligned single-walled CNT aggregate having a small average outer diameter (less than 1.5 nm), a narrow outer diameter distribution range (full-width at half maximum: less than 0.5 nm), and a high linearity (G/D ratio of 50 or more), it usually tends to form a bundle where the single-walled CNTs are closely packed by the number of several hundreds to several tens thousand. In this case, nitrogen atoms cannot diffuse through the gap between each of the CNTs in the bundle to decrease the specific surface area. For example, according to the description of The Journal of Carbon, vol. 41, pp 1273-1280 (2003), the HiPco single-walled CNT produced by Carbon Nanotechnologies Co. has an average outer diameter of about 0.75 nm, a full-width at half maximum of less than 0.5 nm and a high linearity. According to the description of The Journal of Nano Letters, vol. 2, pp 385 to 388 (2002), the specific surface area of such HiPco single-walled CNT is 861 $m^2/g$ even when the opening treatment is applied.

The values determined based on a histogram which is prepared by measuring the outer diameter for individual CNTs from TEM images of CNTs constituting the aligned single-walled CNT aggregate of the invention as shown in Fig. 11 were regarded as the average outer diameter and the full-width at half maximum. Fig. 14 shows an example for the average outer diameter and the full-width at half maximum of the single-walled CNT in the aligned single-walled CNT aggregate produced according to Example 2 of the invention obtained as described above. In the case of this example, the outer diameter distributes over a range of 0.8 to 4.5 nm, the average outer diameter is 2.8 nm, and the full-width at half maximum is 2 nm. The average outer diameter and the full-width at half maximum can be controlled by the preparation of fine particles of catalyst.

Fig. 15 shows the result of measurement for the average outer diameter and the full-width at half maximum of the single-walled CNT in the aligned single-walled CNT aggregate formed by placing base materials each having a iron catalyst layer thickness of 1.3 nm at three places different from each other in a synthesis furnace (near the center, 4 cm to the downstream, 8 cm to the downstream) for a growth time of 5 min (average outer diameter: 2.1 nm, 2.3 nm, 2.5 nm, full-width at half maximum: 2 nm, outer diameter distribution: 1 to 4 nm) , and Fig. 16 shows the result of measurement for the average outer diameter and the full-width at half maximum of the single-walled CNT in the aligned single-walled CNT aggregate in a case of defining the iron catalyst layer thickness to 0.8 nm (average outer diameter: 1.7 nm, full-width at half maximum: 1.6 nm, average outer diameter: 1.8 nm, full-width at half maximum: 1.8 nm, outer diameter distribution: 0.8 to 3.5 nm). Further, Fig. 17 shows the result of measurement for the average outer diameter and the full-width at half maximum of the single-walled CNT in the aligned single-walled CNT aggregate in a case of defining the thickness of the catalyst to 1.3 nm (average outer diameter: 2.5 nm, full-width at half maximum: 3 nm, outer diameter distribution: 0.5 to 5 nm).

From the result of the measurement, it was found that the aligned single-walled CNT aggregate of the invention can be formed within a range of the average outer diameter of from 1.7 to 2.8 nm and within a range of the full-width at half maximum of from 1.6 to 3 nm.

4. Linearity (crystallinity) of single-walled CNT is low.

The linearity (crystallinity) of a single-walled CNT can be evaluated by the G/D ratio for Raman spectrum to be described later specifically, and a preferred range for the linearity (crystallinity) of the single-walled CNT of the G/D ratio for obtaining an aligned single-walled CNT aggregate of a high specific surface area is 1 or more and 50 or less.

A CNT with the G/D ratio of less than 1 has low crystallinity of the single-walled CNT and suffers from high level of amorphous carbon and, in addition, it is considered that the content of multi-walled CNTs is large. On the contrary, a CNT with the G/D ratio exceeding 50 has a high linearity and tends to form a large bundle with less gap for the single-walled CNT and the specific surface area may possibly be decreased.

Fig. 18 to Fig. 20 show examples of Raman spectral data for aligned single-walled CNT aggregates of the invention. Fig. 18 shows the result of measurement of Raman spectroscopy for the aligned single-walled CNT aggregate formed by the method of Example 1 to be described later for a growth time of 10 min, Fig. 19 shows that for the aligned single-walled CNT aggregate by the method of Example 2 to be described later formed for the growth time of 1 min. Fig. 20 shows the result of measurement of Raman spectroscopy for the aligned single-walled CNT aggregate produced with the addition amount of water as the catalyst activating material being decreased to one-half in the method of Example 2.

In Fig. 18, a sharp G band peak is observed near 1590 Kaiser which means that a graphitic hexagonal carbon ring structure is present in the CNTs constituting the aligned single-walled CNT aggregate of the invention. Further, a D band peak attributable, for example, to defect structure is observed near 1340 Kaiser. Further, since an RBM mode attributable to a plurality of single-walled CNTs is observed on the side of low wavenumber (100 to 300 Kaiser), it can be seen that the graphite layer is a single-walled CNT.

The intensity ratio between the G band and the D band (G/D ratio) is 15 for those shown in Fig. 18, 25 for those shown in Fig. 19, and 2.5 for those shown in Fig. 20, and it is shown that defects significant to these CNT are contained. When TEM images (Fig. 11) were observed, it can be seen that the single-walled CNT of the invention is bent or deformed or buckled, and thus have low linearity.

On the contrary, according to the description in the Journal of J. Phys. Chem. B, vol. 110, p 5849-5853 (2006), the G/D ratio of a high quality single-walled CNT with high linearity and not containing defect structure is generally 50 or more and sometimes 200 or more.

From the abovementioned discussion, it is considered that the G/D ratio can be defined as an evaluation index for the linearity of CNT.

It is preferred that the aligned single-walled CNT aggregate of the invention satisfies the four conditions described above, i.e., 1) the aligned CNT aggregate is constituted by single-walled CNTs, 2) the single-walled CNTs constituting the aligned CNT aggregate are highly pyre, 3) the average outer diameter of the single-walled CNTs constituting the aligned CNT aggregate is 1.5 nm or more and 4 nm or less, and the full-width at half maximum representing the outer diameter distribution range is lager than 1 nm, and 4) the linearity (crystallinity) of the single-walled CNT is low, but it is not always necessary to satisfy all of these conditions for obtaining a high specific surface area and it may suffice to satisfy only a few of the conditions properly.

[Alignment property of CNT]

The evaluation of the alignment of the single-walled CNT aggregate is made on the basis of Herman's orientation factor. Its specific method will be described. Herman's orientation factor calculated by using the X-ray diffraction intensity obtained by the θ-2θ method or the Laue method, or the intensity profile obtained from FFT images obtained by fast Fourier transformation (FFT transformation) of SEM images or atomic force microscopic (hereinafter referred to also as AFM) images is more than 0.1 and, less than 1 and in the aligned single-walled CNT aggregate of the invention.

The aligned single-walled CNT aggregate within a range of such alignment shows good electric property, good mechanical property, and good thermal property, also has an electric, mechanical or thermal anisotropy, and is suitable to various application uses. In addition, the aligned single-walled CNT aggregate within a range of such alignment, when subjected to a density growth treatment described later, allows the adjacent single-walled CNTs to be filled at a high density without any gaps, thus enabling the processing into various shapes.

The direction of the alignment is the average of the directional vectors of individual single-walled CNTs constituting an aligned single-walled CNT aggregate. Accordingly, depending on the place of the aligned single-walled CNT aggregate or the size of the region to be evaluated for the alignment property, the direction of the alignment may vary. In order to determine the direction of the alignment quantitatively, it is favorable to employ an FFT image obtained by subjecting the SEM image and the like of the aligned single-walled CNT aggregate to a fast Fourier transformation. The FFT image of the aligned single-walled CNT aggregate having an alignment property is in a flat and ellipsoidal shape, and a flatter ellipsoid exhibits a higher alignment property. The direction of the longitudinal axis of the ellipsoid is the direction allowing the periodicity of the single-walled CNT resulting from the alignment property to become maximum, while the direction of the widthwise axis of the ellipsoid is the direction of the alignment in the vision of the original image of the FFT image. The reference direction for calculating the Herman's orientation factor is the longitudinal axis of the ellipsoid.

When the Herman's orientation factor is 0.1 or more, the effect of the alignment becomes evident. A Herman's orientation factor greater than 0.25 leads to a marked increase in the alignment property of the aligned single-walled CNT aggregate. This is due to a slope of the CNT which is 45 degrees or more when the Herman's orientation factor is 0.25, which allows the effect of the alignment to be increased. Further, the aligned single-walled CNT aggregate with the Herman's orientation factor of 1 is perfectly aligned.

For the aligned single-walled CNT aggregate to show a good degree of alignment, it is preferred that the aligned single-walled CNT aggregate has a height (length) within a range of 10 μm or more and 10 cm or less. The aligned single-walled CNT aggregate within the range of the height has a good degree of alignment. In a case where the height is less than 10 μm, the degree of alignment decreases. Further, in the aggregate with the height exceeding 10 cm, the alignment property near the base material tends to be reduced.

The alignment property of the aligned single-walled CNT aggregate, the bulk single-walled CNT aggregate and the powdered aligned single-walled CNT aggregate can be evaluated by the following methods.

(1) Evaluation for alignment property by an X-ray diffraction (θ-2θ method)

Fig. 21 shows a set up state of an X-ray diffraction apparatus by a θ-2θ method. In the constitution described above, when X-ray diffraction spectrum is measured for an object having the alignment property both for the case where X-rays are incident from the first direction parallel with the alignment direction (hereinafter referred to as parallel incidence) and for the case where X-rays are incident from the second direction perpendicular to the alignment direction (hereinafter referred to as perpendicular incidence), an angle θ and a reflection direction where the reflection intensity of the perpendicularly incidence is larger than the reflection intensity of the parallel incidence are present, and an angle θ and a reflection direction where the reflection intensity of the parallel incidence is larger than the reflection intensity of the perpendicular incidence are present.

In the aligned single-walled CNT aggregate of the invention, as shown in Fig. 22 to Fig. 24, for the peak diffraction intensity of X-ray diffraction spectrum of parallel incidence, (CP=close-packing) and (002) attributable to the packing between the single-walled CNTs are higher than the perpendicular incidence, and (100) and (110) attributable to the hexagonal carbon ring structure that constitute the single-walled CNT are lower than the perpendicular incidence. Further, for the peak diffraction intensity of the X-ray diffraction spectrum of perpendicularly incidence, (CP) and (002) are lower than the parallel incidence and (100) and (110) are higher than the parallel incidence.

As described above, in the aligned single-walled CNT aggregate of the invention, the peak diffraction intensity at (CP) and (002) and the peak diffraction intensity at (100) and (110) change greatly when the incidence direction of X-rays changes. Since the diffraction intensity does not change depending on the incident direction of X-rays in a case of a completely isotropic (non-alignment) object, this shows that the aligned single-walled CNT aggregate of the invention has anisotropy, in other words, has a high alignment property.

Table 1 shows the result of comparing the intensity ratio for each of diffraction peaks depending on the incident direction of X-rays between the aligned single-walled CNT structure (aggregate) of the invention and the not-aligned CNT structure (aggregate).

[Table 1]

| DIFFRACTION EAK | ALIGNED CNT STRUCTURE(lp:ln) | NOT-ALIGNED CNT STRUCTURE (lp:ln) |
|---|---|---|
| (CP) | - 2:1 | 1:1 |
| (002) | 9:1 | 1:1 |
| (100) | 1:4.5 | 1:1 |
| (110) | 1:3 | 1:1 |
| lp=diffraction peak intensity in the direction of parallel incidence<br>In=diffraction peak intensity in the direction of perpendicular incidence | | |

(2) Evaluation for alignment property by X-ray diffraction (Laue method)

Fig. 25 shows a set up state of an X-ray diffraction apparatus by the Laue method. In the Laue method, a circular columnar sample of an aligned single-walled CNT aggregate is rotated on an axis parallel to the alignment direction, and X-rays passing through a pinhole collimator of 0.5 mm diameter are irradiated to the sample in the direction perpendicular to the alignment direction and refraction pattern images were focused on a CCD panel.

As a result, as shown in Fig. 26, pattern images for refraction peaks such as (CP), (002), (100) of a powdered aligned single-walled CNT aggregate according to the invention formed an elliptic shape. Since Laue diffraction pattern images of a completely isometric object form a perfect circular shape, this shows that the aligned single-walled CNT aggregate according to the invention has an anisotropy, that is, the aggregate is aligned.

(3) Evaluation for alignment property by Fast Fourier Transformation images.

Fig. 27 shows fast Fourier transformation (hereinafter also referred to as FFT) images of the scanning electron microscopic images in Fig. 5 of a powdered aligned single-walled CNT aggregate. In Fig. 27, the intensity of the FFT images is in flattened ellipsoidal shape having its longitudinal axis as abscissa axis. This shows that the alignment property is higher as the elongated shape is flattened more. Fig. 28 shows the diffraction intensity profile ($\phi$) when varying from $\phi=0$ (reference direction) to $\phi=\pi/2$ by keeping the distance from the origin of the FFT images constant. The reference direction employed herein is the longitudinal direction of the ellipsoid. The Herman's orientation factor calculated using the widthwise direction as a reference direction becomes a negative value, and in the case of this invention it is between -0.05 and -0.5.

(4) Evaluation for alignment property by Herman's orientation factor

The orientation factor of a single-walled CNT aggregate can be evaluated quantitatively calculating the Herman's orientation factor.

Herman's orientation factor F is defined by the following equation.

[Equation 1]

$$F \equiv \frac{1}{2}\left(3\left\langle \cos^2 \phi \right\rangle - 1\right)$$

$$\left\langle \cos^2 \phi \right\rangle = \frac{\int_0^{\pi/2} I(\phi) \cos^2 \phi \sin \phi d\phi}{\int_0^{\pi/2} I(\phi) \sin \phi d\phi}$$

where $\phi$ is an azimuthal angle with $\phi=0$ as a reference (standard) azimuth and $I(\phi)$ is a diffraction intensity profile.

In the Herman's orientation factor, F=1 for complete alignment and F=0 for non-alignment in the direction: $\phi=0$.

At first, the diffraction intensity profile $I(\phi)$ is determined. For this purpose, in a $\theta$-$2\theta$ normal X-ray diffraction apparatus, the X-ray detector is fixed at an angle $2\theta$ corresponding to a specific diffraction intensity, then the sample is rotated from angle $\theta$ (corresponding to an diffraction peak, defining $\phi=0$) by an angle $\phi$ (refer to Fig. 21 (b)). Thus, an X-ray diffraction intensity profile $I(\phi)$ as a function of $\phi$ is obtained (refer to Fig. 29).

The Herman's orientation factor F is determined by calculating equation described above using as a variable the X-ray diffraction intensity profile $I(\phi)$ from $\phi=0$ to $\phi=\pi/2$ excluding the background (zero base line). Thus, the alignment degree for the direction: $\phi=0$ can be evaluated quantitatively.

In a case of determining the diffraction intensity profile $I(\phi)$ by the Laue method, the Herman's orientation factor F is determined by determining a diffraction intensity profile from the reference direction ($\phi=0$) to $\phi=\pi/2$ in the radial direction while keeping an equal distance from the original point in 2-dimensional diffraction pattern images (refer to Fig. 30), and calculating the equation described above. Thus, the alignment degree for the direction: $\phi=0$ can be evaluated quantitatively.

The alignment property can be evaluated quantitatively also by calculating the Herman's orientation factor using the intensity profiles taken from the FFT images (Fig. 27) based on SEM images, etc. of an aligned single-walled CNT aggregate. In this case, the intensity profile is determined from the reference direction ($\phi=0$) to $\phi=\pi/2$ in the radiation direction while keeping an equal distance from the center of FFT images, and this is defined as a diffraction intensity profile (Fig. 28). The diffraction intensity profile shows the profile of the periodicity corresponds to the azimuthal distance beginning from the center on the FFT image. For example, the distance in real space corresponding to the distance of $30 \times 10^{13}$Hz from the center of FFT images is 100 nm. By calculating the equation described above using the diffraction intensity profile, the alignment degree in the reference direction can be evaluated quantitatively.

[Weight density]

The weight density of the aligned single-walled CNT aggregate of the invention is from 0.002 to 0.2 g/cm$^3$. The aligned single-walled CNT aggregate within such a range of the weight density is extremely excellent in the shape processability and can be processed into various shapes (this is to be described later specifically). The weight density can be controlled by conditioning the number density of fine catalyst particles. By the way, Fig. 31 shows a relation between the addition amount of the fine catalyst particle (addition amount of the solvent dissolving the fine catalyst particle) in the aligned single-walled CNT aggregate produced under the conditions of Example 1 to be described later by using a fine iron catalyst particle synthesized as a catalyst by the method described in the Journal of Chem. Mater., vol. 13 (2001) p1008 and the weight density of the aligned single-walled CNT aggregate. It can be seen that the weight density of the aligned single-walled CNT aggregate can be controlled by changing the addition amount of the fine catalyst particle.

Fig. 32 shows an example of a relation between the growing height, and the weight and the density of the aligned single-walled CNT aggregate of the invention. It can be seen from the graph that the weight is increased in proportion to the growing height and the structure of the aligned single-walled CNT aggregate is homogeneous irrespective of the growing height. Then, assuming the weight density as the volume of the aligned single-walled CNT aggregate divided by the weight thereof, it can be seen that the weight density is substantially constant (0.036 g/cm$^3$) irrespective of the growing height. The weight of the aligned single-walled CNT aggregate provided on a base material is evaluated by obtaining the difference between the weight of the base material before providing the aligned single-walled CNT aggregate on the base material and the weight of the base material after providing the aligned single-walled CNT aggregate. Alternatively, the weight may be calculated by peeling the aligned single-walled CNT aggregate off from the base material.

In a case where the weight density of the single-walled CNT aggregate is within a range from 0.002 g/cm$^3$ to 0.2 g/cm$^3$, adjacent CNTs can be filled with no gaps to each other at a high density by applying a density growth treatment after the formation. In this case, by controlling the density growth treatment step by utilizing a method, for example, described in the Nature Material, vol. 5 (2006), p 987 to 994, the aligned single-walled CNT aggregate can be formed into various forms, for example, a film shape with high density. In addition, since a weight density within this range prevents the binding between the CNTs constituting the aligned single-walled CNT aggregate from being strong excessively, the aligned single-walled CNT aggregate can readily be dispersed uniformly when being stirred in a solvent and the like.

Further, when the weight density is within the range described above, since bonding between CNTs to each other constituting the aligned single-walled CNT aggregate is not strengthened excessively, the aligned single-walled CNT aggregates can be easily dispersed homogeneously when they are stirred in a solvent or the like. In a case where the weight density exceeds 0.2 g/cm$^3$, not only a homogeneous liquid dispersion is difficult to obtain but also the rigidity and the integrity of the aligned single-walled CNT aggregate become excessive making it difficult to form the same into various shapes by applying the density growth treatment after the formation. Further, in a case where the weight density is less than 0.002 g/cm$^3$, since the aligned single-walled CNT aggregate loses the integrity and tends to be disintegrated, the shape processing becomes almost impossible.

A further reason that the aligned single-walled CNT aggregate of the invention has excellent shape processability is considered to be that the single-walled CNTs in the aligned single-walled CNT aggregate of the invention do not form an excessively large bundle and, as shown in Fig. 13, several to several tens of single-walled CNTs stand vertically closing to each other, adjacent single-walled CNTs are bonded extremely moderately to each other, and a nano-size gap (fine pore) is present between each of the single-walled CNTs. Since the nano-size gap (fine pore) is present between each of the single-walled CNTs, the weight density of the aligned single-walled CNT aggregate of the invention is lowered. Then, the fine pore between each of the single-walled CNTs not only facilitates the homogeneous dispersion described above but also enables the density growth treatment by the reduction of the fine pore diameter.

The nano-sized fine pore diameter between each of the single-walled CNTs can be determined based on the adsorption/desorption isothermal curve for liquid nitrogen at 77K. As the theoretical formula for determining the fine pore diameter distribution, a BJH method (refer to Journal of J. Amer. Chem. Soc. vol. 73 (1951), p 373) assuming the fine pore as a cylindrical shape is used preferably. The fine pore diameter distribution defined in the present specification is determined according to the BJH method based on the adsorption/desorption isothermal curve for liquid nitrogen at 77K.

The aligned single-walled CNT aggregate whose fine pore diameter determined according to the BJH method is distributed mainly not larger than 100 nm and whose distribution maximum is within a range of 5 nm or more and 100 nm or less allows the single-walled CNTs adjacent to each other to be bound very loosely and has excellent shape processability, while it has a high specific surface area since a gas can readily be diffused between the fine pores. When the distribution maximum of the fine pore diameter is less than 5 nm, the bonding force between each of the single-walled CNTs becomes strong, thus failing to show a favorable dispersibility and, in addition, processing to various shapes by applying the density growth treatment becomes difficult. On the contrary, in a case where the population of gaps having the fine pore diameter exceeding 100 nm is large, since the bonding force between each of the single walled CNTs is weak and the aligned single-walled CNT aggregate loses the integrity and tends to be disintegrated, the shape processing becomes almost impossible.

[Production apparatus for aligned single-walled CNT aggregate]

Known CVD method and known CNT production apparatus can be applied to the production of the aligned single-walled CNT aggregate according to the invention. A plurality of catalyst fine particles are provided on the base material, and a plurality of CNTs are grown by chemically vapor deposited (CVD) from this plurality of catalyst fine particles.

The CNT production apparatus used for practicing the invention essentially has a synthesis furnace for accommodating a base material that supports the catalyst (reaction chamber) and heating means but the structure and the constitution for each of the portions are not particularly restricted, and known CNT production apparatuses can be used.

Fig. 34 shows an example of a CVD apparatus applied to the invention. A CVD apparatus 31 has a tubular synthesis furnace 33 made, for example, of quartz glass or heat resistant metal for accommodating a base material (substrate) 32 that supports the catalyst and appropriate heating means 34 comprising, for example, ohmic heat generation coils disposed so as to externally surround the synthesis furnace 33.

A gas supply pipe 35 opened to the inside of the synthesis furnace 33 is connected to one end wall of the synthesis furnace 33, and a gas exhaust pipe 37 opened to the inside of the synthesis furnace 33 is connected to the other end wall of the synthesis furnace 33. Then, a source gas (carbon source gas) supply portion 39, a catalyst activating material supply portion 40, an atmospheric gas supply portion 41, and a reducing gas supply portion 42 are connected by way of a joining-branching pipeline 38 to the gas supply pipe 35.

A substrate holder 43 for holding the substrate 32 having the catalyst fine particles 32a is disposed at a lower position in the synthesis furnace 33.

Check valves, flow control valves, and flow sensors are disposed at appropriate positions to the gas supply pipe 35, the gas exhaust pipe 37, and each of the supply portions 39 to 42, and a source gas (carbon source gas), a catalyst activating material, an atmospheric gas, and a reducing gas are supplied each at a predetermined flow rate continuously or intermittently according to the reaction process from the gas supply pipe 35 to the inside of the synthesis furnace 33 by appropriate on-off control to each of the flow control valves by control signals from a not illustrated control device.

Another carrier gas supply portion (not illustrated in the drawing) is attached to the catalyst activating material supply portion 40, and the catalyst activating material is supplied together with a carrier gas, for example, helium.

According to the CVD apparatus 31 constructed as described above, each of the gases supplied by way of the joining-branching pipeline 38 can be sent from the opening of the gas supply pipe 35 to the inside of the synthesis furnace 33 and a plurality of CNTs can be grown substantially in one identical direction on the catalyst fine particles 32a of the substrate 32.

[Production process of aligned single-walled CNT aggregate]

The method of producing an aligned CNT according to the invention is to be described specifically with reference to Fig. 35 as below. As shown in Fig. 35, a substrate 32 (for example, silicon wafer) which is previously deposited with a catalyst layer (for example, thin aluminum-iron film) in a separate step and placed on a substrate holder 43 is transported into a synthetic furnace 33 which is filled with an atmospheric gas (for example, helium), a reducing gas (for example, hydrogen), etc. supplied from the gas supply pipe 35 (substrate transportation step S1), heated to a predetermined temperature (for example, 750°C), and kept at that temperature.

Then, a reducing gas (for example, hydrogen) is supplied from the gas supply pipe 35 to the inside of the synthetic furnace 33 for a desired time (formation step S2). The fine catalyst particles 32a are prepared to a state suitable to the growing of CNT by the reducing gas. By selecting an appropriate thickness for the catalyst layer and reducing reaction conditions, fine catalyst particles of several nm diameter can be prepared to a number density of $1.0 \times 10^{10}$ (N/cm$^2$) to $5.0 \times 10^{13}$ (N/cm$^2$). The number density is suitable to the growing of a plurality of CNTs aligned in a direction perpendicular to the substrate 32 and production of aligned single-walled CNT aggregates at a weight density of 0.002 g/cm$^3$ to 0.2 g/cm$^3$. In the formation step S2, the catalyst activating material may be added optionally.

Then, supply of the reducing gas and the atmospheric gas from the gas supply pipe 35 is optionally stopped or decreased (according to reaction conditions), and a catalyst activating material (for example, water) mixed in the atmospheric gas is supplied together with the source gas (for example, ethylene) from the gas supply pipe 35 on one side and brought into contact with the catalyst fine particles 32a of the substrate 32 (growth step S3). Thus, CNT is grown from the fine catalyst particles.

The plurality of CNTs grown simultaneously from the catalyst fine particles 32a of the substrate 32 as described above are grown in the direction perpendicular to the substrate 32 to form aligned CNT aggregates substantially aligned with a fairly constant height.

After the end of the growth step, only the atmospheric gas is supplied into the synthesis furnace 33 thereby exhausting the remaining source gas or the catalyst activating material (flushing step S4) and then the substrate 32 is recovered from the inside of the synthesis furnace 33 (substrate taking out step S5), thereby completing a series of CNT production steps.

By separating the thus obtained aligned single-walled CNT aggregate from the substrate as a unit, a bulk aligned single-walled CNT aggregate is obtained. Further, separating the thus obtained aligned single-walled CNT aggregate as a powder, a powdered aligned single-walled CNT aggregate is obtained.

Since the structure and the property such as the average diameter, the full-width at half maximum, the height, crystallinity, and the purity of the CNT and the specific surface area, the weight density, and the alignment degree of the aligned CNT aggregate to be produced, and the growth efficiency such as the growth lifetime and the growth rate greatly depend on the base material, the catalyst, the CVD apparatus used for the production of CNT and the process conditions such as the temperature, the time, and the reducing gas in the formation step, and process conditions such as the temperature, the time, the source gas, the catalyst activating material, the atmospheric pressure, the atmospheric gas, and the carbon concentration in the growth step, for attaining desired growth of CNT and producing CNT of a desired structure and the property, it is necessary to appropriately select and set each of the production conditions.

Various conditions described above are to be detailed as below.

[Base material (substrate)]

The base material (substrate) is a material capable of supporting a catalyst for growing CNT on the surface thereof and any appropriate material capable of maintaining a shape at a high temperature at least of 400˚C or higher can be used. Existent materials having performance in the production of CNT include metals such as iron, nickel, chromium, molybdenum, tungsten, titanium, aluminum, manganese, cobalt, copper, silver, gold, platinum, niobium, tantalum, lead, zinc, gallium, indium, germanium, arsenic, phosphorus, and antimony, as well as alloys and oxides containing such metals, or non-metals and ceramics such as silicon, quartz, magnesia, spinel, calcia, dolomite, chromia, zirconia, titania, mullite, glass, mica, graphite, alumina, magnesium oxide, potassium titanate, zirconium oxide, zeolite, silica, titanium oxide, and diamond and mixtures thereof. Compared with silicon or ceramics, metals are preferred since they are less expensive and, particularly, iron-chromium (Fe-Cr) alloy, iron-nickel (Fe-Ni) alloy, and iron-chromium-nickel (Fe-Cr-Ni) alloy, etc. are suitable to the practice of the invention.

For the shape of the base material, a plate shape is general and, in addition, thin film shape, block shape, powdery (granular) or linear (wire/rod/line) shape may also be used and, particularly, those shape capable of having large surface area with respect to the volume are advantageous in mass production. This invention is applicable also to flat particles (flaky or disc shape) or elongate particles (cylindrical, bar, or ribbon shape) in view of macro shape. Specifically, they include, for example, plate alumina, quartz flake, quartz fiber, ceramic fiber and fibrous titanium oxide. Particularly, granular shaped (powder/bead) base material or linear shaped (wire) base material is suitable as the base material since the catalyst can uniformly be coated easily and handled with ease and a large surface area can be available with respect to the volume. Further, aggregates, for example, of granular shaped base material (beads) or linear base materials, for example a mesh, having a thickness or size to some extent can take a large area for the catalyst layer per planar area (area of surface defined by longitudinal and lateral directions of a space occupied by the base material) and can easily produce a great amount of aligned CNT aggregates compared with the flat plate-like base material. Further, the granular shaped base material can be applied to a fluidizing bed.

There is no particular restriction on the size of the base material in a case of using the granular shaped base material or the linear shaped base material as the substrate. However, since it is not easy to produce an aligned CNT aggregate of a height remarkably exceeding the average diameter of the base material, the average diameter of the substrate, that is, the granular shaped base material or the linear shaped base material is preferably 10 $\mu$m or more and 1 cm or less. In a case of using the granular shaped base material or the linear shaped base material having an average diameter within the range described above, an aligned CNT aggregate having a height of several tens $\mu$m or more can be produced. On the contrary, it is difficult to produce an aligned CNT aggregate having a height of tens $\mu$m or more in a case where the average diameter of the base material is less than 10 $\mu$m. It is difficult to uniformly supply the source gas and the catalyst activating material over the entire surface of the base material in a case of supplying the source gas and the catalyst activating substance by using, for example, a shower head in a case where the average diameter of the base material exceeds 1 cm. Accordingly, it is difficult to produce the aligned CNT aggregate at a high efficiency in both of the cases.

Since such an aligned CNT aggregate produced using a granular shaped base material or a linear shaped base material as a base material is bound weakly to the substrate when compared with an aligned CNT aggregate produced on a plate base material, and can be peeled off from the substrate more easily, it is preferred when producing a bulk or powdered aligned CNT aggregate. Also since the individual single-walled CNTs constituting the aggregate are bound weakly to each other and can readily be dispersed in a solvent and the like, a superior dispersibility, hence shape-processability, can be achieved when compared with an aligned CNT aggregate produced on the plate base material,

In addition, when the average diameter of the granular shaped base material or the linear shaped base material is 10 $\mu$m or more and 1 cm or less, it is possible not only to produce an aligned CNT aggregate preferably but also to obtain a bulk or powdered aligned CNT aggregate because the aligned CNT aggregate can readily be peeled off from the base material upon abrasion among the granular shaped base material or the linear shaped base material due to a large contact area among the granular shaped base material or the linear shaped base material. On the contrary, when the average diameter of the granular shaped base material or the linear shaped base material exceeds 1 cm, the contact area among the granular shaped base material or the linear shaped base material becomes small, and the performance of peeling of the aligned CNT aggregate off from the base material upon abrasion among the granular shaped base material or the linear shaped base material is reduced. Also when the average diameter of the granular shaped base material or the linear shaped base material is less than 10 $\mu$m, then the aligned CNT aggregate cannot be produced efficiently, and the performance of peeling off from the base material is also reduced.

[Catalyst]

As the catalyst supported on the base material in the practice of the invention, any of existent materials having performance in the production of the CNT can be used and, specifically, they may be iron, nickel, cobalt, molybdenum, and chlorides and alloys thereof. Such materials may be further composited or stacked with aluminum, alumina, titania, titanium nitride or silicon oxide. Particularly preferred catalyst includes, for example, a thin iron-molybdenum film, a thin alumina-iron film, a thin alumina-cobalt film, a thin alumina-iron-molybdenum film, a thin aluminum-iron film, and a thin aluminum-iron-molybdenum film.

Since the element and the constitution of the catalyst give a significant effect on the weight density, the specific surface area, the average outer diameter, and the production yield of the CNT to be produced, appropriate selection of the catalyst is extremely important for producing a desired CNT. Particularly, iron or nickel-containing metal catalysts supported on alumina are suitable to the production of an aligned single-walled CNT aggregate having a specific surface area of 600 $m^2$/g to 2600 $m^2$/g, a weight density of from 0.002 g/$cm^3$ to 0.2 g/$cm^3$ and a Herman's orientation factor of larger than 0.1 and smaller than 1.

The existent amount of the catalyst in the practice of the invention may be within a range having performance for the existent production of CNT. For example, in a case of using a thin metal film of iron or nickel, the thickness is preferably 0.1 nm or more and 100 nm or less, more preferably, 0.5 nm or more and 5 nm or less and, particularly preferably, 0.8 nm or more and 2 nm or less. Particularly, in a case where the thickness is 0.8 nm or more and 2 nm or less, an aligned single-walled CNT can be selectively synthesized, this is suitable to the production of an aligned CNT aggregate having a specific surface area of 600 $m^2$/g to 2600 $m^2$/g, a weight density of from 0.002 g/$cm^3$ to 0.2 g/$cm^3$ and a Herman's orientation factor of greater than 0.1 and smaller than 1.

[Catalyst forming method]

For the formation of the catalyst layer to the surface of the base material, either a wet process or a dry process can be applied. Specifically, a sputtering vapor deposition method or a method of coating and baking a liquid in which fine metal particles are disposed in an appropriate solvent is applicable. Further, a catalyst layer of any shape can be employed by using, patterning that applies well-known photolithography in combination. The shape of the aligned single-walled CNT aggregate can be optionally controlled, for example, as a film shape, a circular cylindrical shape, a square cylindrical shape and other complicate shapes depending on the patterning of the catalyst deposited on the base material and the growth time of CNT.

A patterned aligned single-walled CNT aggregate allows, for example, its length and the lateral size, to be optionally controlled by the patterning of the catalyst and the size for the height can be optionally controlled depending on the growing time of each single-walled CNT that constitutes the aligned single-walled CNT aggregate. Thus, when using patterning, an aligned single-walled CNT aggregate having a desired shape can be obtained, and the processability can remarkably be enhanced. For example, an aligned single-walled CNT aggregate made into a thin film by patterning can readily be peeled off from the base material, and can then be provided on any substrate while maintaining the integrity, and thus is suitable as a material for producing various devices.

[Formation step]

The formation step is a step of using a reducing gas for the surrounding circumstance of the catalyst supported on the base material and heating at least one of the catalyst or the reducing gas. The step provides at least one of the effects of reducing the catalyst, promoting fine particulation of the catalyst to a state suitable for the growth of CNT of the catalyst layer, and improving the activity of the catalyst. For example, in a case where the catalyst is a thin alumina-iron film, the iron catalyst layer is reduced and finely particulated on an alumina layer to form a number of fine iron particles of nanometer size.

When CNTs are grown from the catalyst fine particles thus prepared while adding a catalyst-activating material, it is possible to grow CNTs at a probability as high as 85%. Generally, single CNT is grown from single catalyst fine particle, and the outer diameters of the catalyst fine particles and the growing CNTs are almost the same.

Upon this, by adjusting thickness of catalyst layer and the condition of the formation step while adjusting the number density of the catalyst fine particles at $1 \times 10^{10}$ to $5 \times 10^{13}$ N/$cm^2$, a single-walled CNTs whose average outer diameter is 1.5 nm to 4.0 nm and whose full-width at half maximum is 1 nm or more can selectively be synthesized, and CNTs can be grown at an appropriate density, whereby producing CNTs whose Herman's orientation factor is larger than 0.1 and smaller than 1 preferably within a range of the weight density of 0.002g/$cm^3$ to 0.2 g/$cm^3$.

When the number density of the catalyst fine particles herein is less than $1 \times 10^{10}$ N/$cm^2$, the weight density is less than 0.002 g/$cm^3$ even if a single-walled carbon nanotube (4.0 nm in diameter) is grown efficiently from the catalyst fine particles, resulting in a difficulty in forming an aligned single-walled CNT aggregated having an integrity as well as a deterioration of the alignment property. In addition, the number density $5 \times 10^{13}$ N/cm$^2$ of the catalyst fine particles is a value corresponding to the monolayer of the fine catalyst particles whose average diameter is 1.5 nm covering the entire surface, at a density of the catalyst exceeding which the catalysts tend to be fused with each other, resulting in a failure in controlling the number density and the outer diameter of the catalyst.

Thus, such a formation step for achieving fine particles in the catalyst layer while adjusting the number density of the catalyst fine particles within a range from $1 \times 10^{10}$ to $5 \times 10^{13}$ N/cm$^2$ provides a remarkable effect for selectively producing a single-walled CNT, as well as for producing an aligned CNT aggregate having a specific surface area of from 600 m$^2$/g to 2600 m$^2$/g, a weight density of from 0.002 g/cm$^3$ to 0.2 g/cm$^3$ and a Herman's orientation factor of larger than 0.1 and smaller than 1.

[Growth step]

The growth step is a step of growing CNT on the surface of the catalyst by providing a source gas to the surrounding circumstance of the catalyst and heating at least one of the catalyst and the source gas. The growth step applied after the formation step is suitable to the production of the aligned CNT aggregate.

[Cooling step]

The cooling step is a step of cooling the aligned CNT aggregate, the catalyst, and the base material after the growth step. Since the aligned CNT aggregate, the catalyst, and the base material after the growth step are in a high temperature state, they may possibly be oxidized when placed under the circumstance where oxygen is present. For preventing oxidation, the aligned CNT aggregate, the catalyst, and the base material are cooled to 400˚C or lower and, more preferably, 200˚C or lower in a cooling gas circumstance. As the cooling gas, an inert gas is preferred and nitrogen is particularly preferred with a view point of safety, economicity, and purging performance.

[Reducing gas]

The reducing gas used in the formation step is a gas having at least one of the effects of reducing the catalyst, promoting fine particulation of the catalyst to a state suitable to the growing of the CNT, and improving the catalytic activity. For the reducing gas used in the practice of the invention, any reducing gas may be used so long as it is a reducing gas having performance in the existent production of CNT and, for example, hydrogen, ammonia, steams, and a gas mixture thereof may be applied. Further, a gas mixture of hydrogen mixed with an inert gas such as helium, argon or nitrogen may also be used. Further, the reducing gas may be used not only in the formation step but also properly in the growth step.

[Atmospheric gas]

As the atmospheric gas (carrier gas) in CVD, any gas may be used which is inert at a growing temperature of CNT and not reactive with a growing CNT and any atmospheric gas can be used properly as long as it has performance in the existent production of CNT. Generally, an inert gas is preferred and includes, for example, helium, argon, hydrogen, nitrogen, neon, krypton, carbon dioxide, or chlorine, or a gas mixture thereof. Nitrogen, helium, argon, hydrogen, and a gas mixture thereof are particularly preferred.

[Source gas]

The source gas (carbon source gas) used for the production of CNT in the practice of the invention may be any material so long as it has performance in the existent production of CNT and appropriate gaseous material containing carbon at a growing temperature can be used.

The source gas may an include, for example, gaseous carbon compounds such as aromatic compounds, saturated hydrocarbons, unsaturated hydrocarbon, unsaturated linear hydrocarbons, saturated linear hydrocarbons, unsaturated cyclic hydrocarbons, and saturated cyclic hydrocarbons. Among them, hydrocarbons such as methane, ethane, propane, butane, pentane, hexane, heptane, propylene, ethylene, butadiene, polyacetylene, and acetylene are suitable. In addition, oxygen-containing compounds with less numbers of carbon atoms, for example, lower alcohols such as methanol and ethanol, acetone, or carbon monoxide may also be used. Further, a mixture of them may also be used. The source gas may be diluted with an inert gas. CNT is formed on the catalyst surface when the source gas is brought into contact with the catalyst in the growth step.

[Atmospheric pressure] $10^4$

The pressure of the atmosphere for growing CNT is preferably $10^4$ Pa or higher and $10^6$ Pa or lower (10 atm), more preferably, $5 \times 10^4$ Pa or higher and $2 \times 10^5$ Pa or lower (2 atm) and, particularly preferably, $9 \times 10^4$ Pa or higher and $1.1 \times 10^5$ Pa or lower. The CNT production efficiency is extremely favorable at an atmospheric pressure or a pressure close to the atmospheric pressure between $9 \times 10^4$ Pa or higher and $1.1 \times 10^5$ Pa, without using vacuum or high pressure. Further, since the open system production apparatus not using a shutter or a valve can be used, this is preferred also with a view point of mass production.

[Addition of catalyst activating material]

In the CNT growth step, the catalyst activating material is added preferably. Addition of the catalyst activating material can extend the life and improve the activity of the catalyst and, as a result, can promote improvement of the production efficiency and of the purity of CNT. Due to the effect of improving the activity of the catalyst and extending the catalyst life (catalyst activation effect) by the addition of the catalyst activating material, growing of CNT, which was completed only in about 2 min can be continued for several tens minutes and, in addition, the growth rate is increased to 100 times or more and, further, 1000 times or more compared with the existent case. As a result, an aligned CNT aggregate remarkably increased in height can be obtained.

The catalyst activating material used herein may be any material so long as it is a material containing oxygen and not giving remarkable damage on CNT at a growing temperature and effective material include, water, oxygen, ozone, acidic gas, oxygen-containing compounds with less number of carbon atoms such as nitrogen oxides, carbon monoxide, and carbon dioxide, or alcohols such as ethanol, methanol, and isopropanol, ethers such as tetrahydrofuran, ketones such as acetone, aldehydes, acids, salts, amides, esters, as well as mixtures thereof. Among them, water, oxygen, carbon dioxide, carbon monoxide, ethers, and alcohols are preferred. Particularly, easily available water is suitable.

[Mechanism of the effect of catalyst activating material]

At present, the mechanism of the effect of the catalyst activating material is considered as below. In the CNT growing process, amorphous carbon, graphite, etc. are formed additionally and, when they are deposited to the catalyst, the catalyst is deactivated. The catalyst activating material oxidizes the by-products which inactivated the catalyst and gasifies them into carbon monoxide or carbon dioxide, whereby cleaning the catalyst. It is considered that the catalyst activity is enhanced and the catalyst life is prolonged as a result. That is, the catalyst activating material may be any material having the function described above and includes, those oxidative materials, for example, containing the group VI element such as sulfur in addition to the oxygen-containing materials.

[Amount of the supplying catalyst activating material]

There is an optimum value for the addition amount of the catalyst activating material. That is, in a case where the addition amount of the catalyst activating material is excessive, the excess catalyst activating material lowers the growth efficiency. On the contrary, in a case where the addition amount is insufficient, the effect of the catalyst activating material cannot be provided sufficiently. For improving the production efficiency of CNT, the ratio between the number concentration of carbon atoms contained in the source material and the number concentration of oxygen contained in the catalyst activating material is one of the most important factors. The optimum ratio between the number concentration of the carbon atoms and the number concentration of the oxygen atoms is different depending on the temperature in the growth step, the catalyst activating material and the source material to be used, and the catalyst to be used and, generally, it is preferably 0.5 or more and 2000 or less in terms of the ratio between the number concentration of the carbon atoms contained in the source gas and the number concentration of the oxygen atoms contained in the catalyst activating substance which are introduced into the synthesis furnace.

Further, the ratio between the number concentration of the carbon atoms contained in the source gas and the number concentration of the oxygen atoms contained in the catalyst activating material can be calculated as: {(concentration of source gas introduced) $\times$ (number of carbon atoms contained in the source gas)} divided by {(concentration of introduced catalyst activating substance) $\times$ (number of oxygen contained in the catalyst activating material)}. The concentration of the source gas and the catalyst activating material to be introduced means a ratio of the flow rate of the source gas and the catalyst activating material relative to the total flow rate of the gases supplied to the inside of the synthetic furnace by way of a supply pipe and that contact with the catalyst.

In the case where the ratio between the number concentration of the carbon atoms and the number concentration of the oxygen atoms is less than 0.5, the catalyst activity is lowered due to excess oxygen to inhibit production of CNT.

On the contrary, in a case where the ratio between the number concentration of the carbon atoms and the number concentration of the oxygen atoms is more than 2000, the effect of the catalyst activating material cannot be provided sufficiently due to insufficiency of oxygen. In a case where the ratio between the number concentration of the carbon atoms and the number concentration of the oxygen atoms is within a range from 0.5 to 2000, CNT can be produced at high efficiency and an aligned CNT aggregate having both large size and high specific surface area can be produced efficiently.

Further, in a case where the ratio between the number concentration of the carbon atoms and the number concentration of the oxygen atoms is within a range from 0.5 to 100, even when the catalyst activating material is in contact with the carbon impurities, the base material or the like and consumed somewhat, since a sufficient amount of the catalyst activating material remains and can be supplied at an amount close to the optimal amount stably and uniformly to the catalyst, this is suitable to the stable and uniform growing of the aligned single-walled CNT aggregate.

Summarizing the above, it is suitable, in order to attain the stable and uniform growing of an aligned single-walled CNT aggregate, to select the combination of the source gas and the catalyst activating material such that the ratio between the number concentration of the carbon atoms and the number concentration of the oxygen atoms is within a range from 0.5 to 100 upon adding an optimal catalyst activating material into the synthesis furnace.

In order that the ratio between the number concentration of the carbon atoms and the number concentration of the oxygen atoms is kept within the range from 0.5 to 100, it is preferred to use an efficient source gas thereby decreasing the amount of the source gas necessary for producing a desired amount of CNT, as well as it is preferred to use a catalyst activating material of poor efficiency to increase the optimal amount of the catalyst activating material.

The catalyst activating material of poor efficiency referred to herein means a catalyst activating material having a poor efficiency for increasing the catalyst activity and extending the life described above.

That is, since the effect of improving the catalyst activity and extending the life of the catalyst activating material of poor efficiency cannot be developed sufficiently unless it is added in a greater amount compared with the catalyst activating material of good efficiency, it is necessary to increase the number concentration of the oxygen atoms in the synthetic furnace for supplying an optimal catalyst activating material.

Further, for the catalyst activating material of poor efficiency, more stable materials are preferred and they include, for example, carbon dioxide, acetone, tetrahydrofuran, and ethanol. Further, the catalyst activating materials of high efficiency include, for example, water.

[Means to keep the catalyst activation by the catalyst activating material]

Means to keep the catalyst activation by the catalyst activating material that activates the catalyst and enables stable and uniform growing of an aligned single-walled CNT aggregate includes, for example, use of an efficient source gas thereby decreasing the amount of the source gas necessary for producing the desired amount of CNT, use of a catalyst activation material of poor efficiency thereby increasing the optimal amount of the catalyst activating material to condition the ratio between the number concentration of the carbon atoms and the number concentration of the oxygen atoms within a range from 0.5 to 100.

With a such a constitution, even when the catalyst activating material is in contact with carbon impurity, base material or the like and consumed somewhat, since a sufficient amount of the catalyst activating material remains and can be supplied stably and uniformly by an amount close to the optimal amount to the catalyst, this is suitable to the uniform and stable growing of the aligned single-walled CNT aggregate.

[Effect of catalyst activating material]

The structures and the property, for example, the average outer diameter, the full-width at half maximum, the specific surface area, the crystallinity, and the purity of the CNT, and the weight density, the height, and the alignment property of the aligned CNT aggregate to be produced are changed, as well as the growth efficiency such as the growth lifetime and the growth rate are changed depending on the combination of the source material and the catalyst activating material. Accordingly, an aligned CNT aggregate having a desired structure and a property can be produced by selecting and setting an appropriate combination for the source material and the catalyst activating material. This can provide a remarkable effect for producing an aligned CNT aggregate having a specific surface area of 600 $m^2$/g to 2600 $m^2$/g, a weight density of 0.002 $g/cm^3$ to 0.2 $g/cm^3$, and a Herman's orientation factor of larger than 0.1 and smaller than 1.

[Condition for catalyst activating material and source material]

In the production of a CNT by using the catalyst activating material and the source material in the growth step, it is important to satisfy the following two conditions for producing the CNT at a high efficiency. That is, (1) the source material contains no oxygen and (2) the catalyst activating material contains oxygen.

Fig. 36 shows the height of formed aligned CNT aggregates (growth efficiency) for verifying the two conditions described above in a case of producing CNTs in 18 types of combinations, including three kinds of source materials, that is, two kinds of source materials not containing oxygen (acetylene and ethylene) and one kind of source material containing oxygen (carbon monoxide), and six kinds of catalyst activating materials in total, that is, five kinds of catalyst activating materials containing oxygen (water, carbon dioxide, acetone as ketons, tetrahydrofuran as ethers, ethanol as alcohols), and one kind of material not containing oxygen (ammonia) being assumed as the catalyst activating material, as well as in three types of combinations by only using the source material, and finally in six types of combination by only using the catalyst activating materials. Production conditions for the aligned CNT aggregate upon carrying out the verification is to be detailed later.

According to this, it can be seen that while CNT can be produced in a case of using only the source material but not using the catalyst activating material, the height of the aligned CNT aggregate is small and CNT cannot be produced at a high efficiency. This shows that the catalyst activating material is extremely important for efficient production of CNT.

Further, CNT cannot be produced at a high efficiency in a case of adding ammonia not containing oxygen, whereas CNT can be produced at a high efficiency in a case of adding five kinds of materials containing oxygen. This shows that it is necessary for the catalyst activating material to contain oxygen.

In the case of using the source material containing both carbon and oxygen (carbon monoxide), while the CNT can be produced irrespective of the kind of the catalyst activating material, aligned CNT aggregate having a large height cannot be produced.

On the contrary, it has been found that aligned single-walled CNT aggregates having large height can be produced in any of 10 types of combinations using the source materials containing carbon and not containing oxygen (acetylene, ethylene) and the catalyst activating materials containing oxygen (water, carbon dioxide, acetone, tetrahydrofuran, ethanol). That is, it has been shown that CNT can be produced at a high efficiency by the combination of the source materials and the catalyst activating materials capable of satisfying the two conditions. Further, in a case of satisfying the two conditions, it has been shown that the supply amount for oxygen and carbon can be optimized individually showing that CNT can be produced at high efficiency.

[Reaction temperature]

The reaction temperature for growing a CNT is determined properly while considering the metal catalyst, the starting carbon source, the reaction pressure, etc. In a case of including the step of adding the catalyst activating material for eliminating by-products which may deactivate the catalyst, the temperature is preferably set to such a range as capable of sufficiently developing the effect thereof. That is, a most preferred temperature range is determined by defining a temperature at which the catalyst activating material can remove the by-products such as amorphous carbon or graphite as a lower limit and defining a temperature at which the main product CNT is not oxidized by the catalyst activating material as an upper limit. Specifically, in a case of using water as the catalyst activating material, it is defined preferably as from 400˚C to 1000˚C. At a temperature lower than 400˚C, the effect of the catalyst activating material is not developed. At a temperature exceeding 1000˚C, the catalyst activating material reacts with CNT. Further, in a case of using carbon dioxide as the catalyst activating material, the temperature is more preferably from 400˚C to 1100˚C or lower. At a temperature lower than 400˚C, the effect of the catalyst activating material is not developed. At a temperature exceeding 1100˚C, the catalyst activating material reacts with CNT.

[Example 1]

An aligned single-walled CNT aggregate of Example 1 according to the invention will be described in details. The property of the aligned single-walled CNT aggregate produced by Example 1 depends on production conditions. In the production conditions of Example 1 to be described later, characteristic values are 0.03 g/cm$^3$ for the weight density, 1200 m$^2$/g for the BET-specific surface area, 10 for G/D ratio, 2.5 nm for the average outer diameter, 2 nm for the full-width at half maximum, 99.9% for the carbon purity, and 0.8 for the Herman's orientation factor.

The production step according to Example 1 includes, as shown in the flow chart of Fig. 37, a preparation step for a catalyst substrate and a synthesis step for a single-walled CNT. A co-catalyst layer of 40 nm thickness comprising alumina ($Al_2O_3$) is formed on a silicon substrate ((2 centimeter-square, 0.6 millimeter in thickness), with 600 nanometer-thick oxidization film) by RF sputtering and then a catalyst layer of 1 nm thickness comprising iron (Fe) is formed on the alumina layer by sputtering. (step for producing catalyst substrate). Detailed process conditions are shown in Fig. 38.

The substrate 32 is transported and installed in a synthetic furnace 33 of the CVD apparatus 31 (Fig. 34) kept at a furnace temperature of 750˚C and at a furnace pressure of $1.02 \times 10^5$ Pa (substrate transporting step S1), and 100 sccm of He (atmospheric gas) and 900 sccm of $H_2$ (reducing gas) are introduced from the gas supply pipe 35 into the furnace for 6 min. Thus, the iron catalyst layer is reduced, to promote fine particulation in a state suitable to the growing of the single-walled CNT, and a plurality of catalyst fine particles of nanometer size are formed on the alumina layer (formation step S2). The density of the catalyst fine particles can be controlled, for example, by the time in the formation step, etc. The number density of the catalyst fine particles can be estimated by measuring the number of fine particles observed for the image of a scanning electron microscope at a magnification factor of 100.000X or more as shown in Fig. 39. The number density of the catalyst measured by using the image of Fig. 39, etc. is $6.2 \times 10^{11}$ N/cm$^2$.

Then, 850 sccm of He (atmospheric gas), 100 sccm of $C_2H_4$ (source gas), and 50 sccm of $H_2O$-containing He (relative humidity: 23%) (catalyst activating material mixed in the carrier gas) are supplied for 5 min from the gas supply pipe 35 into the synthesis furnace 33 in a state kept at a furnace temperature at 750˚C and at a furnace pressure of $1.02 \times 10^5$ Pa (atmospheric pressure). Thus, a single-walled CNT is grown from each of the catalyst fine particles under the high carbon concentration circumstance (growth step S3 under high carbon circumstance) to obtain an aligned single-walled CNT aggregate.

Under the conditions in Example 1, single-walled CNTs are grown at a probability of 80% or more from the fine catalyst particles prepared to the state described above. The growing probability of the single-walled CNT can of course be decreased to 80% or lower, for example, by conditioning the amount of the water added.

After the completion of the growth step, only He is supplied by 1000 sccm into the synthesis furnace 33 and the remaining source gas and the catalyst activating agent are removed (flushing step S4) and, subsequently, the substrate is cooled to 400˚C or lower and then the substrate is taken out from the synthesis furnace 33 (substrate taking out step S5), thereby completing a series of production steps for the aligned single-walled CNT aggregate.

In a case where the pressure in the growth step is $5 \times 10^4$ Pa or lower and $2 \times 10^5$ Pa or higher (2 atm), the production efficiency for the aligned CNT aggregate is lowered and the aligned CNT aggregate cannot be produced efficiently.

Fig. 40 shows a digital camera image for an aligned single-walled CNT aggregate of 1 cm height formed according to the method of Example 1 for a growing time of 120 min. CNTs were grown while measuring the growing height by using the method of Example 1 as a well as a telecentric measuring system as described in the specification of Japanese Patent Application No. 2008-051321, the supply of the source gas was stopped at 10 μm height. An SEM image as viewed from the side of the aligned single-walled CNT aggregate thus obtained is shown in Figure 41. Further, Fig. 42 shows an example of growing curves obtained by measuring the height during growing on real time by the telecentric measuring system in the same manner. By growing CNTs while measuring the growing height on real time and controlling the supply of the source gas in accordance with the measured value for the growing height, an aligned single-walled CNT aggregate of a desired height can be obtained by automatic control. In the example shown in Fig. 53, a time lug is present between the stopping of the source gas and the stopping of CNT growing and it is actually grown to 12 μm.

In a case of producing a patterned aligned single-walled CNT aggregate, a resist for electron beam exposure (ZEP-520A/produced by Zeon Corporation) is thinly coated first by using a spin coater on a silicon substrate formed previously with a co-catalyst layer (4700 rpm/60 sec) and baked (200 ˚C/3 min). Then, for example, circular patterns each of 150 μm diameter are drawn each at an interval of 250 μm on the substrate coated with the resist by using an electron beam exposure apparatus.

Then, alumina and iron are vapor deposited by using a sputtering vapor deposition apparatus and, finally, the resist is peeled from the substrate by using a peeling liquid (ZD-MAC/produced by Zeon Corporation). By way of the steps, a silicon substrate formed with a catalyst metal layer patterned in an optional shape, for example, a circular shape can be obtained. In a case of not applying the patterning, alumina and iron are vapor deposited directly on the substrate by using of a sputtering vapor deposition apparatus. By conducting the synthesis step of the single-walled CNT using a substrate having a patterned catalyst layer, a patterned aligned single-walled CNT aggregate is obtained. When observing this aligned CNT aggregate by a transmission electron microscope, it was revealed that 98% of CNTs are single-walled CNTs.

As described above, single-walled CNTs can be formed selectively to suitably produce an aligned CNT aggregate having a specific surface area of from 600 m$^2$/g to 2,600 m$^2$/g, a weight density of from 0.002 g/cm$^3$ to 0.2 g/cm$^3$, and a Herman's orientation factor of greater than 0.1 and smaller than 1.

[Example 2]

Another method of producing an aligned single-walled CNT aggregate of Example 2 according to the invention is to be described below. Fig. 43 shows a flow chart for the production step according to Example 2 and detailed process conditions are shown in Fig. 44.

A silicon substrate 32 vapor deposited with the same catalyst metal (A1$_2$O$_3$ + Fe) as in Example 1 is provided and the substrate 32 is transported and installed in the synthesis furnace 33 of the CVD apparatus 31 kept at a room temperature for the furnace room temperature and at of $1.02 \times 10^5$ Pa for the furnace pressure (substrate transporting step S1), at 600 sccm of He (atmospheric gas) and 400 sccm of $H_2$ (reducing gas) are introduced into the furnace and the furnace temperature is elevated at a temperature elevation rate of 50˚C/min for 15 min (formation step S2). That is, a significant difference between Example 2 and Example 1 described above is elevation of temperature in the furnace after installing the substrate.

Then, 510 sccm of He (atmospheric gas), 400 sccm of $H_2$ (reducing gas) and, further, 90 sccm of $H_2O$-containing He (relative humidity: 23%) (catalyst activating material mixed in carrier gas) are supplied to the synthesis furnace 33 in a state kept at a furnace temperature of 750˚C and at a furnace pressure of $1.02 \times 10^5$ Pa (water content addition formation step S2). The treating time is 5 min. Thus, the iron catalyst layer is reduced in the same manner as in Example 1 and a number of fine particles of nanometer size are formed on the alumina layer. The number density of the catalyst is $9 \times 10^{11}$ N/cm$^2$.

Then, 850 sccm of He (atmospheric gas), 100 sccm of $C_2H_4$ (source gas), and 50 sccm of $H_2O$-containing He (relative humidity: 23%) (catalyst activating material mixed in carrier gas) are supplied to the synthesis furnace 33 in a state kept at a furnace temperature of 750˚C and at a furnace pressure of $1.02 \times 10^5$ Pa (growth step under high carbon concentration circumstance S3). The treating time is 10 min. Thus, a single-walled CNT is grown from each of the fine iron catalyst particles.

After the completion of the growth step, only He is supplied by 1000 sccm into the reaction furnace and the remaining source gas and the catalyst activating agent are removed (flushing step S4) and then the substrate 32 is taken out from the synthesis furnace 33 (substrate taking out step S5), thereby completing a series of production steps for the aligned single-walled CNT aggregate.

When observing this aligned CNT aggregate obtained as described above by a transmission electron microscope, it was revealed that 98% of CNTs were single-walled CNTs.

The aligned single-walled CNT aggregate produced by Example 2 had the characteristic values including 0.03 g/cm$^3$ for the weight density, 7 for the G/D ratio, 1100 m$^2$/g for the BET-specific surface area, 2.8 nm for the average outer diameter, 2 nm for the full-width at half maximum, 99.9% for the carbon purity, and 0.7 for the Herman's orientation factor. By Example 2, an aligned single-walled CNT aggregate having a high specific surface area and an excellent shape processability can be obtained.

[Example 3]

An aligned single-walled CNT aggregate according to the invention in a case of using a granular shaped base material or a linear shaped base material as a base material and a method for producing are described below.

While the production method according to Example 3 is identical with that in Example 1, a spherical granular shaped base material or a linear shaped base material of SUS 304 in a metal mesh form is used as the base material instead of the silicon substrate in Example 1. The catalyst layer was formed, when using a granular material, by conducting a sputtering while rotating the granular material.

Fig. 45 shows a digital photograph of aligned single-walled CNT aggregates grown on alumina particles having an average diameter of 3 mm. It can be seen that the aligned single-walled CNT aggregate having a height of several hundred $\mu$m can be produced on the alumina particle. Further, Fig. 46 shows a digital photograph of aligned single-walled CNT aggregate grown on silica particles having an average diameter of 300 $\mu$m. The characteristic properties of each aligned single-walled CNT aggregate is shown in Table 2.

Then, Fig. 47 to Fig. 49 show SEM images for aligned single-walled CNT aggregates produced by using wires of SUS 304 having an average diameter of 100 $\mu$m, 30 $\mu$m, and 16 $\mu$m as the base material. It can be seen that the aligned single-walled CNT aggregates can be produced by using a linear shaped base material having an average diameter from 100 $\mu$m to 16 $\mu$m as the base material. The characteristic properties of each aligned single-walled CNT aggregate is shown in Table 2.

The structure of the aligned single-walled CNT aggregates has alignment property as shown in the SEM image shown in Fig. 50.

Table 2 shows the catalyst number density when producing aligned single-walled CNT aggregates by using granular bodies and linear bodies of various materials and average diameters, as well as the specific surface area, Herman's orientation factor, weight density, carbon purity, G/D ratio, average outer diameter and full-width at half maximum of each aligned single-walled CNT aggregate produced.

[Table 2]

| EXAMPLE | KIND OF BASE MATERIALS | AVERAGE DIAMETER ($\mu$m) | CATALYST NUMBER DENSITY (NUMBER/cm$^2$) | SPECIFIC SURFACE AREA (m$^2$/g) | HERMAN'S ORIENTATION FACTOR (HOF) | WEIGHT DENSITY (g/cm$^3$) | CARBON PURITY (%) | G/D RATIO | AVERAGE OUTER DIAMETER (nm) | FULL-WIDTH AT HALF MAXIMUM (nm) | PROCESSABILITIES |
|---|---|---|---|---|---|---|---|---|---|---|---|
| 1 | GRANULAR ALUMINA BODY | 2000 | $5 \times 10^{11}$ | 693 | 0.52 | 0.028 | >99.9 | 3.8 | 3.8 | 2.5 | ○ |
| 2 | GRANULAR ALUMINA BODY | 3000 | $5 \times 10^{11}$ | 682 | 0.48 | 0.026 | >99.9 | 4.2 | 3.6 | 2.4 | ○ |
| 3 | GRANULAR HIGHPURITY BODY | 300 | $6 \times 10^{11}$ | 832 | 0.69 | 0.033 | >99.9 | 5.9 | 3.1 | 2.1 | ○ |
| 4 | GRANULAR HIGHPURITY BODY | 2000 | $5 \times 10^{11}$ | 820 | 0.52 | 0.025 | >99.9 | 5.4 | 3.0 | 1.9 | ○ |
| 5 | GRANULAR SILICA BODY | 300 | $6 \times 10^{11}$ | 808 | 0.65 | 0.035 | >99.9 | 5.3 | 2.9 | 1.6 | ○ |
| 6 | GRANULAR SILICA BODY | 100 | $8 \times 10^{11}$ | 832 | 0.72 | 0.041 | >99.9 | 5.0 | 3.1 | 1.8 | ○ |
| 7 | GRANULAR SILICA BODY | 50 | $8 \times 10^{11}$ | 858 | 0.75 | 0.043 | >99.9 | 5.9 | 3.0 | 1.9 | ○ |
| 8 | GRANULAR ZIRCONIA BODY | 500 | $6 \times 10^{11}$ | 754 | 0.55 | 0.033 | >99.9 | 4.8 | 3.2 | 2.2 | ○ |
| 9 | GRANULAR ZIRCONIA BODY | 2000 | $6 \times 10^{11}$ | 732 | 0.68 | 0.031 | >99.9 | 4.6 | 3.4 | 2.3 | ○ |
| 10 | SUS304 WIRE | 16 | $6 \times 10^{11}$ | 760 | 0.49 | 0.034 | >99.9 | 6.1 | 3.3 | 2.2 | ○ |
| 11 | SUS304 WIRE | 30 | $5 \times 10^{12}$ | 821 | 0.57 | 0.029 | >99.9 | 5.4 | 3.1 | 1.8 | ○ |
| 12 | SUS304 WIRE | 100 | $4 \times 10^{11}$ | 763 | 0.56 | 0.021 | >99.9 | 5.9 | 3.3 | 2.4 | ○ |

Based on these results, it was evident that by using a granular base material and a linear base material as a base material, an aligned CNT aggregate whose specific surface area is 692 $m^2$/g to 858 $m^2$/g, whose weight density is 0.0021 $g/cm^3$ to 0.043 $g/cm^3$, and whose Herman's orientation factor was more than 0.48 and less than 0.75 can be produced.

Each aligned single-walled CNT aggregate could readily be peeled off from the base material and it was possible to produce a bulk aligned single-walled CNT aggregate and a powdered aligned single-walled CNT aggregate in a preferable manner.

When an aligned single-walled CNT aggregate produced using any of the abovementioned 12 types of the base materials exhibited an excellent processability in the verification example 1 and/or 2 described below, then it was designated with ○. Based on these results, the aligned single-walled CNT aggregates produced in this Example were revealed to have excellent processabilities.

Also in any case, it was possible to produce a larger number of aligned CNT aggregates per unit area of the inside of a synthesis furnace occupied by the base material (area of a plane defined by longitudinal and lateral directions of a space occupied by the base material) when compared with a plate-shaped base material.

The results of the production of the aligned single-walled CNT aggregates of the abovementioned Examples using various combinations of the source materials and the catalyst activating material are detailed below. While the production step is similar to the flow chart of Example 1 shown in Fig. 37 and the process conditions of Example 1 shown in Fig. 38, the source materials were not limited to ethylene, and three materials in total were employed here including two oxygen-free materials (acetylene (source material-diluted acetylene: contained 10% in helium, ethylene) and one oxygen-containing material (carbon monooxide), and the catalyst activating materials are not limited to water and six materials in total were employed here including five oxygen-containing materials (water, carbon dioxide, acetone, tetrahydrofuran, ethanol) and one oxygen-free material (ammonia).

A silicon substrate vapor deposited with the same catalyst metal ($Al_2O_3$ + Fe) as in Example 1 was provided, and this was transported and installed in the synthesis furnace preheated similarly to Example 1, and then after conducting the formation step similarly to Example 1, the conditions similar to those in Example 1 were employed to conduct the CNT growth step using the 18 combination of the above mentioned three source materials and six catalyst activating materials, while conducting the CNT growth step using the three combinations of the source materials alone, and six combinations of the catalyst activating materials alone. Thereafter, the substrate was taken out from the furnace after conducting the flushing step similarly to Example 1.

The growing heights of the aligned single-walled CNT aggregates thus produced using 27 combinations of the source materials and the catalyst activating materials are shown in Fig. 36. Based on these results, it can be seen that while CNT can be produced in a case of using only the source material but not using the catalyst activating material, the growing height of the aligned CNT aggregate is small and CNT cannot be produced at a high efficiency. This shows that the catalyst activating material is extremely important for efficient production of CNT.

On the contrary, it has been found that aligned single-walled CNT aggregates having large height can be produced in any of 10 types of combinations using the source materials containing carbon and not containing oxygen (acetylene, ethylene) and the catalyst activating materials containing oxygen (water, carbon dioxide, acetone, tetrahydrofuran, ethanol). This means that the combination of the source materials and the catalyst activating materials satisfying certain requirements can enables a highly efficient CNT production.

Further, CNT having a large height could not be produced when adding ammonia not containing oxygen, whereas CNT having a large height could be produced when adding five materials containing oxygen. This shows that the materials containing no oxygen are not suitable for catalyst activating materials added for the purpose of producing CNT at a high efficiency, and that oxygen should be contained.

[Relationship between amount of catalyst activating material added and growth efficiency]

Next, the results of the verification of the relationship between the amount of the catalyst activating material added and growth efficiency are discussed. Examples of the growth curves obtained by a realtime measurement of the growth rate of CNT using a telecentric measuring system (see Japanese Patent Application No. 2008-051321) while using ethylene (75 sccm) as a source material together with carbon dioxide and acetone as catalyst activating materials are shown in Fig. 51 and 52. Based on these, the aligned CNT aggregate was grown sparingly when the both catalyst activating materials were not added, while the CNT growth rate was increased when increasing the amount of the both catalyst activating materials added and the growth duration was also prolonged. Thus, the addition of the catalyst activating materials resulted in a significant increase in the height of the aligned CNT aggregate and an improved growth efficiency.

The growth rate and the growth height of CNT become highest when the amount of the catalyst activating material becomes an optimum level. The optimum level of carbon dioxide to be added (see Fig. 67) was 5000 ppm, while the optimum level of acetone to be added (see Fig. 68) was 4800 ppm. When adding the catalyst activating material in a large amount exceeding the optimum level, the growth rate was reduced and the growth duration was shortened. Thus, an excessive addition of the catalyst activating material leads to a reduced growth height of the aligned CNT aggregate and a reduced growth efficiently. The ratio between the carbon contained in the source material in a optimized growth step and the oxygen contained in the catalyst activating material was 15 for carbon dioxide, while that for acetone was 31.

In view of the results of the verification of the optimum combinations of the above mentioned source materials and the catalyst activating materials, in any of the combinations enabling a highly efficient production of the aligned single-walled CNT aggregates, i.e., 10 combinations employing carbon-containing and oxygen-free source materials (acetylene, ethylene) and oxygen-containing catalyst activating materials (water, carbon dioxide, acetone, tetrahydrofuran, ethanol), analogous effects of adding catalyst activating materials and existence of the optimum amount to be added were observed.

For these 10 combinations of the source materials and the catalyst activating materials, the ratios between the carbon contained in the carbon sources and the oxygen contained in the catalyst activating materials, under the optimum growth condition, are shown in Table 3.

According to this, the optimum ratio of the carbon contained in the source material and the oxygen contained in the catalyst activating materials was within a range from 2 to 1500, although it varied depending on the source material and the catalyst activating materials.

For these 10 combinations of the source materials and the catalyst activating materials, any of the single-walled CNT contents of the aligned CNT aggregate produced under the optimum growth condition was 95% or more when determined from transmission electron microscopic (hereinafter also referred to as TEM) images.

The catalyst number densities, the source materials, the catalyst activating materials, the amounts of the source materials added (acetylene employed as a diluted gas at 10% in helium), the amounts of the catalyst activating materials added, the specific surface areas of the produced aligned single-walled CNT aggregate, the Herman's orientation factors, the weight densities, the carbon purities, the G/D ratios, the average outer diameters and the full-widths at half maximum under the optimum growth condition while using the abovementioned 10 combinations of the source materials and the catalyst activating materials which was successful in giving a highly improved aligned single-walled CNT aggregates are shown in Table 3 and Table 4.

[Table 3]

| EXAMPLE | CATALYST NUMBER DENSITIES (NUMBER/cm$^2$) | CARBON | CATALYST ACTIVATING MATERIALS | AMOUNTS OF THE SOURCE MATERIALS ADDED (sccm) | AMOUNT OF THE CATALYST ACTIVATING MATERIAL ADDED (ppm) | CARBON AND OXYGEN RATIO C/O RATIO | SPECIFIC SURFACE AREA (m$^2$/g) | HERMAN'S ORIENTATION FACTOR (HOF) | WEIGHT DENSITY (g/cm$^3$) |
|---|---|---|---|---|---|---|---|---|---|
| 1 | $5 \times 10^{11}$ | ETHYLENE | WATER | 75 | 100 | 1500 | 1350 | 0.60 | 0.028 |
| 2 | $8 \times 10^{11}$ | ETHYLENE | CARBON DIOXIDE | 75 | 5000 | 15 | 1443 | 0.62 | 0.042 |
| 3 | $6 \times 10^{11}$ | ETHYLENE | ACETONE | 75 | 4800 | 31 | 630 | 0.62 | 0.033 |
| 4 | $9 \times 10^{11}$ | ETHYLENE | TETAHYDROFURAN | 75 | 2000 | 75 | 1097 | 0.57 | 0.048 |
| 5 | $9 \times 10^{11}$ | ETHYLENE | ETHANOL | 75 | 1400 | 107 | 1044 | 0.51 | 0.048 |
| 6 | $8 \times 10^{11}$ | ACETYLENE | WATER | 75* | 225 | 67 | 1300 | 0.55 | 0.040 |
| 7 | $6 \times 10^{11}$ | ACETYLENE | CARBON DIOXIDE | 75* | 5000 | 2 | 1249 | 0.65 | 0.034 |
| 8 | $8 \times 10^{11}$ | ACETYLENE | ACETONE | 75* | 5000 | 3 | 1285 | 0.45 | 0.043 |
| 9 | $2 \times 10^{12}$ | ACETYLENE | TETAHYDROFURAN | 75* | 1000 | 15 | 1348 | 0.70 | 0.068 |
| 10 | $1 \times 10^{11}$ | ACETYLENE | ETHANOL | 75* | 1500 | 10 | 1408 | 0.52 | 0.050 |

[Table 4]

| EXAMPLE | CARBON | CATALYST ACTIVATING MATERIALS | CARBON PURITY (%) | G/D RATIO | AVERAGE OUTER DIAMETER (nm) | FULL-WIDTH AT HALF MAXIMUM (nm) | PROCESSABILITIES |
|---|---|---|---|---|---|---|---|
| 1 | ETHYLENE | WATER | >99.9 | 8.5 | 2.5 | 1.6 | ○ |
| 2 | ETHYLENE | CARBON DIOXIDE | >99.9 | 6.5 | 2.3 | 1.7 | ○ |
| 3 | ETHYLENE | ACETONE | >99.9 | 6.4 | 2.5 | 1.5 | ○ |
| 4 | ETHYLENE | TETAHYDROFURAN | >99.9 | 7.3 | 2.3 | 1.5 | ○ |
| 5 | ETHYLENE | ETHANOL | >99.9 | 6.5 | 2.6 | 1.4 | ○ |
| 6 | ACETYLENE | WATER | >99.9 | 9.5 | 2.6 | 1.6 | ○ |
| 7 | ACETYLENE | CARBON DIOXIDE | >99.9 | 5.9 | 2.8 | 1.6 | ○ |
| 8 | ACETYLENE | ACETONE | >99.9 | 7.4 | 2.4 | 1.4 | ○ |
| 9 | ACETYLENE | TETAHYDROFURAN | >99.9 | 6.0 | 2.6 | 1.4 | ○ |
| 10 | ACETYLENE | ETHANOL | >99.9 | 7.9 | 2.6 | 1.3 | ○ |

The data in this Table show that by combining the source materials and the catalyst activating materials appropriately, an aligned single-walled CNT aggregate whose specific surface area is within a range from 630 $m^2/g$ to 1443 $m^2/g$ can be obtained. Those preferred especially for producing an aligned single-walled CNT aggregates having a high specific surface were water, carbon dioxide, tetrahydrofuran and ethanol.

It is also shown that by combining the source materials and the catalyst activating materials appropriately, an aligned single-walled CNT aggregate whose Herman's orientation factor is within a range of from 0.45 to 0.7 can be obtained.

It is also shown that by combining the source materials and the catalyst activating materials appropriately, an aligned single-walled CNT aggregate whose weight density is within a range from 0.028 $g/cm^3$ to 0.068 $g/cm^3$ can be obtained. It is also shown that water is suitable for producing an aligned single-walled CNT aggregate whose weight density is low while tetrahydrofuran and ethanol are suitable for producing an aligned single-walled CNT aggregate whose weight density is high.

The results of the elemental analysis using fluorescent X-rays indicated that the carbon purity was 99.9% or higher in any case.

The data in this Table shows that by combining the source materials and the catalyst activating materials appropriately, an aligned single-walled CNT aggregate whose G/D ratio is within a range from 5.9 to 9.5 can be obtained. It is also shown that water, acetone and ethanol are suitable for obtaining an aligned single-walled CNT aggregate whose G/D ratio is high.

The data in this Table shows that by combining the source materials and the catalyst activating materials appropriately, an aligned single-walled CNT aggregate whose outer diameter is within a range from 2.3 nm to 2.8 nm can be obtained. It is also shown that acetone and tetrahydrofuran are suitable for obtaining an aligned single-walled CNT aggregate whose outer diameter is small, while carbon dioxide is suitable for obtaining an aligned single-walled CNT aggregate whose outer diameter is large. In any case, the outer diameter distribution range (full-width at half maximum) was 1 nm or more and 2 nm or less.

When an aligned single-walled CNT aggregate produced using the above mentioned 10 combinations of the source materials and the catalyst activating materials exhibited an excellent processability in the verification example 1 and/or 2 described below, then it was designated with ○. Based on these results, the aligned single-walled CNT aggregates produced in this Example were revealed to have excellent processabilities.

[Example 4]

[Bulk aligned single-walled CNT aggregate]

A bulk aligned single-walled CNT aggregate is obtained by peeling the aligned single-walled CNT aggregate from the substrate 32.

While the property of the bulk aligned single-walled CNT aggregate depends on the production conditions for the aligned single-walled CNT aggregate, in a case of using the aligned single-walled CNT aggregate produced under the production conditions of Example 1, characteristic values are 0.03 $g/cm^3$ for the weight density, 1200 $m^2/g$ for the BET-specific surface area, 10 for the G/D ratio, 2.5 nm for the average outer diameter, 2 nm for the full-width at half maximum, 99.9% for the carbon purity, and 0.8 for the Herman's orientation factor before peeling, and 0.03 $g/cm^3$ for the weight density, 1200 $m^2/g$ for the BET-specific surface area, 2.5 nm for the average outer diameter, 2 nm for the full-width at half maximum, 99.9% for the carbon purity, and 0.8 for the Herman's orientation factor after peeling.

In a case of using the aligned single-walled CNT aggregate produced under the production conditions of Example 2, values are 0.03 $g/cm^3$ for the weight density, 7 for the G/D ratio, 1100 $m^2/g$ for the BET-specific surface area, 2.8 nm for the average outer diameter, 2 nm for the full-width at half maximum, 99.9% for the carbon purity, and 0.7 for the Herman's orientation factor before peeling, and 0.03 $g/cm^3$ for the weight density, 1100 $m^2/g$ for the BET-specific surface area, 2.8 nm for the average outer diameter, 2 nm for the full-width at half maximum, 99.9% for the carbon purity, and 0.7 for the Herman's orientation factor after peeling.

As the method of peeling the aligned single-walled CNT aggregate from the substrate 32, a physical, chemical, or a mechanical peeling method can be shown as an example. For example, a method of peeling by using, for example, electric field, magnetic field, centrifugal force, or surface tension, a method of peeling mechanically from the substrate 32 directly, or a method of peeling from the substrate 32 by using a pressure or heat is applicable. While a simple peeling method includes a method of peeling an aligned single-walled CNT aggregate from the substrate 32 by directly pinching it by tweezers, peeling the aggregate from the substrate 32 by using a thin blade such as a cutter blade is more suitable. Further, it is also possible to suck an aligned single-walled CNT aggregate by using a vacuum pump and peeling the same from the substrate 32.

Fig. 53 shows a separation device for peeling an aligned single-walled CNT aggregate from the substrate 32. The separation device has a sharp portion such as a cutter or a spatula. By abutting the sharp portion against the boundary between an aligned single-walled CNT aggregate and a substrate (Fig. 53(a)) and moving the sharp portion along the surface of the substrate so as to scrape off the aligned single-walled CNT aggregate from the substrate (Fig. 53(b)), the aligned single-walled CNT aggregate is peeled from the substrate. In this case, when the aligned single-walled CNT aggregate has a sufficient height of 100 $\mu$m size, the aligned single-walled CNT aggregate can be easily peeled from the substrate.

By using such a method, the aligned single-walled CNT aggregate provided on the base material can be peeled off from the base material while maintaining the integrity but undergoing no deformation, the bulk aligned single-walled CNT aggregate provided peeled off from the base material can be obtained while maintaining the property of the aligned single-walled CNT aggregate provided on the base material. Such a bulk aligned single-walled CNT aggregate can be installed or placed on any desired base material, and exhibits an excellent processability.

A 50 mg of lump is taken out of the bulk aligned single-walled CNT aggregate thus peeled from the substrate, and adsorption/desorption isothermal curve for liquid nitrogen is measured at 77K using BELSORP-MINI (produced by Bell Japan Inc.) (adsorption equilibrium time is 600 sec.). Then, when the specific surface area is measured based on the adsorption/desorption isothermal curve by a method of Brunauer, Emmett, Teller, it is 1100 m$^2$/g. Further, a 50 mg of lump is taken out from the same bulk aligned single-walled CNT aggregate, arranged evenly on a tray made of alumina, and placed in a muffle furnace. Then, when the temperature is elevated to 550˚C at 1 ˚C/min and a heat treatment is conducted in an oxygen atmosphere (20% concentration) for 1 min, the weight of the sample is reduced to 43 mg and 7 mg thereof is burnt. When the specific surface area is measured in the same manner as described above for the sample after the heat treatment, the specific surface area is about 2000 m$^2$/g. The specific surface area of the sample after the heat treatment is increased compared with that of the sample and it suggests that a tip of the CNT is opened by the heat treatment.

[Evaluation for alignment property by 0-20 method]

The evaluation of the alignment property of the obtained bulk aligned single-walled CNT aggregate is evaluated using an X-ray diffractometer (Rigaku Corp Diffractometer: RINT-2500/HRPBO) at a power of 15 kW from a Cu-K$\alpha$ X-ray source by an X-ray diffraction measuring method according to the 0-20 method. The spot diameter of the X-ray was 0.6 mm. The main factors of the bulk aligned single-walled CNT aggregate used as the sample are square columnar shape of 1 mm $\times$ 1 mm $\times$ 10 mm configurational size, 0.037 g/cm$^3$ for the density, 1200 M$^2$/g for the BET-specific surface area, 2.8 nm for the average outer diameter, 2 nm for the full-width at half maximum, and 99.9% for the carbon purity.

The X-ray diffraction spectra for the sample are as shown in Fig. 22 to Fig. 24. The observed diffraction peaks reflect the periodicity for the constitution of a hexagonal carbon ring that constitutes the single-walled CNT and the periodicity of packing between the single-walled CNTs. (CP) diffraction peaks observed at low angle (0 to 15 degrees) reflect the distance between each of the single-walled CNTs. Moderate diffraction peaks observed near 25 degrees reflect the gap of the hexagonal carbon ring sheets of different single-walled CNTs (refer to Fig. 54). The diffraction peak near 42 degrees reflect the (100) face of the hexagonal carbon ring of the single-walled CNT, and diffraction peaks near 77 to 78 degrees reflect the (110) face. Since the hexagonal carbon ring structure of the single-walled CNT is rounded and curved, the diffraction peaks are not closely identical with the diffraction peak of the graphite structure. Further, while the peak positions change somewhat slightly both for the size and the alignment degree of the single-walled CNT, the diffraction peaks can be identified.

When the Herman's orientation factor F is calculated based on the result, it is 0.4 to 0.62 for the (CP) diffraction peak and 0.75 for the (002) diffraction peak.

[Evaluation for alignment property by Laue method]

The alignment degree of the obtained bulk aligned single-walled CNT aggregate is evaluated by an X-ray diffraction measuring method according to the Laue method. The device employed was made by Bruker (Bruker SMART APEX CCD area-detector diffractometer). At a power of 4.5 kW, Mo-K$\alpha$ was employed as an X-ray source (BRUKERAXS MO CE-SRA). The distance between the sample and the X-ray detector was 5.968 cm, the CCD detector size was 6.1 $\times$ 6.1 cm, and the spot diameter of the X-ray was 0.5 mm.

Main factors of the bulk aligned single-walled CNT aggregate used as the sample are circular columnar shape of 1 mm diameter $\times$ 0.5 mm height for the configurational size, 0.037 g/cm$^3$ for the weight density, 1200 m$^2$/g for the BET-specific surface area, 2.8 nm for the average outer diameter, 2 nm for the full-width at half maximum, and 99.9% for the carbon purity.

As a result, the diffraction peaks for (CP), (002), (100), etc. observed for the bulk aligned single-walled CNT aggregate are in an elliptic shape and show anisotropy. The anisotropy shows that the single-walled CNT is aligned.

When the Herman's orientation factor F is calculated based on the result, it is 0.38 for the (CP) diffraction peak and 0.61 for the (002) diffraction peak.

[Example 5]

[Powdered aligned single-walled CNT aggregate]

A aligned single-walled CNT aggregate is peeled from a substrate to obtain a powdered aligned single-walled CNT aggregate. While the property of the powdered aligned single-walled CNT aggregate depends on the production conditions for the aligned single-walled CNT aggregate employed, in a case of using the aligned single-walled CNT aggregate produced under the production conditions of Example 1, characteristic values are 0.03 g/cm$^3$ for the weight density, 1200 m$^2$/g for the BET-specific surface area, 10 for the G/D ratio, 2.5 nm for the average outer diameter, 2 nm for the full-width at half maximum, 99.9% for the carbon purity, and 0.8 for the Herman's orientation factor before peeling, and 0.0005 g/cm$^3$ to 0.16 g/cm$^3$ for the weight density, 1200 m$^2$/g for the BET-specific surface area, 2.5 nm for the average outer diameter, 2 nm for the full-width at half maximum, 99.9% for the carbon purity, and 0.3 to 0.7 for the Herman's orientation factor after peeling.
In a case of using the aligned single-walled CNT aggregate produced under the production conditions of Example 2, characteristic values are 0.03 g/cm$^3$ for the weight density, 7 for the G/D ratio, 1100 m$^2$/g for the BET-specific surface area, 2.8 nm for the average outer diameter, 2 nm for the full-width at half maximum, 99.9% for the carbon purity, and 0.7 for the Herman's orientation factor before peeling, and 0.0005 g/cm$^3$ to 0.16 g/cm$^3$ for the weight density, 1100 m$^2$/g for the BET-specific surface area, 2.8 nm for the average outer diameter, 2 nm for the full-width at half maximum, 99.9% for the carbon purity, and 0.3 to 0.6 for the Herman's orientation factor after peeling.

As shown in Fig. 55, a suction tube connected to a vacuum apparatus which may be, for example, a commercially available vacuum cleaner is placed on a sample of an aligned single-walled CNT aggregate, and the aligned single-walled CNT aggregate is separated from the substrate by utilizing the suction force thereof and sucked into a suction tube. In this case, the aligned single-walled CNT aggregate is formed into a powdery shape (refer to Fig. 56), which is caught by a filter in a collecting device.

The fine pore diameter distribution of a powdered aligned single-walled CNT aggregate is shown in Figure 33. Based on this, the distribution maximum of the fine pore diameters was 13 nm, and the aligned single-walled CNT aggregate having such a fine pore diameter distribution exhibited an extremely excellent shape processability.

As seen in SEM images in Fig. 5, the structure of the powdered aligned single-walled CNT aggregate has an alignment property to some extent in most cases. At the same time, the powdered aligned single-walled CNT aggregate has a plurality of different alignment directions. Accordingly, for evaluating the alignment degree of the powdered aligned single-walled CNT aggregate by SEM (or AFM) images, observation at an adequate place and under an adequate magnification factor is necessary as described below.

Further, the powdered aligned single-walled CNT aggregate may also contain a partially isotropic structure to a degree that does not deteriorate the functions used in the application.

[Alignment property of powdered aligned single-walled CNT aggregate]

Fig. 27 shows FFT images based on SEM images shown in Fig. 5. FFT images show anisotropy respectively while the degree is different depending on the magnification ratio of SEM images and places. This shows that CNT in the structure is aligned.

An intensity profile shown in Fig. 28 is obtained by determining the transformation intensity from the reference direction ($\phi = 0$) to $\phi = \pi/2$ in the radial direction while keeping an equal distance from the original point of FFT images (Fig. 27). When the Herman's orientation factor F is calculated by using the intensity profile, it is 0.6 for Region 1 and 0.3 for Region 2, and it is found that the powdered aligned single-walled CNT aggregate is aligned. Since a powdered aligned single-walled CNT aggregate may have different alignment direction depending on the position, when calculating the FFT image from a broad range SEM image to obtain the Herman's orientation factor, the Herman's orientation factor obtained becomes smaller than the Herman's orientation factor of the powdered aligned single-walled CNT aggregate before peeling. Accordingly, it is preferred to calculate the FFT image from a SEM image of about 1 to 5 $\mu$m to obtain the Herman's orientation factor.

[Weight density of powdered aligned single-walled CNT aggregate]

The weight density of the powdered aligned single-walled CNT aggregate is determined as follows. The weight density measurement for the powdered aligned single-walled CNT aggregate can be evaluated by two methods, that is, loose weight density and tap weight density.

The loose weight density is a weight density after the powdered aligned single-walled CNT aggregate is placed in a container and shaken violently. In the case of this sample, the loose weight density is 0.019 g/cm$^3$. Further, the loose weight density of another sample is 0.009 g/cm$^3$.

The tap weight density is a weight density after placing the powdered aligned single-walled CNT aggregate in a container and dropping the same from the height of 25 mm to a hard surface repetitively 20 times. In the case of this sample, the tap weight density is 0.024 $g/cm^3$. Further, the tap weight density of another sample is 0.014 $g/cm^3$. Since the weight density of the aligned single-walled CNT aggregate before forming the sample into a powdered state is about 0.03 to 0.04 $g/cm^3$, it can be seen that the weight density decreased from 4/5 to 1/4 by powdering the same.

[Processability verification 1: Processing by density growth treatment step]

A method for producing an aligned single-walled CNT aggregate having a desired shape and whose density was increased by subjecting the bulk aligned single-walled CNT aggregate produced in Example 4 or the powdered aligned single-walled CNT aggregate produced in Example 5 to an external pressure is discussed below.

1) Two rectangular flat slide glasses of an identical size were provided.
2) In the center of one of the slide glasses, a bulk aligned single-walled CNT aggregate in a grown state was placed while aligning CNT perpendicular to the slide glass.
3) The second slide glass was placed on the bulk aligned single-walled CNT aggregate while covering over the first slide glass.
4) The second glass was pushed while sliding to give pressures perpendicular to the two substrates sandwiching CNT and horizontal in the longitudinal direction of the substrate, whereby giving a compressive stress together with a shear stress to the bulk aligned single-walled CNT aggregate.
5) Two substrates sandwiching CNT were fixed with a clip.
6) The substrate was placed in a container containing water, and thereafter alcohol was supplied beneath the substrate using a pipette, whereby immersing it for about 20 minutes in a solvent mixture of water and alcohol was ensured.
7) During this step, bubbles emerged from CNT. After termination of the bubble emergence, the substrate was taken from the contained, and the substrate was placed on a warmed hot plate for about 1 hour for drying.
8) After drying, one of the slide glasses was removed gently.

As a result of the procedure described above, a highly densified aligned single-walled CNT aggregate whose CNTs were aligned in a longitudinal direction and which had a desired shape as shown in Fig. 57 was obtained. Such a bulk aligned single-walled CNT aggregate is shown to have an excellent processability.

[Processability verification 2: Dispersibility]

For verifying the shape processability (dispersibility) of the bulk aligned single-walled CNT aggregate produced in Example 4 or the powdered aligned single-walled CNT aggregate produced in Example 5 (density: 0.024 $g/cm^3$), 1 mg of the powdered aligned single-walled CNT aggregate is poured into 5 mL of DMF which is often used as the dispersion solvent for CNT, and dispersed for 10 minutes by using a homogenizer. Further, 5 mL of the solvent is added and dispersed for 10 minutes by the homogenizer. Fig. 58 shows the obtained liquid dispersion. It can be seen that the powdered aligned single-walled CNT aggregate of the invention is easily dispersed uniformly in the solvent, that is, the powdered aligned single-walled CNT aggregate at low density is excellent in the shape processability.

[Verification of non-dispersibility]

The powdered aligned single-walled CNT aggregate produced in Example 5 is subjected to a density growth treatment by utilizing, for example, a method as described in Journal of Nature Material, vol. 5 (2006), p 987 - 994. Specifically, 1 mg of a powdered aligned single-walled CNT aggregate is poured in 10 mL of an isopropanol solution, which is dried to increase the density. The tap weight density of the obtained powdered aligned single-walled CNT aggregate at high weight density is 0.22 $g/cm^3$. 1 mg of the powdered aligned single-walled CNT aggregate at high density is poured in 5 mL of DMF which is often used as the dispersion solvent for CNT and dispersed for 10 minutes by a homogenizer. Further, 5 mL of the solvent is added and dispersed for 10 minutes by the homogenizer. Fig. 59 shows the obtained liquid dispersion. It can be seen that the powdered aligned singte-watted CNT aggregate at high density is less dispersed in the solvent, that is, the powdered aligned single-walled CNT aggregate at high density is poor in the shape processability.

Claims

1. An aligned single-walled carbon nanotube aggregate comprising a base material, fine particles of catalyst with a number density of $1 \times 10^{10}$ to $5 \times 10^{13}$ N/cm$^2$ disposed on the base material, and a plurality of single-walled carbon nanotubes which are elongated from the fine particles of the catalyst to form an aggregate, in which the plurality of single-walled carbon nanotubes have a specific surface area of 600 m$^2$/g to 2600 m$^2$/g, and a weight density from 0.002 g/cm$^3$ to 0.2 g/cm$^3$, and the alignment degree is defined by at least one of the following conditions:

   (1) in a case where X-rays are incident from a first direction parallel to the longitudinal direction of the carbon nanotube and a second direction perpendicular to the first direction to measure the X-ray diffraction intensity (θ-2θ method), a θ angle and a reflection direction where the reflection intensity from the second direction is larger than the reflection intensity from the first direction are present, and a θ angle and a reflection direction where the reflection intensity from the first direction is larger than the reflection intensity from the second direction are present,
   (2) in a case where the X-ray refraction intensity is measured (Laue method) by 2-dimensional diffraction pattern images obtained by incidence of X-rays in the direction perpendicular to the longitudinal direction of the carbon nanotube, a diffraction peak pattern showing the presence of the anisotropy appears, and
   (3) Herman's orientation factor is greater than 0.1 and smaller than 1.

2. The aligned single-walled carbon nanotube aggregate according to claim 1, wherein the distribution maximum of the fine pore diameters of the single-walled carbon nanotube aggregate is 5 nm or more and 100 nm or less.

3. The aligned single-walled carbon nanotube aggregate according to claim 1 or 2, wherein the single-walled carbon nanotubes constituting the aligned single-walled carbon nanotube aggregate are provided adjacently to each other, and wherein the single-walled carbon nanotubes provided adjacently to each other have discrete outer diameters.

4. The aligned single-walled carbon nanotube aggregate according to any one of claims 1 to 3, wherein the average outer diameter of the single-walled carbon nanotubes constituting the aligned single-walled carbon nanotube aggregate is 1.5 nm or more and 4 nm or less, and wherein the full-width at half maximum representing the outer diameter distribution range is lager than 1 nm.

5. The aligned single-walled carbon nanotube aggregate according to any one of claims 1 to 4, wherein the carbon purity is 95% or higher.

6. The aligned single-walled carbon nanotube aggregate according to claim 1, wherein in the X-ray diffraction method employed above the diffraction intensities of the (CP) diffraction peak, (002) diffraction peaks attributable to the packing between single-walled carbon nanotubes and the diffraction intensities of (100), (110) peaks attributable to the hexagonal carbon ring structure that constitutes the single-walled carbon nanotube are different from each other in the diffraction peak intensity for the parallel and orthogonal incident directions.

7. The aligned single-walled carbon nanotube aggregate according to any one of claims 1 to 6, wherein the abovementioned base material is a granular base material or a linear base material.

8. The aligned single-walled carbon nanotube aggregate according to claim 7, wherein in the average diameter of the granular base material or linear base material is 10 micrometer or more and 1 cm or less.

9. A bulk aligned single-walled carbon nanotube aggregate having a specific surface area from 600 m$^2$/g to 2600 m$^2$/g and a weight density from 0.002 g/cm$^3$ to 0.2 g/cm$^3$, in which the alignment degree is defined by at least one of the following conditions.

   (1) in a case where X-rays are incident from a first direction parallel to the longitudinal direction of the carbon nanotube and a second direction perpendicular to the first direction to measure the X-ray diffraction intensity (0-2θ method), a θ angle and a reflection direction where the reflection intensity from the second direction is larger than the reflection intensity from the first direction are present, and a θ angle and a reflection direction where the reflection intensity from the first direction is larger than the reflection intensity from the second direction are present,
   (2) in a case where the X-ray refraction intensity is measured (Laue method) by 2-dimensional diffraction pattern images obtained by incidence of X-rays in the direction perpendicular to the longitudinal direction of the carbon nanotube, a diffraction peak pattern showing the presence of the anisotropy appears,

(3) in a case where the Herman's orientation factor is greater than 0.1 and smaller than 1.

10. The bulk aligned single-walled carbon nanotube aggregate according to Claim 9 wherein the distribution maximum of the fine pore diameters of the single-walled carbon nanotube aggregate is 5 nm or more and 100 nm or less.

11. The bulk aligned single-walled carbon nanotube aggregate according to claim 9 or 10, wherein the single-walled carbon nanotubes constituting the aligned single-walled carbon nanotube aggregate are provided adjacently to each other, and wherein the single-walled carbon nanotubes provided adjacently to each other have discrete outer diameters.

12. The bulk aligned single-walled carbon nanotube aggregate according to any one of claims 9 to 11, wherein the average outer diameter of the single-walled carbon nanotubes constituting the aligned single-walled carbon nanotube aggregate is 1.5 nm or more and 4 nm or less, and wherein the full-width at half maximum representing the outer diameter distribution range is lager than 1 nm.

13. The bulk aligned single-walled carbon nanotube aggregate according to any one of claims 9 to 12, wherein the carbon purity is 95% or higher.

14. The bulk aligned single-walled carbon nanotube aggregate according to claim 9, wherein in the X-ray diffraction method employed above the diffraction intensities of the (CP) diffraction peak, (002) diffraction peaks attributable to the packing between single-walled carbon nanotubes and the diffraction intensities of (100), (110) peaks attributable to the hexagonal carbon ring structure that constitutes the single-walled carbon nanotube are different from each other in the diffraction peak intensity for the parallel and orthogonal incident directions.

15. A powdered aligned single-walled carbon nanotube aggregate having a specific surface area from 600 $m^2$/g to 2600 $m^2$/g, and a weight density from 0.0005 $g/cm^3$ to 0.16 $g/cm^3$, in which the alignment degree is defined by a value of Herman's orientation factor that is greater than 0.1 and smaller than 1 when calculated based on the intensity profile obtained from images obtained by fast Fourier transformation of scanning electron microscopic images or atomic force microscopic images.

16. The powdered aligned single-walled carbon nanotube aggregate according to claim 15, wherein the distribution maximum of the fine pore diameters of the single-walled carbon nanotube aggregate is 5 nm or more and 100 nm or less.

17. The powdered aligned single-walled carbon nanotube aggregate according to claim 15 or 16, wherein the single-walled carbon nanotubes constituting the aligned single-walled carbon nanotube aggregate are provided adjacently to each other, and wherein the single-walled carbon nanotubes provided adjacently to each other have discrete outer diameters.

18. The powdered aligned single-walled carbon nanotube aggregate according to any one of claims 15 to 17, wherein the average outer diameter of the single-walled carbon nanotubes constituting the aligned single-walled carbon nanotube aggregate is 1,5 nm or more and 4 nm or less, and wherein the full-width at half maximum representing the outer diameter distribution range is lager than 1 nm.

19. The powdered aligned single-walled carbon nanotube aggregate according to any one of claims 15 to 18, wherein the carbon purity is 95% or higher.

20. A method for producing an aligned single-walled carbon nanotube aggregate by growing an aligned single-walled carbon nanotube aggregate on a base material having fine particles of a catalyst on the surface, the method comprising;

a formation step of bringing a reducing gas into contact with the catalyst particles and heating at least one of the catalyst particles and the reducing gas, and

a growth step of bringing a source gas containing carbon and not containing oxygen and a catalyst activating material containing oxygen into contact with the catalyst particles, and heating at least one of the catalyst particles, the source gas and the catalyst activating material, thereby growing the aligned single-walled carbon nanotube aggregate.

**21.** The method for producing an aligned single-walled carbon nanotube aggregate according to claim 20, wherein one or more of water, carbon dioxide, acetone, tetrahydrofuran and ethanol is employed as a catalyst activating material.

F I G. 1

F I G. 2

F I G. 3

F I G. 4

FIG. 5

FIG. 6

ADSORPTION/DESORPTION ISOTHERMAL CURVE
FOR LIQUID NITROGEN

FIG. 7

$\alpha_S$-PLOT

FIG. 8

FIG. 9

FIG. 10

F I G. 1 1

50 nm

FIG. 12

(a)

(b)

F I G. 1 3

CARBON NANOTUBE

SUBSTRATE

FINE CATALYST PARTICLE

F I G.　1 4

CENTRAL DISTRIBUTION OF HiPco
CENTRAL DISTRIBUTION

F I G . 1 5

SIZE OF CARBON NANOTUBE (nm)

FIG. 16

SIZE OF CARBON NANOTUBE (nm)

F I G. 1 7

SIZE OF CARBON NANOTUBE (nm)

FIG. 18

RAMAN SHIFT (KAYZER)

RAMAN SHIFT (KAYZER)

FIG. 19

FIG. 20

F I G. 2 1

(a)

CNT ALIGNMENT
DIRECTION

Θ

2Θ

Θ

ALIGNED CNT
STRUCTURE

DETECTOR

X-RAY SOURCE

SAMPLE STAGE

(b)

X-RAY SOURCE

Θ
Φ=0
2Θ

Φ

DETECTOR IS FIXED
AT 2Θ

X-RAY DETECTOR

SAMPLE IS ROTATED FROM ANGLE Θ(Φ=0) WHEN
DIFFRACTION INTENSITY PROFILE IS DETERMINED

EP 2 383 225 A1

(CP)

PARALLEL
INCIDENCE

BLACK LINE:
PARALLEL INCIDENCE
GRAY LINE:
PERPENDICULAR INCIDENCE

(002)      (100)                    (110)

PERPENDICULAR
INCIDENCE

1      5      5      15      25      35      45      55      65      75      85

PERIODICAL STRUCTURE IS MEASURED
BY PACKING BETWEEN CNT

STRUCTURAL PERIODICITY OF HEXAGONAL
CARBON RING CONSTITUTING CNT IS MEASURED

F I G. 2 3

(a) PARALLEL INCIDENCE — NO CNT STRUCTURE; 2-θ (degrees)

(b) PERPENDICULAR INCIDENCE; Intensity; 2-θ (degrees)

F I G. 2 4

F I G. 2 5

DIFFRACTION
PATTERN IMAGE

ALIGNMENT
DIRECTION

0.5 mm COLLIMATOR
(0.5 mm DIAMETER: PINHOLE)

$\theta$

$2\theta$

CCD

ROTATION

X-RAY SOURCE

ENLARGED
VIEW

ALIGNMENT
DIRECTION

ROTARY
SAMPLE
STAGE

FIG. 26

F I G. 2 7

F I G. 2 8

FIG. 29

FIG. 30

F I G. 3 1

ADDITION AMOUNT OF
FINE CATALYST PARTICLE (ml)

FIG. 32

DENSITY = 0.0362 g/cm$^3$

FIG. 33

FIG. 34

FIG. 35

```
┌─────────────────────────────────┐
│   SUBSTRATE TRANSPORTATION      │ ───→ S1
└─────────────────────────────────┘
                │
                ▼
┌─────────────────────────────────┐
│        FORMATION STEP           │ ───→ S2
└─────────────────────────────────┘
                │
                ▼
┌─────────────────────────────────┐
│         GROWTH  STEP            │ ───→ S3
└─────────────────────────────────┘
                │
                ▼
┌─────────────────────────────────┐
│        FLUSHING STEP            │ ───→ S4
└─────────────────────────────────┘
                │
                ▼
┌─────────────────────────────────┐
│        COOLING STEP             │ ───→ S5
└─────────────────────────────────┘
```

FIG. 36

FIG. 37

SYNTHESIS OF CARBON NANOTUBE

SUBSTRATE IS TRANSPORTED INTO HEATED SYNTHESIS FURNACE (S1)

FURNACE TEMPERATURE IS CONSTANT AT 750°C

FORMATION STEP (S2) → GROWTH STEP (S3) → FLUSHING STEP (S4)

TAKING OUT OF SUBSTRATE FROM HEATED SYNTHESIS FURNACE (S5)

PREPARATION OF CATALYST SUBSTRATE

Al₂O₃ SPUTTERING → Fe SPUTTERING

F I G. 3 8

| | Formation (S2) | Growth Step (S3) | Flush |
|---|---|---|---|
| Time (min) | 6 | 5 | 2 |
| Pressure (Pa) | $1.02 \times 10^5$ | $1.02 \times 10^5$ | $1.02 \times 10^5$ |
| Furnace Temp. (°C) | 750 | 750 | 750 |
| Total flow (sccm) | 1000 | 1000 | 1000 |
| He (sccm) | 100 | 850 | 1000 |
| $H_2$ (sccm) | 900 | 0 | 0 |
| $H_2O$ (sccm) | 0 | 50 | 0 |
| $C_2H_4$ (sccm) | 0 | 100 | 0 |

F I G. 3 9

FIG. 40

F I G. 4 1

F I G. 4 2

EP 2 383 225 A1

PREPARATION OF CATALYST SUBSTRATE

SUBSTRATE USED: Si SUBSTRATE
(THERMAL OXIDATION TREATMENT: 500 nm)

FILM FORMING APPARATUS: RF SPUTTERING
APPARATUS

$Al_2O_3$ SPUTTERING

Fe SPUTTERING

SYNTHESIS OF CARBON NANOTUBE

SUBSTRATE IS TRANSPORTED INTO SYNTHESIS FURNACE (S1)

FORMATION STEP (S2)

WATER CONTENT ADDITION FORMATION STEP (S2)

GROWTH STEP (S3)

FLUSH STEP (S4)

RECOVERY (S5)

TEMPERATURE ELEVATION

CONSTANT TEMPERATURE

COOLING

FIG. 44

| | Formation (S2) | | Growth Step (S3) | Flush & Cooling |
|---|---|---|---|---|
| Time (min) | 15 | 5 | 10 | 6 |
| Pressure (Pa) | $1.02 \times 10^5$ | $1.02 \times 10^5$ | $1.02 \times 10^5$ | $1.02 \times 10^5$ |
| Temp. (°C) | TEMPERATURE ELEVATED FROM ROOM TEMPERATURE AT 50°C/min | 750 | 750 | TEMPERATURE LOWERED TO ROOM TEMPERATURE |
| Total flow (sccm) | 1000 | 1000 | 1000 | 1000 |
| He (sccm) | 600 | 510 | 850 | 1000 |
| $H_2$ (sccm) | 400 (H1) | 400 (H2) | 0 | 0 |
| $H_2O$ (sccm) | 0 | 50 | 50 | 0 |
| $C_2H_4$ (sccm) | 0 | 0 | 100 | 0 |

FIG. 45

FIG. 46

FIG. 47

FIG. 48

F I G. 4 9

F I G. 5 0

FIG. 51

F I G. 5 2

F I G. 5 3

F I G. 5 4

PARALLEL INCIDENCE

PERPENDICULAR INCIDENCE

GAP BETWEEN HEXAGONAL CARBON
RING SHEETs OF DIFFERENT CNT
("kissing points")

F I G. 5 5

SUCTION TUBE

SUCTION TUBE MOVING DIRECTION

SUBSTRATE

FILTER

RECOVERY DEVICE

FIG. 56

FIG. 57

F I G.  5 8

<div align="center">

**INTERNATIONAL SEARCH REPORT**

</div>

| | International application No. |
|---|---|
| | PCT/JP2009/071818 |

**A. CLASSIFICATION OF SUBJECT MATTER**
*C01B31/02*(2006.01)i, *B01J23/745*(2006.01)i, *B01J37/02*(2006.01)i, *B01J37/34* (2006.01)i

According to International Patent Classification (IPC) or to both national classification and IPC

**B. FIELDS SEARCHED**

Minimum documentation searched (classification system followed by classification symbols)
C01B31/00-31/36

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2008/096699 A1 (National Institute of Advanced Industrial Science and Technology), 14 August 2008 (14.08.2008), paragraphs [0028] to [0030], [0057], [0058] (Family: none) | 1-21<br>20,21 |
| X<br>Y | JP 2008-230957 A (National Institute of Advanced Industrial Science and Technology), 02 October 2008 (02.10.2008), paragraphs [0043], [0044], [0054] to [0058] (Family: none) | 1-21<br>20,21 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 30 March, 2010 (30.03.10) | 13 April, 2010 (13.04.10) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2009/071818

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | WO 2006/011655 A1  (National Institute of Advanced Industrial Science and Technology), 02 February 2006 (02.02.2006), page 27, lines 5 to 9; page 29, lines 11 to 13; page 31, lines 10 to 14 & US 2008/0318049 A1    & EP 1787955 A1 | 1-19<br>20,21 |
| P,X | WO 2009/128349 A1  (Nippon Zeon Co., Ltd.), 22 October 2009 (22.10.2009), paragraphs [0117] to [0120] (Family: none) | 1-21 |
| P,A | WO 2009/102077 A1  (The University of Tokyo), 20 August 2009 (20.08.2009), page 29, lines 11 to 18 & WO 2009/101985 A1 | 1-21 |

Form PCT/ISA/210 (continuation of second sheet) (July 2009)

| INTERNATIONAL SEARCH REPORT | International application No. |
|---|---|
| | PCT/JP2009/071818 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:

```
  The invention in claim 1 cannot be considered to be novel and does not have
a special technical feature.  Therefore, the inventions in claims 1 - 21 do
not satisfy the requirement of unity of invention.  Meanwhile, the inventions
in claims 1 - 8 are relevant to main invention.
```

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003171108 A
- WO 2006011655 A
- JP 2008051321 A

**Non-patent literature cited in the description**

- *Nano Letters,* 2003, vol. 3, 647
- *Nano Letter,* 2002, vol. 2, 385-388
- **Kenji Hata et al.** Water-Assisted Highly Efficient Synthesis of Impurity-Free Single-Walled Carbon Nanotubes. *SCIENCE,* 19 November 2004, vol. 306, 1362-1364
- *Journal of Carbon,* 2007, vol. 45, 722-726
- *The Journal of Carbon,* 2003, vol. 41, 1273-1280
- *The Journal of Nano Letters,* 2002, vol. 2, 385-388
- *Journal of J. Phys. Chem. B,* 2006, vol. 110, 5849-5853
- *Journal of Chem. Mater.,* 2001, vol. 13, 1008
- *Nature Material,* 2006, vol. 5, 987-994
- *Journal of J. Amer. Chem. Soc.,* 1951, vol. 73, 373
- *Journal of Nature Material,* 2006, vol. 5, 987-994